# EUROPEAN PATENT SPECIFICATION

(11) **EP 4 026 704 B1**
(45) Date of publication and mention of the grant of the patent: **04.09.2024**
(21) Application number: 20860731.7
(22) Date of filing: 26.08.2020
(51) Int. Cl.: B60C 1/00, C08F 36/04, C08L 9/00, C08K 3/013, C08C 19/22, C08C 19/25, C08F 236/06, C08L 15/00

(54) **CONJUGATED DIENE POLYMER, METHOD FOR PRODUCING CONJUGATED DIENE POLYMER, CONJUGATED DIENE POLYMER COMPOSITION, AND RUBBER COMPOSITION**
KONJUGIERTES DIENPOLYMER, VERFAHREN ZUR HERSTELLUNG EINES KONJUGIERTEN DIENPOLYMERS, KONJUGIERTE DIENPOLYMERZUSAMMENSETZUNG UND KAUTSCHUKZUSAMMENSETZUNG
POLYMÈRE DE DIÈNE CONJUGUÉ, PROCÉDÉ DE PRODUCTION DE POLYMÈRE DE DIÈNE CONJUGUÉ, COMPOSITION DE POLYMÈRE DE DIÈNE CONJUGUÉ ET COMPOSITION DE CAOUTCHOUC

(30) Priority: 05.09.2019 JP 2019162042
(43) Date of publication of application: 13.07.2022
(73) Proprietor: Asahi Kasei Kabushiki Kaisha, Tokyo 1000006 (JP)
(72) Inventor: SEKIKAWA, Shinichi, Tokyo 100-0006 (JP); HISAMURA, Kenta, Tokyo 100-0006 (JP); TOBO, Shuri, Tokyo 100-0006 (JP); SUMITANI, Shogo, Tokyo 100-0006 (JP); KYO, Miki, Tokyo 100-0006 (JP)
(74) Representative: Strehl Schübel-Hopf & Partner
(86) International application number: PCT/JP2020/032175
(87) International publication number: WO 2021/044921

(56) References cited:
- EP-A1- 2 559 709
- EP-A1- 3 862 371
- EP-A1- 4 011 642
- WO-A1-2016/133202
- WO-A1-2018/034194
- WO-A1-2018/034195
- WO-A1-2018/164053
- CN-A- 105 837 751
- JP-A- 2011 089 086
- US-A1- 2005 182 191
- US-A1- 2006 142 500
- DATABASE WPI Week 201079, Derwent World Patents Index; AN 2010-P22051, XP002807599

## Description

### Technical Field

The present invention relates to a conjugated diene-based polymer, a production method for a conjugated diene-based polymer, a conjugated diene-based polymer composition, and a rubber composition.

### Background Art

There has been an increasing demand for reduction of fuel consumption in vehicles, and improvement of rubber materials used in a vehicle tire, particularly, in a tire tread coming in contact with a road surface is required.

In recent years, owing to increasing requirements for fuel economy regulations for vehicles, there is a trend toward weight reduction of vehicles by using resins for members, and a tire is also required of thickness reduction of a tire member from the viewpoint of weight reduction.

For weight reduction of a tire, it is necessary to reduce the thickness of a tread portion having a high material ratio and coming in contact with a road surface, and there is a demand for a rubber material more excellent in abrasion resistance.

Besides, in order to reduce energy loss caused by tires during driving, a material having low rolling resistance, namely, having a low hysteresis loss property, is demanded as a rubber material used in a tire tread.

On the other hand, from the viewpoint of safety, excellent steering stability and wet skid resistance, and practically sufficient fracture strength are required.

An example of a rubber material meeting the aforementioned requirements includes a rubber composition containing a rubber-like polymer and a reinforcing filler such as carbon black or silica.

It is already known that balance between a low hysteresis loss property and wet skid resistance is improved when a rubber composition containing silica is used. Besides, an attempt has been made to reduce a hysteresis loss and to improve abrasion resistance and fracture strength by improving dispersibility of silica in a rubber composition through introduction of a functional group having affinity or reactivity with silica into a molecular end of a rubber-like polymer having high mobility, and furthermore, by reducing the mobility of the molecular end of the rubber-like polymer through a bond to a silica particle.

For example, Patent Documents 1 to 3 propose a composition of a modified conjugated diene-based polymer obtained by reacting an alkoxysilane having an amino group with a conjugated diene-based polymer active end, and silica.

Besides, Patent Document 4 proposes a modified conjugated diene-based polymer obtained by a coupling reaction of a polymer active end and a polyfunctional silane compound.

### List of Prior Art Documents

### Patent Document

Patent Document 1: Japanese Patent Laid-Open No. 2005-290355
Patent Document 2: Japanese Patent Laid-Open No. 11-189616
Patent Document 3: Japanese Patent Laid-Open No. 2003-171418
Patent Document 4: International Publication No. WO07/114203

EP 3862371 A1, published after the priority date of the present application, discloses that a conjugated diene-based polymer having an absolute molecular weight measured by viscosity detector-equipped GPC-light scattering measurement falling in a prescribed range, and having a branch number (Bn) measured by the viscosity detector-equipped GPC-light scattering measurement falling in a specific range is extremely excellent in processability obtained when used for obtaining a vulcanizate, and when in the form of a vulcanizate, is excellent in balance between a low hysteresis loss property and wet skid resistance and in abrasion resistance by coupling the active end of the conjugated diene polymer with a main chain branch structure derived from the vinyl-based monomer containing an alkoxysilyl group or a halosilyl group.

EP 4011642 A1, published after the priority date of the present application, discloses a conjugated diene-based copolymer having a branch number (Bn) measured by viscosity detector-equipped GPC-light scattering measurement, and a change (ΔT) of an oxidation onset temperature caused through application of a thermal load both respectively falling in specific ranges, and comprising an aromatic vinyl compound monomer unit. This conjugated diene-based polymer has extremely excellent in processability and heat resistance stability in obtaining a vulcanizate therefrom by containing an aromatic vinyl compound monomer unit coupled with the active end of the conjugated diene polymer with a main chain branch structure derived from the vinyl-based monomer containing an alkoxysilyl group or a halosilyl group.

EP 2559709 A1 discloses a method for producing a modified conjugated diene-based polymer, comprising: a polymerization step of polymerizing a conjugated diene compound, copolymerizing conjugated diene compounds, or copolymerizing a conjugated diene compound with an aromatic vinyl compound using an alkali metal compound or an alkaline earth metal compound as a polymerization initiator to obtain a conjugated diene-based polymer having an active end, and a modifying step of reacting a nitrogen-containing alkoxysilane compound having a specific structure with the active end of the conjugated diene-based copolymer. This modified conjugated diene-based polymer has a good balance between the hysteresis loss properties and the wet skid resistance when the modified conjugated diene-based polymer is formed into a vulcanized product.

JP2010-261027A discloses a random copolymer of a conjugated diene-aromatic vinyl copolymer, wherein the amount of aromatic vinyl bonds in the copolymer is within a specific range, and the amount of vinyl bonds in all the conjugated diene units is specified, the weight average molecular weight of the conjugated diene-aromatic vinyl copolymer and the ratio of the weight average molecular weight to the number average molecular weight are within a specific range, and the relationship between the Mooney viscosity measured at 120°C and the Mooney relaxation rate satisfies a specific relational formula, and is coupled with a compound containing a glycidylamino group. This random copolymer has good processability in obtaining a vulcanizate therefrom, and a good balance between the hysteresis loss properties and the wet skid resistance when the modified conjugated diene-based polymer is formed into a vulcanized product. WO2018/034194A1 discloses a modified conjugated diene-based polymer coupled with a polyfunctional alkoxysilane compound containing a nitrogen atom, wherein a ratio of the coupling polymer, obtained by gel permeation chromatography (GPC), is a specific range, and a modification ratio obtained by adsorption GPC is a specific range, when a peak top molecular weight, obtained by the GPC, of the coupling polymer of the modified conjugated diene-based polymer is represented by Mp1 and a peak top molecular weight of a non-coupling polymer is represented by Mp2, (Mp1/Mp2) is a specific range, and a shrinking factor (g') is a specific range. This modified conjugated diene-based polymer excellent in processability obtained when used for obtaining a vulcanizate, and excellent in low hysteresis loss property obtained when in the form of a vulcanizate.

JP2011-089086A discloses a modified copolymer wherein the modified copolymer is obtained by modifying the end of a copolymer of styrene and/or 1,3-butadiene and alkoxysilylstyrene having a specific structure with a modifier having a functional group containing at least one atom selected from nitrogen, oxygen and silicon, and the modified copolymer has a weight average molecular weight within a specific range. This modified copolymer has an excellent balance of fuel efficiency and wet grip performance.

CN105837751A discloses a block copolymer wherein the block copolymer has a 1,1-diphenylethylene derivative block structure at the end of the polymer, and is a copolymer with butadiene, styrene, and a 1,1-diphenylethylene derivative, and the 1,1-diphenylethylene derivative is a compound in which an alkoxysilyl group is bonded to 1,1-diphenylethylene, the number average molecular weight of the copolymer is within a specific range, and the amount of bound styrene and the content of the 1.1-diphenylethylene derivative in the copolymer are within a specific range. This block copolymer increases the dispersibility of carbon black and silica, reduces friction inside the tire, and suppresses heat generation.

US2005/182191A1 discloses a multi-branched block copolymer having a specific block structure wherein the block copolymer is obtained by reacting a vinyl aromatic monomer, a conjugated diene monomer, and a styrene derivative as a condensing agent, and the vinyl aromatic monomer is at least one vinyl aromatic monomer selected from the group consisting of styrene, α-methylstyrene, o-methylstyrene, p-methylstyrene, p-tert-butylstyrene, and the styrene derivative contains a silicon atom or a tin atom bonded to an alkyl group or an aryl group and a halogen. The multi-branched block copolymer has enhanced tensile strength and elongation and low solution viscosity compared to radial type block copolymer.

### Summary of Invention

### Problems to be Solved by Invention

Silica has, however, a disadvantage of being inferior in dispersibility in a composition to carbon black because it has a hydrophilic surface and hence has low affinity with a conjugated diene-based polymer while carbon black has a hydrophobic surface. Therefore, a composition containing silica needs to additionally contain a silane modifier or the like to impart a bond between the silica and the conjugated diene-based polymer and improve the dispersibility in the composition.

Besides, when a functional group having high reactivity with silica is introduced into a molecular end of a conjugated diene-based polymer, processability tends to be degraded, for example, it becomes difficult to knead because a reaction with a silica particle proceeds during kneading process to increase the viscosity of a resultant composition, or surface coarseness or sheet breakage is easily caused when formed into a sheet after the kneading.

In addition, when such a composition is formed into a vulcanizate, in particular, formed into a vulcanizate containing an inorganic filler such as silica, abrasion resistance and balance between a low hysteresis loss property and wet skid resistance are not sufficient.

Therefore, an object of the present invention is to provide a conjugated diene-based polymer that is extremely excellent in processability obtained in forming a vulcanizate therefrom, and is excellent in abrasion resistance, steering stability and fracture strength obtained in the form of a vulcanizate.

### Means for Solving Problems

The present inventors has made earnest studies to solve the above-described problems of the related arts, and as a result, it has been found that a conjugated diene-based polymer having a Mooney viscosity and Mooney stress relaxation measured at 100°C within prescribed ranges, and having a branch number (Bn) within a specific range is extremely excellent in processability obtained in forming a vulcanizate therefrom, and is excellent in abrasion resistance, steering stability and fracture strength obtained in the form of a vulcanizate, and thus, the present invention has been accomplished.

Specifically, the present invention is set out in the appended claims.

### Advantages of Invention

According to the present invention, a conjugated diene-based polymer that is extremely excellent in processability obtained in forming a vulcanizate therefrom, is excellent in abrasion resistance and steering stability obtained in the form of a vulcanizate, and has practically sufficient fracture strength can be obtained.

### Brief Description of Drawing

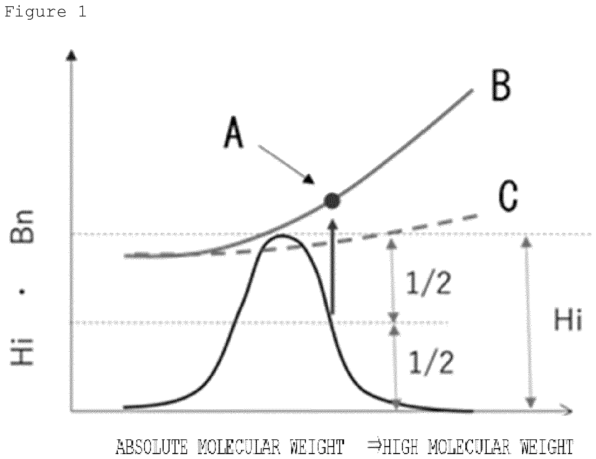

[Figure 1] Figure 1 is a conceptual diagram illustrating an example of the relationship between an absolute molecular weight curve measured by viscosity detector-equipped GPC-light scattering measurement and a branch number distribution.

### Mode for Carrying Out Invention

Hereinafter, the mode for carrying out the present invention (hereinafter referred to as the "present embodiment") will be described in detail.

It is noted that the following present embodiment is merely an example for describing the present invention and the present invention is not limited to the following description but may be variously modified within the scope of the claims.

### [Conjugated Diene-based Polymer]

A conjugated diene-based polymer of the present embodiment has a Mooney viscosity measured at 100°C of 40 or more and 170 or less, Mooney stress relaxation measured at 100°C of 0.28 or less, and a branch number (hereinafter also referred to as "Bn") measured by viscosity detector-equipped GPC-light scattering measurement of 8 or more.

The conjugated diene-based polymer specified in the Mooney viscosity and the Mooney stress relaxation measured at 100°C and the branch number (Bn) as described above is extremely excellent in processability obtained in forming a vulcanizate therefrom, and is excellent in abrasion resistance and steering stability obtained in the form of a vulcanizate, and has practically sufficient fracture strength.

In the conjugated diene-based polymer of the present embodiment, with the Mooney viscosity and the Mooney stress relaxation measured at 100°C and the branch number (Bn) specified, when an amount of vinyl bond in a conjugated diene bond unit and an amount of aromatic vinyl compound are arbitrary adjusted, a glass transition temperature (hereinafter also referred to as "Tg") of the conjugated diene-based polymer can be arbitrary adjusted while the state of being extremely excellent in processability obtained in forming a vulcanizate therefrom, being excellent in abrasion resistance and steering stability obtained in the form of a vulcanizate, and having practically sufficient fracture strength is retained.

For example, when the amount of vinyl bond in a conjugated diene bond unit and the amount of an aromatic vinyl compound are set to be low, the Tg of the conjugated diene-based polymer is lowered to improve abrasion resistance and fracture strength obtained in the form of a vulcanizate, resulting in a tendency that a rubber composition more excellent in a hysteresis loss property can be obtained.

Alternatively, when the amount of vinyl bond in a conjugated diene bond unit and the amount of an aromatic vinyl compound are set to be high, the Tg of the conjugated diene-based polymer is increased to improve processability obtained in forming a vulcanizate therefrom, resulting in a tendency that a rubber composition more excellent in wet skid resistance can be obtained.

### (Mooney Viscosity)

The conjugated diene-based polymer of the present embodiment has a structure specified in the branch number (Bn) as described below. In general, a polymer having a branch structure tends to have a smaller molecule when compared with a straight-chain polymer having the same molecular weight. Therefore, in employing a molecular weight in terms of polystyrene obtained by gel permeation chromatography (hereinafter also referred to as "GPC")., which is relative comparison with a standard polystyrene sample for screening a polymer in accordance with the size of a molecule, the molecular weight of a polymer having a branch structure tends to be underestimated.

As for an absolute molecular weight measured by viscosity detector-equipped GPC-light scattering measurement, a molecular weight (absolute molecular weight) is measured by directly observing the size of a molecule by a light scattering method, as compared with a molecular weight in terms of polystyrene obtained by gel permeation chromatography (GPC), and hence is not affected by a structure of the polymer or interaction with a column filler. Therefore, although there is a tendency that the molecular weight can be accurately measured without being affected by a polymer structure such as a branch structure of the conjugated diene-based polymer, the molecular weight is easily affected by a detection method employed by a light scattering detector, and hence is effective for relative comparison under specific measurement conditions but is difficult to be used for specifying a true structure of the conjugated diene-based polymer.

On the other hand, the Mooney viscosity can be an index indicating comprehensive features of the conjugated diene-based polymer including information on the molecular weight, the molecular weight distribution and the branch number of the conjugated diene-based polymer, and a softener content therein. A method for measuring the Mooney viscosity is defined in ISO 289, an instrumental error is small, and hence the Mooney viscosity is extremely effective in controlling performances of the conjugated diene-based polymer.

As described above, a viscosity is grasped as an index substituted for a molecular weight in general, but the molecular weight is difficult to be accurately grasped from the viscosity in prescribed cases, and therefore, the present inventors set the Mooney viscosity as one of requirements of the conjugated diene-based polymer of the present embodiment. More specifically, in the conjugated diene-based polymer of the present embodiment, a requirement is that the Mooney viscosity (hereinafter also referred to as "ML") measured at 100°C is 40 or more and 170 or less. In a region close to the lower limit, however, it is usually difficult to obtain the Mooney stress relaxation (hereinafter also referred to as "MSR") measured at 100°C of 0.35 or less even by controlling the ML simply through reduction of the molecular weight, or controlling the ML through addition of a softener (such as an oil). When the branch number (Bn) is set to 8 or more (by adjusting the type and an amount of a branching agent to be added, and adjusting the type and an amount of a coupling agent to be added), MSR of 0.35 or less can be easily obtained.

Specifically, in order to obtain a conjugated diene-based polymer having desired performances, only control of a molecular weight or control of a Mooney viscosity was insufficient, and therefore the following was found: From the viewpoint of increasing an elastic modulus of a composition, a requirement of increase of a branch number (by adjusting the type and the amount of a branching agent to be added and adjusting the type and the amount of a coupling agent to be added) is employed in combination, and steering stability can be thus improved by increasing the elastic modulus (rigidity) of a vulcanizate without impairing processability of a composition.

In the conjugated diene-based polymer of the present embodiment, from the viewpoints of productivity of the conjugated diene-based polymer, processability in obtaining a composition by compounding a filler and the like therein, abrasion resistance, steering stability and fracture strength obtained in a vulcanizate formed from the composition, the Mooney stress relaxation described below and the branch number (Bn) are within specific ranges, and the Mooney viscosity measured at 100°C is preferably 40 or more and 170 or less, more preferably 50 or more and 150 or less, and further preferably 55 or more and 130 or less.

When the Mooney viscosity measured at 100°C is 40 or more, abrasion resistance and fracture strength obtained in the form of a vulcanizate tend to be improved, and when the Mooney viscosity measured at 100°C is 170 or less, a problem otherwise caused in production of the conjugated diene-based polymer is suppressed, and processability in forming a composition by compounding a filler and the like therein becomes good.

In order to adjust the Mooney viscosity to fall in the above-described range, the conjugated diene-based polymer of the present embodiment may be a conjugated diene-based polymer composition containing, based on 100 parts by mass of the conjugated diene-based polymer, 1 part by mass or more and 60 parts by mass or less of a rubber softener described below. When a polymer is produced by continuous polymerization, the polymer is generally extended with an oil or the like, but the Mooney viscosity is lowered through the extension to increase Mooney stress relaxation. The present inventors have paid attention to that processability and the like of a polymer can be appropriately controlled by specifying not a state of the simple polymer but a state finished by the extension, and therefore, it has been presumed that when the polymer is finished by adding a softener, the Mooney viscosity should be specified with the softener contained, and hence the Mooney viscosity is defined as described above.

A Mooney viscosity is measured by setting a sample, which is obtained by forming a conjugated diene-based polymer into a plate shape with a pressing press, in an apparatus, preheating the sample at 100°C for 1 minute, rotating a rotor at 2 rpm, and measuring a torque 4 minutes after, and the thus measured value is defined as a Mooney viscosity (ML₍₁₊₄₎). More specifically, a Mooney viscosity can be measured by a method described in Examples below.

### (Mooney Stress Relaxation)

The conjugated diene-based polymer of the present embodiment has Mooney stress relaxation measured at 100°C (hereinafter simply referred to as the "Mooney stress relaxation" or "MSR") of 0.28 or less. Mooney stress relaxation is also affected, similarly to the Mooney viscosity, by the molecular weight, the molecular weight distribution and the branch number of the conjugated diene-based polymer, and a softener content therein, and can be an index indicating comprehensive features of the conjugated diene-based polymer.

The conjugated diene-based polymer of the present embodiment has a Mooney viscosity measured at 100°C falling in the specific range of 40 to 170, has a branch number (Bn) described below of 8 or more, and Mooney stress relaxation measured at 100°C of 0.28 or less.

In general, when a Mooney viscosity is lowered by reducing a molecular weight, reducing a branch number, or increasing an amount of a rubber softener to be added, Mooney stress relaxation tends to be increased, and hence it is difficult to obtain the Mooney stress relaxation specified in the present application.

Mooney stress relaxation is an index of entanglement of molecules in a conjugated diene-based polymer, lower Mooney stress relaxation means that entanglement of molecules is larger, and thus it is an index of a branch structure and a molecular weight.

For example, in comparison between conjugated diene-based polymers having the same Mooney viscosity, MSR is smaller as the number of branches in a conjugated diene-based polymer is larger, and hence, this MSR can be used as an index of a branch number.

In order to set Mooney stress relaxation to 0.35 or less in a conjugated diene-based polymer, a method for controlling a molecular structure in such a manner as to increase a weight average molecular weight, to increase a molecular weight distribution to increase a high molecular weight component, and to increase a branch number is effective. For example, in a conjugated diene-based polymer, when a Mooney viscosity is set to 40 or more and a branch number (Bn) described below is set to 8 or more, Mooney stress relaxation tends to be 0.35 or less. The Mooney stress relaxation can be controlled in accordance with an amount of a polymerization initiator to be added, the number of functional groups of a branching agent, an amount of the branching agent to be added, the number of functional groups of a coupling agent or a nitrogen atom-containing modifier, and an amount of the coupling agent or the nitrogen atom-containing modifier to be added.

For example, after increasing the molecular weight of a conjugated diene-based polymer before coupling by reducing the amount of a polymerization initiator to be added, a branching agent having a large number of functional groups is added, and coupling is performed with a coupling agent or a nitrogen atom-containing modifier having a large number of functional groups, and thus, a conjugated diene-based polymer having a Mooney viscosity of 40 or more, a branch number (Bn) of 8 or more, and Mooney stress relaxation of 0.35 or less tends to be obtained.

In the conjugated diene-based polymer of the present embodiment, the Mooney stress relaxation measured at 100°C is 0.28 or less. A lower limit of the Mooney stress relaxation is not especially limited, and may be equal to or lower than a detection limit, and is preferably 0.05 or more.

When the Mooney stress relaxation is 0.35 or less, in forming a composition by compounding a filler or the like therein, the filler such as silica is well incorporated into the conjugated diene-based polymer, and hence the composition tends to exhibit good processability. Besides, when the composition is formed into a vulcanizate, the vulcanizate tends to have a high elastic modulus in particular, and thus, a composition excellent in steering stability and excellent in abrasion resistance and fracture strength tends to be obtained.

The MSR can be measured with a Mooney viscometer as follows.

As a measurement temperature for the Mooney stress relaxation, a sample is first preheated at 100°C for 1 minute, then a rotor is rotated at 2 rpm, and a torque is measured 4 minutes after to measure a Mooney viscosity (ML₍₁₊₄₎). Thereafter, the rotation of the rotor is immediately stopped, and a torque of every 0.1 second in a period from 1.6 seconds to 5 seconds after the stoppage is recorded in terms of Mooney unit. The slope of a straight line in a double logarithmic plot of the torque and the time (sec) is obtained, and the absolute value thereof is defined as the Mooney stress relaxation (MSR).

More specifically, the Mooney stress relaxation can be measured by a method described in Examples below.

In order to set the Mooney stress relaxation to 0.35 or less, a molecular structure is controlled in such a manner as to increase the weight average molecular weight, to increase the molecular weight distribution to increase a high molecular weight component, and to increase the branch number.

For example, when the Mooney viscosity is set to 40 or more and the branch number (Bn) is set to 8 or more in a conjugated diene-based polymer, the Mooney stress relaxation tends to be 0.35 or less. In order to set the Mooney stress relaxation to 0.30 or less, for example, when the Mooney viscosity is set to 60 or more and the branch number (Bn) is set to 8 or more in a conjugated diene-based polymer, the Mooney stress relaxation tends to be 0.30 or less. Besides, the branch number can be controlled in accordance with, for example, the number of functional groups of a branching agent, the amount of the branching agent to be added, the number of functional groups of a coupling agent or a nitrogen atom-containing modifier, and the amount of the coupling agent or the nitrogen atom-containing modifier to be added.

### (Branch Number (Bn))

The conjugated diene-based polymer of the present embodiment has a branch number (Bn) measured by viscosity detector-equipped GPC-light scattering measurement (hereinafter simply referred to as the branch number (Bn)) of 8 or more from the viewpoints of processability, abrasion resistance and fracture strength.

The branch number (Bn) being 8 or more means that the conjugated diene-based polymer of the present embodiment has 8 or more polymer chains as side chains with respect to a substantially longest polymer main chain.

The branch number (Bn) of a conjugated diene-based polymer is defined, by using a contracting factor (g') measured by viscosity detector-equipped GPC-light scattering measurement, as g' = 6Bn/{(Bn + 1)(Bn + 2)}.

In general, a polymer having a branch tends to have a smaller molecule when compared with a straight-chain polymer having the same absolute molecular weight.

The contracting factor (g') is an index of a size ratio occupied by a molecule in a straight-chain polymer assumed to have the same absolute molecular weight. In other words, when the branch number of a polymer is increased, the contracting factor (g') tends to be reduced.

For the contracting factor, an intrinsic viscosity is used as an index of the size of a molecule in this embodiment, and a straight-chain polymer satisfies the relationship: intrinsic viscosity [η] = 10^{-3.883} M^{0.771}, wherein M represents an absolute molecular weight.

The contracting factor expresses, however, a decreasing ratio of the size of a molecule and does not accurately express a branch structure of the polymer.

Therefore, the branch number (Bn) of the conjugated diene-based polymer is calculated by using a value of the contracting factor (g') obtained at each absolute molecular weight of the conjugated diene-based polymer. The thus calculated "branch number (Bn)" accurately expresses the number of polymers directly or indirectly bonded to a longest main chain structure.

The calculated branch number (Bn) can be an index expressing a branch structure of a conjugated diene-based polymer. For example, in a general 4-branched star polymer (having 4 polymer chains connected to a center portion), two polymer chain arms are bonded to a longest highly branched main chain structure, and hence the branch number (Bn) is evaluated as 2.

In a general 8-branched star polymer, 6 polymer chain arms are bonded to a longest highly branched main chain structure, and the branch number (Bn) is evaluated as 6.

The conjugated diene-based polymer of the present embodiment has the branch number (Bn) of 8 or more, and such a case means that it is a modified conjugated diene-based polymer having, as a star polymer structure, branches similar to a 10-branched star polymer structure.

Here, a "branch" is formed by a direct or indirect bond of one polymer to another polymer. Besides, the "branch number (Bn)" corresponds to the number of polymers directly or indirectly bonded to a longest main chain structure.

When the branch number (Bn) is 8 or more, the conjugated diene-based polymer of the present embodiment is extremely excellent in processability obtained in forming a vulcanizate therefrom, and excellent in abrasion resistance and fracture strength obtained in the form of a vulcanizate.

In general, increase of an absolute molecular weight tends to deteriorate processability, and when the absolute molecular weight is increased in a linear polymer structure, viscosity obtained in forming a vulcanizate therefrom is largely increased to largely deteriorate processability.

Therefore, even when a large number of functional groups are introduced into the polymer to improve affinity and/or reactivity with silica to be blended as a filler, the silica cannot be sufficiently dispersed in the polymer in kneading process. As a result, the function of the introduced functional groups cannot be exhibited, and hence, an originally expected effect of improving a low hysteresis loss property and wet skid resistance by the introduction of the functional groups cannot be exhibited.

On the other hand, since the conjugated diene-based polymer of the present embodiment is specified to have a branch number (Bn) of 8 or more, the increase of the viscosity of a vulcanizate obtained therefrom due to increase of the absolute molecular weight is largely suppressed, and hence, for example, the polymer can be sufficiently mixed with silica or the like in the kneading process, so that the silica can be dispersed around the conjugated diene-based polymer. As a result, abrasion resistance and fracture strength can be improved by setting a molecular weight to be high in, for example, the conjugated diene-based polymer, and in addition, silica can be dispersed around the polymer by sufficient kneading so as to make functional groups to act and/or react, and thus, practically sufficient low hysteresis loss property and wet skid resistance can be attained.

The absolute molecular weight of the conjugated diene-based polymer can be measured by a method described in the examples below.

The branch number (Bn) of the conjugated diene-based polymer of the present embodiment is 8 or more, preferably 10 or more, more preferably 12 or more, and further preferably 15 or more.

A conjugated diene-based polymer having a branch number (Bn) falling in this range tends to be excellent in processability obtained when used for obtaining a vulcanizate.

The upper limit of the branch number (Bn) is not especially limited, and may be equal to or larger than a detection limit, and is preferably 84 or less, more preferably 80 or less, further preferably 64 or less, and still further preferably 57 or less.

Since the branch number (Bn) of the conjugated diene-based polymer of the present embodiment is 84 or less, abrasion resistance obtained in the form of a vulcanizate tends to be excellent.

The branch number of the conjugated diene-based polymer can be controlled to be 8 or more in accordance with a combination of an amount of a branching agent to be added and an amount of an end coupling agent to be added. Specifically, the branch number can be controlled in accordance with the number of functional groups of a branching agent, an amount of the branching agent to be added, timing of adding the branching agent, the number of functional groups of a coupling agent or a nitrogen atom-containing modifier, and an amount of the coupling agent or the nitrogen atom-containing modifier to be added. More specific description will be given in description of a production method for a conjugated diene-based polymer below.

### (Branch Number (Bn) of Polymer Region)

In a conjugated diene-based polymer of the present embodiment, based on a height Hi of a peak top in an absolute molecular weight curve obtained by viscosity detector-equipped GPC-light scattering measurement (whereas if the absolute molecular weight curve has a plurality of peak tops, a height of a peak top having a maximum absolute molecular weight), a polymer having a largest absolute molecular weight among at least two absolute molecular weights at a half height of Hi (1/2 Hi) on the absolute molecular weight curve (hereinafter also referred to as the "1/2 Hi polymer") has a branch number (Bn) of preferably 12 or more. In other words, that the 1/2 Hi polymer has a branch number (Bn) of 12 or more means that the conjugated diene-based polymer has a branch number distribution in which a polymer region has a branch number larger than the above-described averaged branch number (Bn) of the entire polymer chain. Incidentally, at least two 1/2 Hi are present in the absolute molecular weight curve respectively on a low molecular weight side and a high molecular weight side of the peak top, and the "polymer having a largest absolute molecular weight among at least two absolute molecular weights at a half height of Hi (1/2 Hi)" means a polymer having an absolute molecular weight at 1/2 Hi on the high molecular weight side if two 1/2 Hi are present respectively on the low molecular weight side and the high molecular weight side of the peak top. Besides, if there are a plurality of peak tops, and there are a plurality of 1/2 Hi on the high molecular weight side of the peak tops, it means a polymer having the largest absolute molecular weight at 1/2 Hi.

Figure 1 is a conceptual diagram illustrating an example of the relationship between an absolute molecular weight curve obtained by viscosity detector-equipped GPC-light scattering measurement and a branch number distribution.

In general, in a conjugated diene-based polymer having a simple star structure obtained through a coupling reaction of one end of an active end of the conjugated diene-based polymer with a coupling agent or a coupling agent having a nitrogen atom-containing group, as illustrated in Figure 1, although a branch number (Bn) of a region corresponding to a molecular weight higher than that of the 1/2 Hi polymer (hereinafter also referred to as the "high molecular weight region") is slightly changed through a condensation reaction caused by a part of residues of the coupling agent, the branch number (Bn) of the high molecular weight region tends to be basically constant dependently on the number of functional groups of the coupling agent.

In other words, although the branch number (Bn) of the high molecular weight region is increased to some extent through introduction of a star structure by coupling of a polymer end, a method for controlling the branch number (Bn) of the high molecular weight region through condensation of residues of the coupling agent is not preferably employed from the viewpoint of quality control of the resultant conjugated diene-based polymer because a condensation reaction is difficult to homogeneously proceed and the Mooney viscosity is varied even after completing the polymerization.

On the other hand, in the conjugated diene-based polymer of the present embodiment in which the 1/2 Hi polymer has a branch number (Bn) of 12 or more, the branch number is larger as the molecular weight is higher than the average of the entire polymer in the branch number distribution of a main chain branch polymer as illustrated in Figure 1.

The conjugated diene-based polymer of the present embodiment is preferably a conjugated diene-based polymer having a preferable branch number distribution in which the 1/2 Hi polymer has a branch number (Bn) of 12 or more, specifically, for example, a conjugated diene-based polymer having a structure in which each polymer chain included in a star structure is further branched. The conjugated diene-based polymer having such a preferable branch number distribution is not especially limited, and can be obtained by, for example, the following method. With a branch structure precedently introduced into a part of a polymer chain having an active end, a coupling reaction is performed with a coupling agent (preferably having a nitrogen atom-containing group), and thus, a conjugated diene-based polymer in which a branch number (Bn) of a high molecular weight region is larger than the number of functional groups of the coupling agent, and a branch number distribution is wider on a high molecular weight side of a peak top in a molecular weight distribution can be obtained.

A conjugated diene-based polymer in which a high molecular weight region has a large branch number (Bn) means, for example, that a ratio of a conjugated diene-based polymer having a branch structure in a main chain is high in the high molecular weight region, and that coupling efficiency with the coupling agent is high.

The branch number (Bn) of the 1/2 Hi polymer and the branch number (Bn) of the polymer of the high molecular weight region can be controlled in accordance with the number of functional groups of a branching agent, the amount of the branching agent to be added, the timing of adding the branching agent, the number of functional groups of a coupling agent or a nitrogen atom-containing modifier, and the amount of the coupling agent or the nitrogen atom-containing modifier to be added. In the conjugated diene-based polymer of the present embodiment, based on a height Hi of a peak top in an absolute molecular weight curve obtained by viscosity detector-equipped GPC-light scattering measurement (whereas if the absolute molecular weight curve has a plurality of peak tops, a height of a peak top having a maximum absolute molecular weight), a polymer having a largest absolute molecular weight among at least two absolute molecular weights at a half height of Hi (1/2 Hi) on the absolute molecular weight curve has a branch number (Bn) of preferably 12 or more, more preferably 15 or more, further preferably 18 or more, and particularly preferably 20 or more. In the conjugated diene-based polymer of the present embodiment, an upper limit of the branch number (Bn) of the 1/2 Hi polymer is not limited, and is, for example, 98 or less.

In the present embodiment, the branch number (Bn) of the 1/2 Hi polymer can be measured by a method described in Examples below.

A conjugated diene-based polymer having the preferable structure in which a branch number (Bn) is 8 or more, and the branch number (Bn) of the 1/2 Hi polymer is 12 or more in the branch number distribution tends to have low melt viscosity, and is extremely excellent in processability in obtaining a compound by adding silica or the like in kneading process performed under high temperature and high shear conditions. In general, a polymer having a large number of branches tends to be easily kneaded (have good processability) because the viscosity is largely lowered in a high shear region as compared with a polymer having a linear structure and having the same molecular weight, and this is probably because the molecular weight per chain of a base polymer is low even when the molecular weight is increased. When the branch number in the high molecular weight region is increased in such a manner that the 1/2 Hi polymer has a branch number (Bn) of 12 or more, the effect resulting from reducing the length of each base polymer can be more remarkably obtained. Although the molecular weight is preferably increased to increase abrasion resistance and fracture strength, the viscosity of the polymer is increased to make it difficult to be mixed with a filler and the like, which tends to be restrictive for designing a high molecular weight. Good processability can be obtained, however, when the branch number is large in the high molecular weight region such that the branch number (Bn) of the 1/2 Hi polymer is 12 or more as described above, and therefore, room for increasing the molecular weight is increased. In other words, the conjugated diene-based polymer in which the branch number is large in the high molecular weight region such that the branch number (Bn) of a 1/2 Hi polymer is 12 or more has good processability in obtaining a compound, and hence, a conjugated diene-based polymer having a large molecular weight can be designed, and thus, a conjugated diene-based polymer excellent in abrasion resistance and fracture performance obtained in the form of a vulcanizate tends to be easily obtained.

### (Coupling)

The conjugated diene-based polymer of the present embodiment is preferably a conjugated diene-based polymer obtained by subjecting a conjugated diene-based polymer obtained through the polymerizing and branching step to a coupling reaction performed on an active end of the conjugated diene-based polymer with a tri- or higher functional reactive compound (hereinafter also referred to as the "coupling agent").

In a coupling step, the coupling reaction is performed on one end of an active end of the conjugated diene-based polymer with a coupling agent or a coupling agent having a nitrogen atom-containing group to obtain a conjugated diene-based polymer. More specific description will be given in the description of the production method for a conjugated diene-based polymer below.

### (Coupling Agent)

In the present embodiment, the coupling agent used in the coupling step may have any structure as long as it is a tri- or higher functional reactive compound, and is preferably a tri- or higher functional reactive compound having a silicon atom. More specific description will be given in the description of the production method for a conjugated diene-based polymer below.

The conjugated diene-based polymer of the present embodiment preferably contains a nitrogen atom. The conjugated diene-based polymer containing a nitrogen atom can be obtained, for example, by performing a coupling reaction with a modifier having a nitrogen atom-containing group described below.

### (Modifier having Nitrogen Atom-containing Group)

The conjugated diene-based polymer of the present embodiment is more preferably a conjugated diene-based polymer obtained by subjecting a conjugated diene-based polymer obtained through the polymerizing and branching step to a coupling reaction performed on an active end of the conjugated diene-based polymer with a tri- or higher functional reactive compound having a nitrogen atom-containing group (hereinafter also referred to as the "modifier having a nitrogen atom-containing group").

In the coupling step, the coupling reaction is performed on one end of an active end of the conjugated diene-based polymer with a coupling agent having a nitrogen atom-containing group to obtain a conjugated diene-based polymer.

A modified conjugated diene-based polymer obtained by coupling with a modifier having a nitrogen atom-containing group tends to be good in dispersibility of silica when formed into a composition with a filler or the like compounded, good in processability of a composition obtained by compounding with a filler or the like, good in abrasion resistance and fracture strength obtained in a vulcanizate formed from the composition, and remarkably improved in balance between a low hysteresis loss property and wet skid resistance. More specific description will be given in the description of the production method for a conjugated diene-based polymer below.

Examples of the modifier having a nitrogen atom-containing group include, but are not limited to, an isocyanate compound, an isothiocyanate compound, an isocyanuric acid derivative, a nitrogen group-containing carbonyl compound, a nitrogen group-containing vinyl compound, and a nitrogen group-containing epoxy compound.

The modifier having a nitrogen atom-containing group preferably has a nitrogen atom-containing functional group, and the nitrogen atom-containing functional group is preferably an amine compound not having active hydrogen, and examples include a tertiary amine compound, a protected amine compound in which the active hydrogen is substituted by a protecting group, an imine compound represented by a general formula, -N=C, and an alkoxysilane compound bonded to the nitrogen atom-containing group. More specific description will be given in the description of the production method for a conjugated diene-based polymer below.

### (Modification Ratio)

Herein, the term "modification ratio" refers to a mass ratio of a conjugated diene-based polymer having a nitrogen atom-containing functional group to a total amount of conjugated diene-based polymers.

For example, when a nitrogen atom-containing modifier is reacted with a terminal end, a mass ratio of a conjugated diene-based polymer having a nitrogen atom-containing functional group derived from the nitrogen atom-containing modifier to a total amount of conjugated diene-based polymers is expressed as a modification ratio.

On the other hand, also when a polymer is branched with a branching agent containing a nitrogen atom, the thus generated conjugated diene-based polymer has a nitrogen atom-containing functional group, and such a branched polymer is also counted in the calculation of a modification ratio.

In other words, herein, a mass ratio of a sum of a coupled polymer obtained with a modifier having a nitrogen atom-containing functional group and/or a branched polymer obtained with a branching agent having a nitrogen atom-containing functional group corresponds to the "modification ratio".

In the conjugated diene-based polymer of the present embodiment, when at least one end is modified with a nitrogen atom-containing group, balance between a low hysteresis loss property and wet skid resistance tends to be dramatically improved while processability obtained in the form of a composition with a filler or the like compounded, and abrasion resistance and fracture strength obtained in a vulcanizate formed from the composition are retained.

From the viewpoints of processability, abrasion resistance, fracture strength, and balance between a low hysteresis loss property and wet skid resistance, the conjugated diene-based polymer of the present embodiment has a modification ratio measured by column adsorption GPC (hereinafter also simply referred to as the "modification ratio") of preferably 60% by mass or more based on the total amount of conjugated diene-based polymers.

The modification ratio is preferably 65% by mass or more, more preferably 70% by mass or more, further preferably 75% by mass or more, and still further preferably 80% by mass or more. An upper limit of the modification ratio is not especially limited, and is, for example, 98% by mass.

The modification ratio can be measured by chromatography capable of separating a functional group-containing modified component and a non-modified component.

As a method using the chromatography, a method using a column for gel permeation chromatography using, as a filler, a polar material such as silica adsorbing a specific functional group, for performing quantitative determination using an internal standard of a non-adsorbed component for comparison (column adsorption GPC method) can be employed.

More specifically, the modification ratio is obtained by measuring an amount of adsorption onto a silica column based on a difference between a chromatogram measured by using a polystyrene-based gel column and a chromatogram measured by using a silica-based column obtained from a sample solution containing a sample and low molecular weight internal standard polystyrene.

More specifically, the modification ratio is measured by a method described in the examples below.

In the conjugated diene-based polymer of the present embodiment, the modification ratio can be controlled by adjusting an amount of a modifier to be added and a reaction method, and thus can be controlled to be 60% by mass or more.

For example, a method in which polymerization is performed by using, as a polymerization initiator, an organic lithium compound, described later, having at least one nitrogen atom in a molecule, a method in which a monomer having at least one nitrogen atom in a molecule is copolymerized, and a method in which a modifier having a structural formula described later is used are combined, and polymerization conditions are controlled, and thus, the modification ratio can be obtained.

From the viewpoint of balance between processability and abrasion resistance, the conjugated diene-based polymer of the present embodiment preferably includes a portion derived from a vinyl-based monomer containing an alkoxysilyl group or a halosilyl group, and preferably has a main chain branch structure in the portion derived from a vinyl-based monomer containing an alkoxysilyl group or a halosilyl group, and is more preferably a conjugated diene-based polymer having a star polymer structure having 3 or more branches, in which at least one branched chain of the star structure includes a portion derived from a vinyl-based monomer containing an alkoxysilyl group or a halosilyl group, and the portion derived from a vinyl-based monomer containing an alkoxysilyl group or a halosilyl group further includes a main chain branch structure.

Herein, the term "star polymer structure" refers to a structure in which a plurality of polymer chains (arms) are bonded to one central branch point.

The one central branch point herein contains a substituent containing an atom derived from a coupling agent or a substituent containing a nitrogen atom derived from a modifier.

The term "main branch structure" herein refers to a structure in which a polymer chain forms a branch point in the portion derived from a vinyl-based monomer containing an alkoxysilyl group or a halosilyl group, and a polymer chain (arm) extends from the branch point.

In the conjugated diene-based polymer of the present embodiment, from the viewpoint of improving the branch number (Bn), the number of main chain branch points constituted by the portion derived from a vinyl-based monomer containing an alkoxysilyl group or a halosilyl group is 4 or more, and a branch structure derived from a star polymer structure formed by a coupling agent in a reaction step includes preferably 3 or more branches, more preferably 4 or more branches, and further preferably 8 or more branches.

Although the branch number (Bn) is increased both by modification with a coupling agent for obtaining a star structure and by introduction of a branching agent into the polymer, contribution to the branch number (Bn) is larger when a whole polymer chain is branched by using a coupling agent.

In design of a polymer, the branch number (Bn) can be controlled in accordance with selection of a coupling agent, and selection of a type of and setting of an amount of a branching agent, and the branch number (Bn) can be more easily controlled by taking a contribution rate into consideration.

### (Main Chain Branch Structure)

The main chain branch structure corresponds to branch points in the portion derived from a vinyl-based monomer containing an alkoxysilyl group or a halosilyl group, and includes 2 or more branch points, preferably 3 or more branch points, and further preferably 4 or more branch points.

The branch point forming the main branch structure has preferably at least 2 or more polymer chains, more preferably 3 or more polymer chains not corresponding to a main chain, and further preferably 4 or more polymer chains not corresponding to a main chain.

Particularly in a main chain branch structure containing a vinyl-based monomer containing an alkoxysilyl group or a halosilyl group, a peak derived from the main chain branch structure is detected, in signal detection by ²⁹Si-NMR, in a range of -45 ppm to - 65 ppm, and more restrictively in a range of -50 ppm to - 60 ppm.

### (Star Polymer Structure)

The conjugated diene-based polymer of the present embodiment preferably has a star polymer structure, and the number of branches derived from the star polymer structure is preferably 3 or more, more preferably 4 or more, further preferably 6 or more, and still further preferably 8 or more.

In a method for obtaining, as the conjugated diene-based polymer of the present embodiment, a modified conjugated diene-based polymer having a star polymer structure including 3 or more branches in which at least one branched chain of the star structure includes a portion derived from a vinyl-based monomer containing an alkoxysilyl group or a halosilyl group, and the portion derived from the vinyl-based monomer containing the alkoxysilyl group or the halosilyl group further includes a main chain branch structure, the "star polymer structure" can be formed by adjusting the number of functional groups of a coupling agent and an amount of the coupling agent to be added, and the "main chain branch structure" can be controlled by adjusting the number of functional groups of a branching agent, an amount of the branching agent to be added, and timing of adding the branching agent.

In order to obtain a conjugated diene-based polymer having a star polymer structure having 3 or more branches in which at least one branched chain of the star structure includes a portion derived from a vinyl-based monomer containing an alkoxysilyl group or a halosilyl group, and the portion derived from a vinyl-based monomer containing the alkoxysilyl group or the halosilyl group further includes a main chain branch structure, for example, a method in which polymerization is performed by using an organic lithium-based compound as a polymerization initiator, a branching agent for imparting a specific branch point is added during or after the polymerization, and modification is performed by using a modifier for imparting a specific branching ratio after continuation of the polymerization can be employed.

Control means for such polymerization conditions will be described later as a production method in the examples.

### (Detailed Structure of Main Chain Branch Structure)

In the conjugated diene-based polymer of the present embodiment, the portion derived from a vinyl-based monomer containing an alkoxysilyl group or a halosilyl group described above is preferably a monomer unit based on a compound represented by the following formula (1) or (2), and the conjugated diene-based polymer preferably contains a branch point of a polymer chain containing the monomer unit based on the compound represented by the formula (1) or (2), is more preferably a conjugated diene-based polymer obtained with a coupling agent, and is further preferably a modified conjugated diene-based polymer in which at least one end of a conjugated diene-based polymer is modified with a nitrogen atom-containing group.

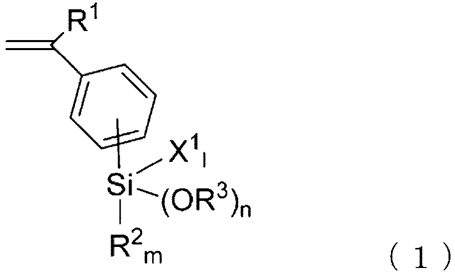

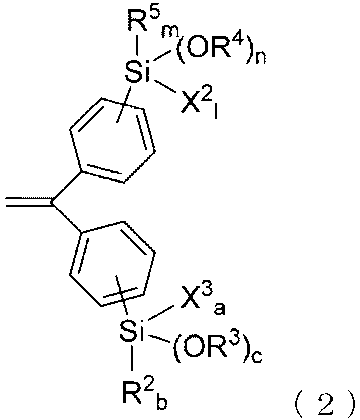

In formula (1), R¹ represents a hydrogen atom, an alkyl group having 1 to 20 carbon atoms, or an aryl group having 6 to 20 carbon atoms, and may have a branch structure in a part thereof.
R² and R³ each independently represent an alkyl group having 1 to 20 carbon atoms, or an aryl group having 6 to 20 carbon atoms, and may have a branch structure in a part thereof. Each of R¹ to R³, if present in a plural number, is respectively independent.
X¹ represents an independent halogen atom.
m represents an integer of 0 to 2, n represents an integer of 0 to 3, 1 represents an integer of 0 to 3, and (m + n + 1) is 3.
In formula (2), R² to R⁵ each independently represent an alkyl group having 1 to 20 carbon atoms, or an aryl group having 6 to 20 carbon atoms, and may have a branch structure in a part thereof.
Each of R² to R⁵, if present in a plural number, is respectively independent.
X² and X³ represent an independent halogen atom.
m represents an integer of 0 to 2, n represents an integer of 0 to 3, l represents an integer of 0 to 3, and
(m + n+ l) is 3.
a represents an integer of 0 to 2, b represents an integer of 0 to 3, c represents an integer of 0 to 3, and (a + b + c) is 3.

The conjugated diene-based polymer of the present embodiment is preferably a conjugated diene-based polymer having a monomer unit based on a compound represented by the formula (1) in which R¹ is a hydrogen atom and m is 0. Thus, the number of branches is improved, and an effect of improving abrasion resistance and processability can be obtained.

Alternatively, the conjugated diene-based polymer of the present invention is preferably a conjugated diene-based polymer having a monomer unit based on a compound represented by formula (2) in which m is 0 and b is 0. Thus, the effect of improving abrasion resistance and processability can be obtained.

The conjugated diene-based polymer of the present embodiment is preferably a modified conjugated diene-based polymer having a monomer unit based on a compound represented by the formula (2) in which m is 0, l is 0, n is 3, a is 0, b is 0, and c is 3. Thus, the effect of improving abrasion resistance and processability can be obtained.

The conjugated diene-based polymer of the present embodiment is more preferably a conjugated diene-based polymer having a monomer unit based on a compound represented by formula (1) in which R¹ is a hydrogen atom, m is 0, l is 0, and n is 3. Thus, the modification ratio and the branch number are improved, and an effect of improving low fuel consumption performance, abrasion resistance, and processability can be obtained.

### (Branching Agent)

In the conjugated diene-based polymer of the present embodiment, in constructing a main chain branch structure, a branching agent represented by the following formula (1) or (2) is preferably used as the branching agent.

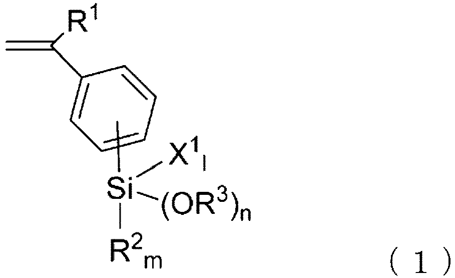

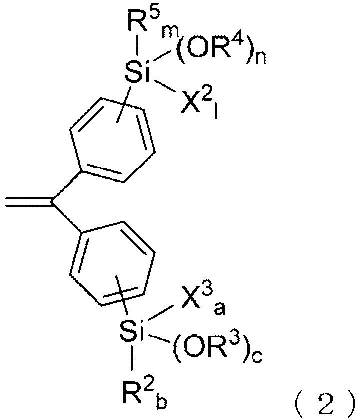

In formula (1), R¹ represents a hydrogen atom, an alkyl group having 1 to 20 carbon atoms, or an aryl group having 6 to 20 carbon atoms, and may have a branch structure in a part thereof.
R² and R³ each independently represent an alkyl group having 1 to 20 carbon atoms, or an aryl group having 6 to 20 carbon atoms, and may have a branch structure in a part thereof.
Each of R¹ to R³, if present in a plural number, is respectively independent.
X¹ represents an independent halogen atom.
m represents an integer of 0 to 2, n represents an integer of 0 to 3, 1 represents an integer of 0 to 3, and
(m + n + 1) is 3.

In formula (2), R² to R⁵ each independently represent an alkyl group having 1 to 20 carbon atoms or an aryl group having 6 to 20 carbon atoms, and may have a branch structure in a part thereof.
Each of R² to R⁵, if present in a plural number, is respectively independent.
X² and X³ represent an independent halogen atom.
m represents an integer of 0 to 2, n represents an integer of 0 to 3, l represents an integer of 0 to 3, and
(m + n + l) is 3.
a represents an integer of 0 to 2, b represents an integer of 0 to 3, c represents an integer of 0 to 3, and (a + b + c) is 3.

In the present embodiment, from the viewpoints of continuity of polymerization and improvement of the branch number, the branching agent used in constructing the main chain branch structure of the conjugated diene-based polymer is preferably a compound represented by formula (1) in which R¹ is a hydrogen atom and m is 0.

Alternatively, in the present embodiment, from the viewpoint of improvement of the branch number, the branching agent used in constructing the main chain branch structure of the conjugated diene-based polymer is preferably a compound represented by formula (2) in which m is 0 and b is 0.

In the present embodiment, from the viewpoints of continuity of polymerization and improvement of the modification ratio and the branch number, the branching agent used in constructing the main chain branch structure of the conjugated diene-based polymer is more preferably a compound represented by the formula (1) in which R¹ is a hydrogen atom, m is 0, l is 0, and n is 3.

In the present embodiment, from the viewpoint of improvement of the modification ratio and the branch number, the branching agent used in constructing the main chain branch structure of the conjugated diene-based polymer is preferably a compound represented by the formula (2) in which m is 0, l is 0, n is 3, a is 0, b is 0, and c is 3.

Examples of the branching agent represented by formula (1) include, but are not limited to, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, trimethoxy(2-vinylphenyl)silane, triethoxy(2-vinylphenyl)silane, tripropoxy(2-vinylphenyl)silane, tributoxy(2-vinylphenyl)silane, triisopropoxy(2-vinylphenyl)silane, dimethoxymethyl(4-vinylphenyl)silane, diethoxymethyl(4-vinylphenyl)silane, dipropoxymethyl(4-vinylphenyl)silane, dibutoxymethyl(4-vinylphenyl)silane, diisopropoxymethyl(4-vinylphenyl)silane, dimethoxymethyl(3-vinylphenyl)silane, diethoxymethyl(3-vinylphenyl)silane, dipropoxymethyl(3-vinylphenyl)silane, dibutoxymethyl(3-vinylphenyl)silane, diisopropoxymethyl(3-vinylphenyl)silane, dimethoxymethyl(2-vinylphenyl)silane, diethoxymethyl(2-vinylphenyl)silane, dipropoxymethyl(2-vinylphenyl)silane, dibutoxymethyl(2-vinylphenyl)silane, diisopropoxymethyl(2-vinylphenyl)silane, dimethylmethoxy(4-vinylphenyl)silane, dimethylethoxy(4-vinylphenyl)silane, dimethylpropoxy(4-vinylphenyl)silane, dimethylbutoxy(4-vinylphenyl)silane, dimethylisopropoxy(4-vinylphenyl)silane, dimethylmethoxy(3-vinylphenyl)silane, dimethylethoxy(3-vinylphenyl)silane, dimethylpropoxy(3-vinylphenyl)silane, dimethylbutoxy(3-vinylphenyl)silane, dimethylisopropoxy(3-vinylphenyl)silane, dimethylmethoxy(2-vinylphenyl)silane, dimethylethoxy(2-vinylphenyl)silane, dimethylpropoxy(2-vinylphenyl)silane, dimethylbutoxy(2-vinylphenyl)silane, dimethylisopropoxy(2-vinylphenyl)silane, trimethoxy(4-isopropenylphenyl)silane, triethoxy(4-isopropenylphenyl)silane, tripropoxy(4-isopropenylphenyl)silane, tributoxy(4-isopropenylphenyl)silane, triisopropoxy(4-isopropenylphenyl)silane, trimethoxy(3-isopropenylphenyl)silane, triethoxy(3-isopropenylphenyl)silane, tripropoxy(3-isopropenylphenyl)silane, tributoxy(3-isopropenylphenyl)silane, triisopropoxy(3-isopropenylphenyl)silane, trimethoxy(2-isopropenylphenyl)silane, triethoxy(2-isopropenylphenyl)silane, tripropoxy(2-isopropenylphenyl)silane, tributoxy(2-isopropenylphenyl)silane, triisopropoxy(2-isopropenylphenyl)silane, dimethoxymethyl(4-isopropenylphenyl)silane, diethoxymethyl(4-isopropenylphenyl)silane, dipropoxymethyl(4-isopropenylphenyl)silane, dibutoxymethyl(4-isopropenylphenyl)silane, diisopropoxymethyl(4-isopropenylphenyl)silane, dimethoxymethyl(3-isopropenylphenyl)silane, diethoxymethyl(3-isopropenylphenyl)silane, dipropoxymethyl(3-isopropenylphenyl)silane, dibutoxymethyl(3-isopropenylphenyl)silane, diisopropoxymethyl(3-isopropenylphenyl)silane, dimethoxymethyl(2-isopropenylphenyl)silane, diethoxymethyl(2-isopropenylphenyl)silane, dipropoxymethyl(2-isopropenylphenyl)silane, dibutoxymethyl(2-isopropenylphenyl)silane, diisopropoxymethyl(2-isopropenylphenyl)silane, dimethylmethoxy(4-isopropenylphenyl)silane, dimethylethoxy(4-isopropenylphenyl)silane, dimethylpropoxy(4-isopropenylphenyl)silane, dimethylbutoxy(4-isopropenylphenyl)silane, dimethylisopropoxy(4-isopropenylphenyl)silane, dimethylmethoxy(3-isopropenylphenyl)silane, dimethylethoxy(3-isopropenylphenyl)silane, dimethylpropoxy(3-isopropenylphenyl)silane, dimethylbutoxy(3-isopropenylphenyl)silane, dimethylisopropoxy(3-isopropenylphenyl)silane, dimethylmethoxy(2-isopropenylphenyl)silane, dimethylethoxy(2-isopropenylphenyl)silane, dimethylpropoxy(2-isopropenylphenyl)silane, dimethylbutoxy(2-isopropenylphenyl)silane, dimethylisopropoxy(2-isopropenylphenyl)silane, trichloro(4-vinylphenyl)silane, trichloro(3-vinylphenyl)silane, trichloro(2-vinylphenyl)silane, tribromo(4-vinylphenyl)silane, tribromo(3-vinylphenyl)silane, tribromo(2-vinylphenyl)silane, dichloromethyl(4-vinylphenyl)silane, dichloromethyl(3-vinylphenyl)silane, dichloromethyl(2-vinylphenyl)silane, dibromomethyl(4-vinylphenyl)silane, dibromomethyl(3-vinylphenyl)silane, dibromomethyl(2-vinylphenyl)silane, dimethylchloro(4-vinylphenyl)silane, dimethylchloro(3-vinylphenyl)silane, dimethylchloro(2-vinylphenyl)silane, dimethylbromo(4-vinylphenyl)silane, dimethylbromo(3-vinylphenyl)silane, and dimethylbromo(2-vinylphenyl)silane.

Among these, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, and trichloro(4-vinylphenyl)silane are preferred, and trimethoxy(4-vinylphenyl)silane, triethoxy(4-vinylphenyl)silane, tripropoxy(4-vinylphenyl)silane, tributoxy(4-vinylphenyl)silane, and triisopropoxy(4-vinylphenyl)silane are more preferred.

Examples of the branching agent represented by formula (2) include, but are not limited to, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, 1,1-bis(4-triisopropoxysilylphenyl)ethylene, 1,1-bis(3-trimethoxysilylphenyl)ethylene, 1,1-bis(3-triethoxysilylphenyl)ethylene, 1,1-bis(3-tripropoxysilylphenyl)ethylene, 1,1-bis(3-tripentoxysilylphenyl)ethylene, 1,1-bis(3-triisopropoxysilylphenyl)ethylene, 1,1-bis(2-trimethoxysilylphenyl)ethylene, 1,1-bis(2-triethoxysilylphenyl)ethylene, 1,1-bis(3-tripropoxysilylphenyl)ethylene, 1,1-bis(2-tripentoxysilylphenyl)ethylene, 1,1-bis(2-triisopropoxysilylphenyl)ethylene, 1,1-bis(4-(dimethylmethoxysilyl)phenyl)ethylene, 1,1-bis(4-(diethylmethoxysilyl)phenyl)ethylene, 1,1-bis(4-(dipropylmethoxysilyl)phenyl)ethylene, 1,1-bis(4-(dimethylethoxysilyl)phenyl)ethylene, 1,1-bis(4-(diethylethoxysilyl)phenyl)ethylene, and 1,1-bis(4-(dipropylethoxysilyl)phenyl)ethylene.

Among these, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, and 1,1-bis(4-triisopropoxysilylphenyl)ethylene are preferred, and 1,1-bis(4-trimethoxysilylphenyl)ethylene is more preferred.

### (Production Method for Conjugated Diene-based Polymer)

A production method for a conjugated diene-based polymer of the present embodiment is a production method by which a conjugated diene-based polymer having the Mooney viscosity, the Mooney stress relaxation and the branch number (Bn) respectively falling in the specific ranges can be obtained, and includes a polymerizing and branching step of obtaining a conjugated diene-based polymer having a main chain branch structure by polymerizing at least a conjugated diene compound with an organic lithium compound used as a polymerization initiator, and adding a branching agent thereto; and a coupling step of coupling the conjugated diene-based polymer with a coupling agent.

The production method for a conjugated diene-based polymer of the present embodiment preferably includes a polymerizing and branching step of polymerizing at least a conjugated diene compound in the presence of an organic lithium-based compound with an organic lithium compound used as a polymerization initiator to obtain a conjugated diene-based polymer having a main chain branch structure by using at least any one of the various branching agents described above; and a coupling step of coupling the conjugated diene-based polymer with a coupling agent or a modifier having a nitrogen atom-containing group.

The conjugated diene-based polymer contained in a conjugated diene-based polymer may be any one of a homopolymer of a single conjugated diene compound, a polymer, namely, a copolymer, of different kinds of conjugated diene compounds, and a copolymer of a conjugated diene compound and an aromatic vinyl compound.

Specific examples of the conjugated diene compound are not especially limited, but include 1,3-butadiene, isoprene, 2,3-dimethyl-1,3-butadiene, 1,3-pentadine, 3-methyl-1,3-pentadiene, 1,3-hexadiene, and 1,3-heptadiene. Among these, 1,3-butadiene and isoprene are preferred from the viewpoint of industrial availability.

One of these may be singly used, or two or more of these may be used together.

Specific examples of the aromatic vinyl compound are not especially limited, and include styrene, p-methylstyrene, α-methylstyrene, vinyl ethyl benzene, vinyl xylene, vinyl naphthalene, and diphenylethylene. Among these, styrene is preferred from the viewpoint of industrial availability.

One of these may be singly used, or two or more of these may be used together.

As for what is called a microstructure of the copolymer of the conjugated diene compound and the aromatic vinyl compound (ratios of an amount of the aromatic vinyl compound and an amount of vinyl bond), the amount of the aromatic vinyl compound is preferably 0 to 45% by mass, and more preferably 0 to 40% by mass, and the amount of vinyl bond is preferably 23 to 70 mol%, and more preferably 27 to 65 mol%. In the conjugated diene-based polymer of the present embodiment, the Mooney viscosity, the Mooney stress relaxation and the branch number are controlled in accordance with the amount of a polymerization initiator to be added, the type (the number of functional groups) and the amount of a branching agent to be added, the type (the number of functional groups) and the amount of a coupling agent to be added, and the amount (the type) of a rubber softener to be added, and are less affected by the microstructure. Therefore, the microstructure can be appropriately designed within a range of a general microstructure. The amount of the aromatic vinyl compound and the amount of vinyl bond affect, however, the Tg of the conjugated diene-based polymer as described above, and hence are preferably set in the above-described ranges from the viewpoints of low fuel consumption performance and braking performance.

### (Polymerizing and Branching Step)

The polymerizing and branching step of the production method for a conjugated diene-based polymer of the present embodiment is a step of obtaining a conjugated diene-based polymer having a main chain branch structure by, for example, polymerizing at least a conjugated diene compound with an organic monolithium compound used as a polymerization initiator, and adding a branching agent thereto.

In the polymerizing step, the polymerization is performed preferably by a growth reaction by a living anionic polymerization reaction, and thus, a conjugated diene-based polymer having an active end can be obtained. Thereafter, main chain branching can be appropriately controlled also in the branching step using a branching agent, and there is a tendency that a conjugated diene-based polymer having a high modification ratio can be obtained therefrom.

### (Polymerization Initiator)

As the polymerization initiator, at least an organic monolithium compound can be used.

An example of the organomonolithium compound includes, but is not limited to, an organomonolithium compound of a low molecular weight compound or a soluble oligomer.

Examples of the organomonolithium compound include, with respect to a bonding mode between an organic group and lithium thereof, a compound having a carbon-lithium bond, a compound having a nitrogen-lithium bond, and a compound having a tin-lithium bond.

An amount of the organic monolithium compound to be used as the polymerization initiator is preferably determined based on the molecular weight of a conjugated diene-based polymer or a modified conjugated diene-based polymer to be obtained.

A ratio of the amount of a monomer such as a conjugated diene compound to be used to the amount of the polymerization initiator to be used relates to the degree of polymerization. In other words, there is a tendency that it relates to the number average molecular weight and/or the weight average molecular weight.

Accordingly, in order to increase the molecular weight, adjustment may be made to reduce the amount of the polymerization initiator to be used, and in order to reduce the molecular weight, the adjustment may be made to increase the amount of the polymerization initiator to be used.

From the viewpoint that it is used as one method for introducing a nitrogen atom into a conjugated diene-based polymer, the organomonolithium compound is preferably an alkyl lithium compound having a substituted amino group or dialkylamino lithium.

In this case, a conjugated diene-based polymer having, at a polymerization starting end, a nitrogen atom of an amino group is obtained.

The substituted amino group refers to an amino group having no active hydrogen or having a structure in which active hydrogen is protected.

Examples of an alkyl lithium compound containing an amino group having no active hydrogen include, but are not limited to, 3-dimethylaminopropyl lithium, 3-diethylaminopropyl lithium, 4-(methylpropylamino)butyl lithium and 4-hexamethyleneiminobutyl lithium.

Examples of an alkyl lithium compound containing an amino group having a structure in which active hydrogen is protected include, but are not limited to, 3-bistrimethylsilylaminopropyl lithium and 4-trimethylsilylmethylaminobutyl lithium.

Examples of the dialkylamino lithium include, but are not limited to, lithium dimethylamide, lithium diethylamide, lithium dipropylamide, lithium dibutylamide, lithium di-n-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenetylamide, lithium hexamethyleneimide, lithium pyrrolidide, lithium piperidide, lithium heptamethyleneimide, lithium morpholide, 1-lithioazacyclooctane, 6-lithio-1,3,3-trimethyl-6-azabicyclo[3.2.1] octane, and 1-lithio-1,2,3,6-tetrahydropyridine.

Such an organomonolithium compound having a substituted amino group can be reacted with a small amount of a polymerizable monomer, such as 1,3-butadiene, isoprene or styrene, to be used as an organomonolithium compound of a soluble oligomer.

From the viewpoint of the industrial availability and the controllability of the polymerization reaction, the organomonolithium compound is preferably an alkyl lithium compound. In this case, a conjugated diene-based polymer having an alkyl group at a polymerization starting end can be obtained.

Examples of the alkyl lithium compound include, but are not limited to, n-butyllithium, sec-butyllithium, tert-butyllithium, n-hexyllithium, benzyllithium, phenyllithium, and stilbene lithium.

From the viewpoint of the industrial availability and the controllability of the polymerization reaction, the alkyl lithium compound is preferably n-butyllithium or sec-butyllithium.

One of these organomonolithium compounds may be singly used, or two or more of these may be used together. Alternatively, another organic metal compound may be used together.

Examples of such another organic metal compound include alkaline earth metal compounds, other alkaline metal compounds, and other organic metal compounds.

Examples of the alkaline earth metal compounds include, but are not limited to, organic magnesium compounds, organic calcium compounds and organic strontium compounds. Other examples include compounds of alkoxides, sulfonates, carbonates and amides of alkaline earth metals.

Examples of the organic magnesium compounds include dibutyl magnesium and ethyl butyl magnesium. Examples of the other organic metal compounds include organic aluminum compounds.

Examples of a polymerization reaction mode employed in the polymerizing step include, but are not limited to, batch and continuous polymerization reaction modes.

In the continuous mode, one reactor or two or more connected reactors can be used. As a reactor for the continuous mode, for example, a tank or tubular reactor equipped with a stirrer can be used. In the continuous mode, a monomer, an inert solvent and a polymerization initiator are continuously fed to the reactor, a polymer solution containing a polymer is obtained in the reactor, and the polymer solution is continuously discharged.

As a reactor for the batch mode, for example, a tank reactor equipped with a stirrer is used. It is preferable, in the batch mode, that a monomer, an inert solvent and a polymerization initiator are fed to the reactor, the monomer is continuously or intermittently additionally fed if necessary during the polymerization, a polymer solution containing a polymer is obtained in the reactor, and the polymer solution is discharged after completing the polymerization.

In the production method for a conjugated diene-based polymer of the present embodiment, in order to obtain a conjugated diene-based polymer having an active end at a high ratio, the continuous mode in which a polymer is continuously discharged to be supplied to a next reaction in a short period of time is preferably employed.

In the polymerizing step for a conjugated diene-based polymer, the polymerization is performed preferably in an inert solvent. Examples of the solvent are not especially limited but include hydrocarbon-based solvents such as saturated hydrocarbons and aromatic hydrocarbons. Specific examples of the hydrocarbon-based solvent include, but are not limited to, aliphatic hydrocarbons such as butane, pentane, hexane and heptane; alicyclic hydrocarbons such as cyclopentane, cyclohexane, methylcyclopentane and methylcyclohexane; aromatic hydrocarbons such as benzene, toluene and xylene; and a hydrocarbon containing a mixture of any of these.

Impurities of allenes and acetylenes are preferably treated with an organic metal compound before the solvent is supplied to the polymerization reaction because thus, a conjugated diene-based polymer having an active end in a high concentration tends to be obtained, and a modified conjugated diene-based polymer having a high modification ratio tends to be obtained.

In the polymerizing step, a polar compound may be added. There is a tendency that the polar compound can randomly copolymerize an aromatic vinyl compound and a conjugated diene compound, and can be used also as a vinylation agent for controlling a microstructure of a conjugated diene portion. Besides, it tends to be advantageous for, for example, acceleration of the polymerization reaction.

Examples of the polar compound include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkaline metal alkoxide compounds such as potassium-tert-amylate, potassium-tert-butylate, sodium-tert-butylate, and sodium amylate; and phosphine compounds such as triphenylphosphine.

One of these polar compounds may be singly used, or two or more of these may be used together.

The amount of the polar compound to be used is not especially limited but can be selected in accordance with the purpose or the like, and is preferably 0.01 mol or more and 100 mol or less per mole of the polymerization initiator.

Such a polar compound (a vinylation agent) can be used, as a microstructure modifier for a conjugated diene portion of the polymer, in an appropriate amount in accordance with a desired amount of bound vinyl. There is a tendency that many polar compounds simultaneously have an effective randomizing effect in copolymerization of a conjugated diene compound and an aromatic vinyl compound, and can be used as a modifier for the distribution of the aromatic vinyl compound and the amount of a styrene block.

As a method for randomizing the conjugated diene compound and the aromatic vinyl compound, for example, a method as described in Japanese Patent Laid-Open No. 59-140211 in which a copolymerization reaction is started with the whole amount of styrene and a part of 1,3-butadiene with the rest of 1,3-butadiene intermittently added during the copolymerization reaction may be employed.

In the polymerizing step, a polymerization temperature is preferably a temperature at which the living anionic polymerization proceeds, and from the viewpoint of productivity, is more preferably 0°C or more, and more preferably 120°C or less. If the polymerization temperature falls in this range, there is a tendency that a reaction amount of the modifier reacted to the active end can be sufficiently attained after completing the polymerization. The polymerization temperature is further preferably 50°C or more and 100°C or less.

In the production method for a conjugated diene-based polymer of the present embodiment, the amount of the branching agent to be added in the branching step for forming a main chain branch structure is not especially limited but can be selected in accordance with the purpose or the like, and is preferably 0.03 mol or more and 0.5 mol or less, more preferably 0.05 mol or more and 0.4 mol or less, and further preferably 0.01 mol or more and 0.25 mol or less per mole of the polymerization initiator.

The branching agent can be used in an appropriate amount in accordance with a desired number of branch points of a main chain branch structure of the conjugated diene portion of the conjugated diene-based polymer.

The timing of adding the branching agent in the branching step is not especially limited but can be selected in accordance with the purpose or the like, and from the viewpoints of the improvement of the absolute molecular weight of the modified conjugated diene-based polymer and the improvement of the modification ratio, is timing, after adding the polymerization initiator, when a raw material conversion rate is preferably 20% or more, more preferably 40% or more, further preferably 50% or more, still further preferably 65% or more, and much further preferably 75% or more.

After the addition of the branching agent, a desired raw material may be additionally added to continue the polymerizing step after the branching, or the above-described process may be repeated.

The amount of a monomer to be additionally added is not especially limited, and from the viewpoint of the improvement of the modification ratio of the conjugated diene-based polymer, is preferably 5% or more, more preferably 10% or more, further preferably 15% or more, still further preferably 20% or more, and much further preferably 25% or more and 30% or less based on the total amount of conjugated diene-based monomers, for example, the total amount of butadiene, used in the polymerizing step.

When the amount of a monomer to be additionally added falls in the above-described range, a molecular weight between a branch point derived from the branching agent and a branch point derived from the coupling agent is increased, and hence, a molecular structure having a high linearity tends to be easily formed. When a molecular structure having a high linearity is employed, entanglement among molecular chains of the conjugated diene-based polymer obtained in the form of a vulcanizate is increased, and hence, a rubber composition excellent in abrasion resistance, steering stability and fracture strength tends to be easily obtained.

The conjugated diene-based polymer of the present embodiment is not especially limited but may be a polymer of a conjugated diene monomer and a branching agent, or may be a copolymer of a conjugated diene monomer, a branching agent, and another monomer. For example, when the conjugated diene monomer is butadiene or isoprene, and this diene monomer is polymerized with a branching agent containing an aromatic vinyl portion, a polymer chain is what is called polybutadiene or polyisoprene, and a polymer containing a structure derived from an aromatic vinyl in a branched portion is obtained. When such a structure is employed, the linearity of each polymer chain can be improved and a crosslink density obtained after vulcanization can be improved, and thus, an effect of improving abrasion resistance can be attained. Therefore, the conjugated diene-based polymer of the present embodiment is suitably used in applications such as a tire, resin modification, interior and exterior of a vehicle, an anti-vibration rubber, and shoes.

When the conjugated diene-based polymer is used in application to a tire tread, a copolymer of a conjugated diene monomer, an aromatic vinyl monomer, and a branching agent is suitably used, and in the copolymer used in this application, the amount of bound conjugated diene is preferably 40% by mass or more and 100% by mass or less, and more preferably 55% by mass or more and 80% by mass or less.

Besides, the amount of bound aromatic vinyl in the conjugated diene-based polymer of the present embodiment is not especially limited, and is preferably 0% by mass or more and 60% by mass or less, and more preferably 20% by mass or more and 45% by mass or less.

When the amounts of bound conjugated diene and bound aromatic vinyl fall in the above-described ranges, balance between a low hysteresis loss property and wet skid resistance obtained in the form of a vulcanizate, abrasion resistance, and fracture strength tend to be more excellent.

Here, the amount of bound aromatic vinyl can be measured in accordance with UV absorption by a phenyl group, and based on the thus obtained amount, the amount of bound conjugated diene can be also obtained. Specifically, these amounts are measured in accordance with a method described later in the examples.

In the conjugated diene-based polymer of the present embodiment, the amount of bound vinyl in a conjugated diene bond unit is not especially limited, and is preferably 10% by mol or more and 75% by mol or less, and more preferably 20% by mol or more and 65% by mol or less.

When the amount of vinyl bond falls in the above-described range, balance between a low hysteresis loss property and wet skid resistance obtained in the form of a vulcanizate, abrasion resistance, and fracture strength tend to be more excellent. Here, if the modified diene-based polymer is a copolymer of butadiene and styrene, the amount of bound vinyl (the amount of a 1,2-bond) in a butadiene bond unit can be obtained by Hampton method (R. R. Hampton, Analytical Chemistry, 21, 923 (1949)). Specifically, it can be measured by a method described in the examples below.

In the microstructure of the conjugated diene-based polymer of the present embodiment, when the amounts of the bonds in the conjugated diene-based polymer are respectively in the above-described ranges, and the glass transition temperature of the conjugated diene-based polymer is in a range of -70°C or more and -15°C or less, there is a tendency that a vulcanizate more excellent in balance between a low hysteresis loss property and wet skid resistance can be obtained. The glass transition temperature is defined as a peak top (an inflection point) of a DSC differential curve obtained by recording a DSC curve during temperature increase in a prescribed temperature range in accordance with ISO 22768:2006. Specifically, it can be measured in accordance with a method described in the examples below.

If the conjugated diene-based polymer of the present embodiment is a conjugated diene-aromatic vinyl copolymer, it preferably contains a few or no blocks in which 30 or more aromatic vinyl units are chained. More specifically, if the copolymer is a butadiene-styrene copolymer, in employing a known method in which the copolymer is decomposed by Kolthoff method (a method described by I. M. Kolthoff, et al., J. Polym. Sci. 1, 429 (1946)) to analyze the amount of polystyrene insoluble in methanol, blocks in each of which 30 or more aromatic vinyl units are chained are preferably 5.0% by mass or less, and more preferably 3.0% by mass or less based on the total amount of the copolymer.

From the viewpoint of improving fuel efficiency, if the conjugated diene-based polymer of the present embodiment is a conjugated diene-aromatic vinyl copolymer, a larger proportion of an aromatic vinyl unit is preferably present singly.

Specifically, if the copolymer is a butadiene-styrene copolymer, when the copolymer is decomposed by employing a method through ozonolysis known as a method of Tanaka et al., (Polymer, 22, 1721 (1981)) to analyze a styrene chain distribution by GPC, it is preferable that the amount of isolated styrene, based on the whole amount of bound styrene, is 40% by mass or more, and that the amount of a chain styrene structure consisting of 8 or more chained styrene is 5.0% by mass or less.

In this case, a resultant vulcanized rubber tends to attain excellent performance of particularly low hysteresis loss.

### (Coupling Step)

The production method for a conjugated diene-based polymer of the present embodiment includes the coupling step of coupling, with a coupling agent, the conjugated diene-based polymer obtained through the above-described polymerizing and branching step. The coupling step is, for example, preferably a coupling step performed on an active end of the conjugated diene-based polymer with a tri- or higher functional reactive compound (hereinafter also referred to as a "coupling agent") or with a coupling agent having a nitrogen atom-containing group.

In the coupling step, for example, one end of an active end of the conjugated diene-based polymer is subjected to a coupling reaction with a coupling agent or a modifier having a nitrogen atom-containing group, and thus, a conjugated diene-based polymer can be obtained.

### (Coupling Agent)

In the production method for a conjugated diene-based polymer of the present embodiment, the coupling agent used in the coupling step may have any structure as long as it is a tri- or higher functional reactive compound, and is preferably a tri- or higher functional reactive compound having a silicon atom.

Examples of the tri- or higher functional reactive compound having a silicon atom include, but are not limited to, a halogenated silane compound, an epoxidized silane compound, a vinylated silane compound, an alkoxysilane compound, and an alkoxysilane compound containing a nitrogen-containing group.

Examples of the halogenated silane compound used as the coupling agent include, but are not limited to, methyltrichlorosilane, tetrachlorosilane, tris(trimethylsiloxy)chlorosilane, tris(dimethylamino)chlorosilane, hexachlorodisilane, bis(trichlorosilyl)methane, 1,2-bis(trichlorosilyl)ethane, 1,2-bis(methyldichlorosilyl)ethane, 1,4-bis(trichlorosilyl)butane, and 1,4-bis(methyldichlorosilyl)butane.

Examples of the epoxidized silane compound used as the coupling agent include, but are not limited to, 3-glycidoxypropyltrimethoxysilane, 3-glycidoxypropyltriethoxysilane, 3-glycidoxypropylmethyldiethoxysilane, and epoxy-modified silicone.

Examples of the alkoxysilane compound used as the coupling agent include, but are not limited to, tetramethoxysilane, tetraethoxysilane, triphenoxymethylsilane, 1,2-bis(triethoxysilyl)ethane, and methoxy-substituted polyorganosiloxane.

### (Modifier having Nitrogen Atom-containing Group)

Examples of the modifier having a nitrogen atom-containing group include, but are not limited to, an isocyanate compound, an isothiocyanate compound, an isocyanuric acid derivative, a nitrogen atom group-containing carbonyl compound, a nitrogen atom group-containing vinyl compound, and a nitrogen atom group-containing epoxy compound.

In the modifier having a nitrogen atom-containing group, a nitrogen atom-containing functional group used therein is preferably an amine compound not having active hydrogen, and examples include a tertiary amine compound, a protected amine compound in which the active hydrogen is protected by a protecting group, an imine compound represented by a general formula, -N=C, and an alkoxysilane compound bonded to the nitrogen atom-containing group.

Examples of the isocyanate compound used as the modifier having a nitrogen atom-containing group include, but are not limited to, 2,4-tolylene diisocyanate, 2,6-tolylene diisocyanate, diphenylmethane diisocyanate, polymeric diphenylmethane diisocyanate (C-MDI), phenyl isocyanate, isophorone diisocyanate, hexamethylene diisocyanate, butyl isocyanate, and 1,3,5-benzene triisocyanate.

Examples of the isocyanuric acid derivative used as the modifier having a nitrogen atom-containing group include, but are not limited to, 1,3,5-tris(3-trimethoxysilylpropyl)isocyanurate, 1,3,5-tris(3-triethoxysilylpropyl)isocyanurate, 1,3,5-tri(oxirane-2-yl)-1,3,5-triazinane-2,4,6-trione, 1,3,5-tris(isocyanatomethyl)-1,3,5-triazinane-2,4,6-trione, and 1,3,5-trivinyl-1,3,5-triazinane-2,4,6-trione.

Examples of the carbonyl compound used as the modifier having a nitrogen atom-containing group include, but are not limited to, 1,3-dimethyl-2-imidazolidinone, 1-methyl-3-ethyl-2-imidazolidinone, 1-methyl-3-(2-methoxyethyl)-2-imidazolidinone, N-methyl-2-pyrolidone, N-methyl-2-piperidone, N-methyl-2-quinolone, 4,4'-bis(diethylamino)benzophenone, 4,4'-bis(dimethylamino)benzophenone, methyl-2-pyridyl ketone, methyl-4-pyridyl ketone, propyl-2-pyridyl ketone, di-4-pyridyl ketone, 2-benzoylpyridine, N,N,N',N'-tetramethylurea, N,N-dimethyl-N',N'-diphenylurea, methyl N,N-diethylcarbamate, N,N-diethylacetamide, N,N-dimethyl-N',N'-dimethylaminoacetamide, N,N-dimethyl picolinic acid amide, and N,N-dimethyl isonicotinic acid amide.

Examples of the vinyl compound used as the modifier having a nitrogen atom-containing group include, but are not limited to, N,N-dimethylacrylamide, N,N-dimethylmethacrylamide, N-methylmaleimide, N-methylphthalimide, N,N-bistrimethylsilylacrylamide, morpholinoacrylamide, 3-(2-dimethylaminoethyl)styrene, (dimethylamino)dimethyl-4-vinylphenylsilane, 4,4'-vinylidene bis(N,N-dimethylaniline), 4,4'-vinylidene bis(N,N-dimethylaniline), 1,1-bis(4-morpholinophenyl)ethylene, and 1-phenyl-1-(4-N,N-dimethylaminophenyl)ethylene.

An example of the epoxy compound used as the modifier having a nitrogen atom-containing group includes, but is not limited to, an epoxy group-containing hydrocarbon compound bonded to an amino group, which may further have an epoxy group bonded to an ether group. An example of such an epoxy compound includes, but is not limited to, an epoxy compound represented by a general formula (i):

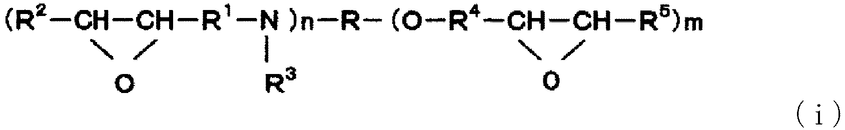

In the formula (i), R represents a bivalent or higher hydrocarbon group, or a bivalent or higher organic group having at least one polar group selected from a polar group having oxygen such as ether, epoxy or ketone, a polar group having sulfur such as thioether or thioketone, and a polar group having nitrogen such as a tertiary amino group or an imino group.

The bivalent or higher hydrocarbon group may be a saturated or unsaturated linear, branched or cyclic hydrocarbon group, and encompasses an alkylene group, an alkenylene group, a phenylene group and the like. It is preferably a hydrocarbon group having 1 to 20 carbon atoms. Examples include methylene, ethylene, butylene, cyclohexylene, 1,3-bis(methylene)-cyclohexane, 1,3-bis(ethylene)-cyclohexane, o-, m- or p-phenylene, m- or p-xylene, and bi(phenylene)-methane.

In the formula (i), R¹ and R⁴ each represent a hydrocarbon group having 1 to 10 carbon atoms, and R¹ and R⁴ may be the same as or different from each other.

In the formula (i), R² and R⁵ each represent hydrogen or a hydrocarbon group having 1 to 10 carbon atoms, and R² and R⁵ may be the same as or different from each other.

In the formula (i), R³ represents a hydrocarbon group having 1 to 10 carbon atoms, or a structure represented by the following formula (ii).

R¹, R² and R³ may be mutually bonded to form a cyclic structure.

R³ representing a hydrocarbon group may be mutually bonded to R to form a cyclic structure. In one aspect of the cyclic structure, N and R bonded to R³ may be directly bonded to each other.

In the formula (i), n represents an integer of 1 or more, and m represents 0 or an integer of 1 or more.

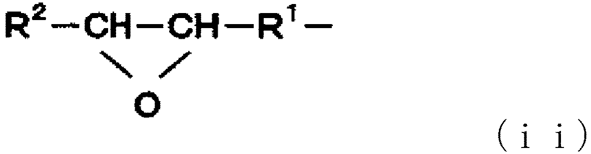

In the formula (ii), R¹ and R² are defined in the same manner as R¹ and R² in the formula (i), and R¹ and R² may be the same as or different from each other.

The epoxy compound used as the modifier having a nitrogen atom-containing group is preferably one having an epoxy group-containing hydrocarbon group, and more preferably one having a glycidyl group-containing hydrocarbon group.

Examples of the epoxy group-containing hydrocarbon group bonded to an amino group or an ether group are not especially limited, but include a glycidylamino group, a diglycidylamino group and a glycididoxy group. A more preferable molecular structure is an epoxy group-containing compound having a glycidylamino group or a diglycidylamino group, and a glycididoxy group, and an example includes a compound represented by the following general formula (iii):

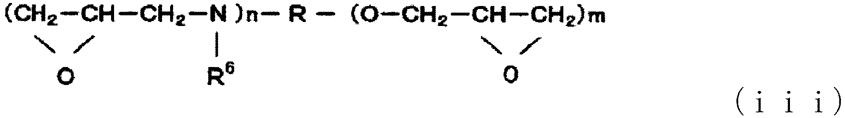

In the formula (iii), R is defined in the same manner as R in the formula (i), and R⁶ represents a hydrocarbon group having 1 to 10 carbon atoms, or a structure represented by the following formula (iv).

R⁶ representing a hydrocarbon group may be mutually bonded to R to form a cyclic structure, and in one aspect of this structure, N and R bonded to R⁶ may be directly bonded to each other.

In the formula (iii), n represents an integer of 1 or more, and m represents 0 or an integer of 1 or more.

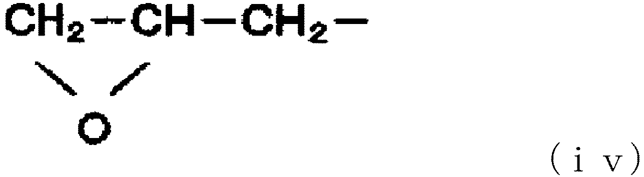

The epoxy compound used as the modifier having a nitrogen atom-containing group is particularly preferably a compound having, in a molecule, 1 or more diglycidylamino groups and 1 or more glycidoxy groups.

Examples of the epoxy compound used as the modifier having a nitrogen atom-containing group include, but are not limited to, N,N-diglycidyl-4-glycidoxyaniline, 1-N,N-diglycidylaminomethyl-4-glycidoxy-cyclohexane, 4-(4-glycidoxyphenyl)-(N,N-diglycidyl)aniline, 4-(4-glycidoxyphenoxy)-(N,N-diglycidyl)aniline, 4-(4-glycidoxybenzyl)-(N,N-diglycidyl)aniline, 4-(N,N'-diglycidyl-2-piperazinyl)-glycidoxybenzene, 1,3-bis(N,N-diglycidylaminomethyl)cyclohexane, N,N,N',N'-tetraglycidyl-m-xylenediamine, 4,4-methylene-bis(N,N-diglycidylaniline), 1,4-bis(N,N-diglycidylamino)cyclohexane, N,N,N',N'-tetraglycidyl-p-phenylenediamine, 4,4'-bis(diglycidylamino)benzophenone, 4-(4-glycidylpiperazinyl)-(N,N-diglycidyl)aniline, 2-[2-(N,N-diglycidylamino)ethyl]-1-glycidylpyrrolidine, N,N-diglycidylaniline, 4,4'-diglycidyl-dibenzylmethylamine, N,N-diglycidylaniline, N,N-diglycidyl ortho-toluidine, and N,N-diglycidylaminomethyl cyclohexane. Among these, particularly preferable examples include N,N-diglycidyl-4-glycidoxyaniline, and 1,3-bis(N,N-diglycidylaminomethyl)cyclohexane.

Examples of the alkoxysilane compound used as the modifier having a nitrogen atom-containing group include, but are not limited to, 3-dimethylaminopropyltrimethoxysilane, 3-dimethylaminopropylmethyldimethoxysilane, 3-diethylaminopropyltriethoxysilane, 3-morpholinopropyltrimethoxysilane, 3-piperidinopropyltriethoxysilane, 3-hexamethyleneiminopropylmethyldiethoxysilane, 3-(4-methyl-1-piperazino)propyltriethoxysilane, 1-[3-(triethoxysilyl)-propyl]-3-methylhexahydropyrimidine, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 3-dimethylamino-2-(dimethylaminomethyl)propyltrimethoxysilane, bis(3-dimethoxymethylsilylpropyl)-N-methylamine, bis(3-trimethoxysilylpropyl)-N-methylamine, bis(3-triethoxysilylpropyl)methylamine, tris(trimethoxysilyl)amine, tris(3-trimethoxysilylpropyl)amine, N,N,N',N'-tetra(3-trimethoxysilylpropyl)ethylenediamine, 3-isocyanatopropyltrimethoxysilane, 3-cyanopropyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2-2-dimethoxy-1-(4-triemthoxysilylbutyl)-1-aza-2-silacylcohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, 2,2-dimethoxy-1-methyl-1-aza-2-silacyclopentane, 2,2-dimethoxy-8-(4-methylpiperazinyl)methyl-1,6-dioxa-2-silacyclooctane, and 2,2-dimethoxy-8-(N,N-diethylamino)methyl-1,6-dioxa-2-silacyclooctane.

Examples of a compound, used as the modifier having a nitrogen atom-containing group, and having an unsaturated bond and a protected amine in a molecule as a protected amine compound capable of forming primary or secondary amine include, but are not limited to, 4,4'-vinylidenebis[N,N-bis(trimethylsilyl)aniline], 4,4'-vinylidenebis[N,N-bis(triethylsilyl)aniline], 4,4'-vinylidenebis[N,N-bis(t-butyldimethylsilyl)aniline], 4,4'-vinylidenebis[N-methyl-N-(trimethylsilyl)aniline], 4,4'-vinylidenebis[N-ethyl-N-(trimethylsilyl)aniline], 4,4'-vinylidenebis[N-methyl-N-(triethylsilyl)aniline], 4,4'-vinylidenebis[N-ethyl-N-(triethylsilyl)aniline], 4,4'-vinylidenebis[N-methyl-N-(t-butyldimethylsilyl)aniline], 4,4'-vinylidenebis[N-ethyl-N-(t-butyldimethylsilyl)aniline], 1-[4-N,N-bis(trimethylsilyl)aminophenyl]-1-[4-N-methyl-N-(trimethylsilyl)aminophenyl]ethylene, and 1-(4-N,N-bis(trimethylsilyl)aminophenyl]-1-[4-N,N-dimethylaminophenyl]ethylene.

Examples of a compound, used as the modifier having a nitrogen atom-containing group, and having an alkoxysilane and a protected amine in a molecule as a protected amine compound capable of forming primary or secondary amine include, but are not limited to, N,N-bis(trimethylsilyl)aminopropyltrimethoxysilane, N,N-bis(trimethylsilyl)aminopropylmethyldimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethylmethyldiethoxysilane, N,N-bis(triethylsilyl)aminopropylmethyldiethoxysilane, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopetnane, and 2,2-dimethoxy-1-methyl-1-aza-2-silacyclopentane.

Particularly preferable examples of the alkoxysilane compound used as the modifier having a nitrogen atom-containing group include, but are not limited to, tris(3-trimethoxysilylpropyl)amine, tris(3-triethoxysilylpropyl)amine, tris(3-tripropoxysilylpropyl)amine, bis(3-trimethoxysilylpropyl)-[3-(2,2-dimethoxy-1-aza-2-silacyclopentane)propyl]amine, tetrakis(3-trimethoxysilylpropyl)-1,3-propanediamine, tris(3-trimethoxysilylpropyl)-[3-(1-methoxy-2-trimethylsilyl-1-sila-2-azacyclopentane)propyl]-1,3-propanediamine, tris(3-trimethoxysilylpropyl)-[3-(1-methoxy-2-methyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)propyl]-1,3-bisaminomethylcyclohexane, tetrakis(3-trimethoxysilylpropyl)-1,6-hexamethylenediamine, pentakis(3-trimethoxysilylpropyl)-diethylenetriamine, tris(3-trimethoxysilylpropyl)-methyl-1,3-propanediamine, tetrakis[3-(2,2-dimethoxy-1-aza-2-silacyclopentane)propyl]silane, bis(3-trimethoxysilylpropyl)-bis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-1-trimethylsilyl-1-sila-2-azacyclopentane)propyl]silane, 3-tris[2-(2,2-dimethoxy-1-aza-2-silacyclopentane)ethoxy]silyl-1-trimethoxysilylpropane, 1-[3-(1-methoxy-2-trimethylsilyl-1-sila-2-azacyclopentane)propyl]-3,4,5-tris(3-trimethoxysilylpropyl)-cyclohexane, 1-[3-(2,2-dimethoxy-1-aza-2-silacyclopentane)propyl]-3,4,5-tris(3-trimethoxysilylpropyl)-cyclohexane, 3,4,5-tris(3-trimethoxysilylpropyl)-cyclohexyl-[3-(2,2-dimethoxy-1-aza-2-silacyclopentane)propyl] ether, (3-trimethoxysilylpropyl) phosphate, bis(3-trimethoxysilylpropyl)-[3-(2,2-dimethoxy-1-aza-2-silacyclopentane)propyl] phosphate, bis[3-(2,2-dimethoxy-1-aza-2-silacyclopentane)propyl]-(3-trimethoxysilylpropyl) phosphate, and tris[3-(2,2-dimethoxy-1-aza-2-silacyclopentane)propyl] phosphate.

### (Preferable Structure of Conjugated Diene-based Polymer)

The conjugated diene-based polymer of the present embodiment preferably contains a structure that is represented by any one of the following general formula (i) and the formulas (A) to (C), and is derived from a compound having a nitrogen atom-containing group.

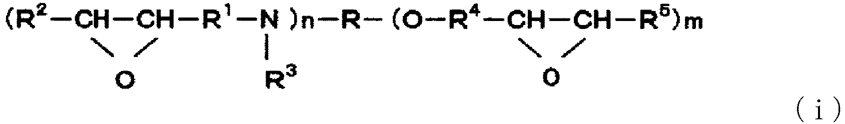

In the formula (i), R represents a bivalent or higher hydrocarbon group, or a bivalent or higher organic group having at least one polar group selected from a polar group having oxygen such as ether, epoxy or ketone, a polar group having sulfur such as thioether or thioketone, and a polar group having nitrogen such as a tertiary amino group or an imino group.

The bivalent or higher hydrocarbon group may be a saturated or unsaturated linear, branched or cyclic hydrocarbon group, and encompasses an alkylene group, an alkenylene group, a phenylene group and the like. It is preferably a hydrocarbon group having 1 to 20 carbon atoms. Examples include methylene, ethylene, butylene, cyclohexylene, 1,3-bis(methylene)-cyclohexane, 1,3-bis(ethylene)-cyclohexane, o-, m- or p-phenylene, m- or p-xylene, and bi(phenylene)-methane.

In the formula (i), R¹ and R⁴ each represent a hydrocarbon group having 1 to 10 carbon atoms, and R¹ and R⁴ may be the same as or different from each other.

In the formula (i) R² and R⁵ each represent a hydrocarbon group having 1 to 10 carbon atoms, and R² and R⁵ may be the same as or different from each other.

In the formula (i), R³ represents a hydrocarbon group having 1 to 10 carbon atoms, or a structure represented by the following formula (ii).

R¹, R² and R³ may be mutually bonded to form a cyclic structure.

R³ representing a hydrocarbon group may be mutually bonded to R to form a cyclic structure. In one aspect of the cyclic structure, N and R bonded to R³ may be directly bonded to each other.

In the formula (i), n represents an integer of 1 or more, and m represents 0 or an integer of 1 or more.

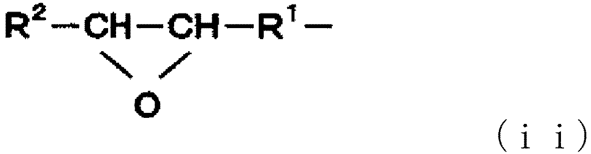

In the formula (ii), R¹ and R² are defined in the same manner as R¹ and R² in the formula (i), and R¹ and R² may be the same as or different from each other. 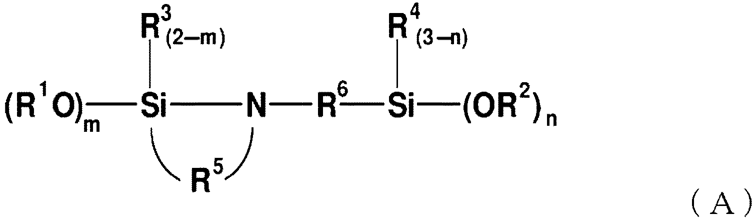
wherein R¹ to R⁴ each independently represent an alkyl group having 1 to 20 carbon atoms or an aryl group having 6 to 20 carbon atoms, R⁵ represents an alkylene group having 1 to 10 carbon atoms, R⁶ represents an alkylene group having 1 to 20 carbon atoms,
m represents an integer of 1 or 2, n represents an integer of 2 or 3, (m + n) is an integer of 4 or more, and each of R¹ to R⁴, if present in a plural number, is respectively independent.

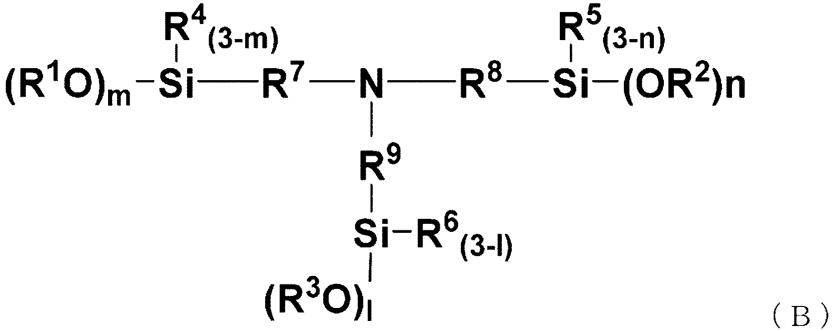

wherein R¹ to R⁶ each independently represent an alkyl group having 1 to 20 carbon atoms or an aryl group having 6 to 20 carbon atoms, R⁷ to R⁹ each independently represent an alkylene group having 1 to 20 carbon atoms,
m, n, and l each independently represent an integer of 1 to 3, (m + n + 1) is an integer of 4 or more, and each of R¹ to R⁶, if present in a plural number, is respectively independent.

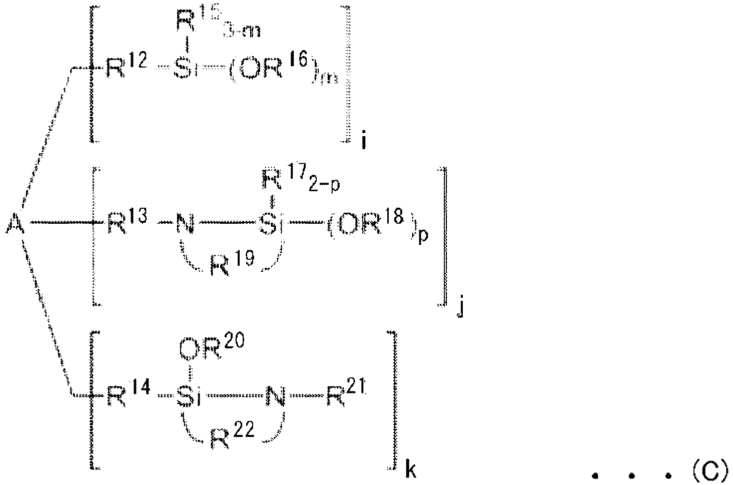

wherein R¹² to R¹⁴ each independently represent a single bond or an alkylene group having 1 to 20 carbon atoms, R¹⁵ to R¹⁸ and R²⁰ each independently represent an alkyl group having 1 to 20 carbon atoms, R¹⁹ and R²² each independently represent an alkylene group having 1 to 20 carbon atoms, R²¹ represents an alkyl group or a trialkyl silyl group having 1 to 20 carbon atoms,
m represents an integer of 1 to 3, p represents 1 or 2,
each of R¹² to R²², m and p, if present in a plural number, is respectively independent, and may be the same or different,
i represents an integer of 0 to 6, j represents an integer of 0 to 6, k represents an integer of 0 to 6, (i + j + k) is an integer of 4 to 10,
and A represents a hydrocarbon group having 1 to 20 carbon atoms, or an organic group having at least one atom selected from the group consisting of an oxygen atom, a nitrogen atom, a silicon atom, a sulfur atom, and a phosphorus atom, and not having active hydrogen.

Examples of the modifier having a nitrogen atom-containing group represented by formula (A) include, but are not limited to, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy,2-methyl-1-(3-trimethoxysilylpropyl)-1-aza-2-silacyclopentane, 2-ethoxy,2-ethyl-1-(3-triethoxysilylpropyl)-1-aza-2-silacyclopentane, 2-methoxy,2-methyl-1-(3-dimethoxymethylsilylpropyl)-1-aza-2-silacyclopentane, and 2-ethoxy,2-ethyl-1-(3-diethoxyethylsilylpropyl)-1-aza-2-silacyclopentane.

Among these, from the viewpoint of reactivity and interactivity between a functional group of the modifier having a nitrogen atom-containing group and an inorganic filler such as silica, and from the viewpoint of processability, it is preferable that m is 2 and that n is 3. Specifically, 2,2-dimethoxy-1-(3-trimethoxysilylpropyl)-1-aza-2-silacyclopentane and 2,2-diethoxy-1-(3-triethoxysilylpropyl)-1-aza-2-silacyclopentane are preferred.

The reaction temperature, the reaction time and the like in causing the modifier having a nitrogen atom-containing group represented by formula (A) to react with the polymer active end are not especially limited, and it is preferable to perform the reaction at 0°C or more and 120°C or less for 30 seconds or more.

A total mole number of an alkoxy group bonded to a silyl group of the compound used as the modifier having a nitrogen atom-containing group represented by formula (A) is preferably 0.6 or more times and 3.0 or less times, more preferably 0.8 or more times and 2.5 or less times, and further preferably 0.8 or more and 2.0 or less times of a mole number of an alkaline metal compound and/or an alkaline earth metal compound of a polymerization initiator to be added. From the viewpoint that the thus obtained conjugated diene-based polymer has sufficient modification ratio and molecular weight and has a branch structure, the total mole number is preferably 0.6 times or more, and a branched polymer component is preferably obtained by coupling polymer ends for improving processability, and in addition, from the viewpoint of cost of a modifier, the total mole number is preferably 3.0 times or less.

More specific mole number of the polymerization initiator is preferably 3.0-fold moles or more, and more preferably 4.0-fold moles or more relative to the mole number of the modifier.

Examples of the modifier having a nitrogen atom-containing group represented by formula (B) include, but are not limited to, tris(3-trimethoxysilylpropyl)amine, tris(3-methyldimethoxysilylpropyl)amine, tris(3-triethoxysilylpropyl)amine, tris(3-methyldiethoxysilylpropyl) amine, tris(trimethoxysilylmethyl)amine, tris(2-trimethoxysilylethyl)amine, and tris(4-trimethoxysilylbutyl) amine.

Among these, from the viewpoint of reactivity and interactivity between a functional group of the modifier and an inorganic filler such as silica, and from the viewpoint of processability, it is preferable that n, m and 1 are all 3. Specific preferable examples include tris(3-trimethoxysilylpropyl)amine, and tris(3-triethoxysilylpropyl)amine.

The reaction temperature, the reaction time and the like in causing the modifier having a nitrogen atom-containing group represented by formula (B) to react with the polymer active end are not especially limited, and it is preferable to perform the reaction at 0°C or more and 120°C or less for 30 seconds or more.

A total mole number of an alkoxy group bonded to a silyl group of the compound used as the modifier represented by formula (B) is preferably 0.6 or more times and 3.0 or less times, more preferably 0.8 or more times and 2.5 or less times, and further preferably 0.8 or more times and 2.0 or less times of a mole number of lithium contained in a polymerization initiator to be added. From the viewpoint that the conjugated diene-based polymer has sufficient modification ratio and molecular weight and has a branch structure, the total mole number is preferably 0.6 times or more, and a branched polymer component is preferably obtained by coupling polymer ends for improving processability, and in addition, from the viewpoint of cost of a modifier, the total mole number is preferably 3.0 times or less.

More specific mole number of the polymerization initiator is preferably 4.0-fold moles or more, and more preferably 5.0-fold moles or more relative to the mole number of the modifier.

In formula (C), A is preferably represented by any one of the following general formulas (II) to (V): 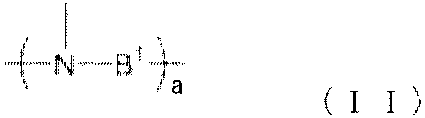
wherein B¹ represents a single bond or a hydrocarbon group having 1 to 20 carbon atoms, a represents an integer of 1 to 10, and B¹, if present in a plural number, is respectively independent; 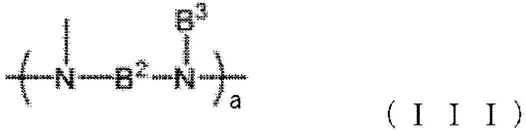
wherein B² represents a single bond or a hydrocarbon group having 1 to 20 carbon atoms, B³ represents an alkyl group having 1 to 20 carbon atoms, a represents an integer of 1 to 10, and each of B² and B³, if present in a plural number, is respectively independent; 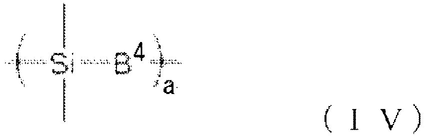
wherein B⁴ represents a single bond or a hydrocarbon group having 1 to 20 carbon atoms, a represents an integer of 1 to 10, and B⁴, if present in a plural number, is respectively independent; and 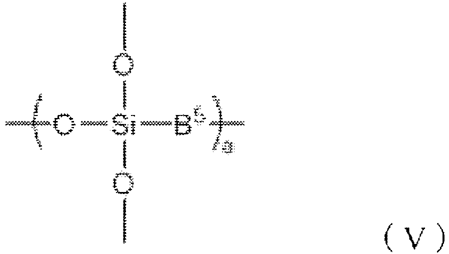
wherein B⁵ represents a single bond or a hydrocarbon group having 1 to 20 carbon atoms, a represents an integer of 1 to 10, and B⁵, if present in a plural number, is respectively independent.

Examples of the modifier having a nitrogen atom-containing group represented by formula (C) wherein A is represented by formula (II) include, but are not limited to, tris(3-trimethoxysilylpropyl)amine, bis(3-trimethoxysilylpropyl)-[3-(2,2-dimethoxy-1-aza-2-silacyclopentane)propyl]amine, bis[3-(2,2-dimethoxy-1-aza-2-silacyclopentane)propyl]-(3-trimethoxysilylpropyl)amine, tris[3-(2,2-dimethoxy-1-aza-2-silacyclopentane)propyl]amine, tris(3-ethoxysilylpropyl)amine, bis(3-triethoxysilylpropyl)-[3-(2,2-diethoxy-1-aza-2-silacylopentane)propyl]amine, bis[3-(2,2-diethoxy-1-aza-2-silacyclopentane)propyl]-(3-triethoxysilylpropyl)amine, tris[3-(2,2-diethoxy-1-aza-2-silacyclopentane)propyl]amine, tetrakis(3-trimethoxysilylpropyl)-1,3-propanediamine, tris(3-trimethoxysilylpropyl)-[3-(2,2-dimethoxy-1-aza-2-silacyclopentane)propyl]-1,3-propanediamine, bis(3-trimethoxysilylpropyl)-bis[3-(2,2-dimethoxy-1-aza-2-silacyclopentane)propyl]-1,3-propanedimane, tris[3-(2,2-dimethoxy-1-aza-2-silacyclopentane)propyl]-(3-trimethoxysilylpropyl)1,3-propanediamine, tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-azacyclopentane)propyl]-1,3-propanediamine, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-propanediamine, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-propanediamine, tris[3-(2,2-dimethoxy-1-aza-2-silacyclopentane)propyl]-[3-(1-methoxy-2-trimethylsilyl-1-sila-2-azacyclopentane)propyl]-1,3-propanediamine, tetrakis(3-triethoxysilylpropyl)-1,3-propanediamine, tris(3-triethoxysilylpropyl)-[3-(2,2-diethoxy-1-aza-2-silacyclopentane)propyl]-1,3-propanediamine, bis(3-triethoxysilylpropyl)-bis[3-(2,2-diethoxy-1-aza-2-silacyclopentane)propyl]-1,3-propanediamine, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-propanediamine, tris[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)proypl]-1,3-bisaminomethycyclohexane, bis(3-trimethoxysilylpropyl)-bis[3-(2,2-dimethoxy-1-aza-2-silacyclopentane)propyl]-1,3-bisaminomethylcyclohexane, tris[3-(2,2-dimethoxy-1-aza-2-silacyclopentane)propyl]-(3-trimethoxysilylpropyl)-1,3-bisaminomethylcyclohexane, tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-2-azacyclopentane)propyl]-1,3-bisaminomethylcyclohexane, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-bisaminomethylcyclohexane, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-biasminomethylcyclohexane, tris[3-(2,2-dimethoxy-1-aza-2-cyclopentane)propyl]-[3-(1-methoxy-2-trimethylsilyl-1-sila-2-azacyclopentane)propyl]-1,3-bisaminomethylcyclohexane, tetrakis(3-triethoxysilylpropyl)-1,3-propanediamine, tris(3-triethoxysilylpropyl)-[3-(2,2-diethoxy-1-aza-2-silacyclopentane)propyl]-1,3-bisaminomethylcyclohexane, bis(3-trimethoxysilylpropyl)-bis[3-(2,2-diethoxy-1-aza-2-silacyclopentane)propyl]-1,3-bisaminomethylcyclohexane, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-bisaminomethylcyclohexane, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-bisaminomethylcyclohexane, tris[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, tetrakis(3-trimethoxysilylpropyl)-1,6-hexamethylenediamine and pentakis(3-trimethoxysilylpropyl)-diethylenetriamine.

Examples of the modifier having a nitrogen atom-containing group represented by formula (C) wherein A is represented by formula (III) include, but are not limited to, tris(3-trimethoxysilylpropyl)-methyl-1,3-propanediamine, bis(2-trimethoxysilylpropyl)-[3-(2,2-dimethoxy-1-aza-2-silacyclopentane)propyl]-methyl-1,3-propanediamine, bis[3-(2,2-dimethoxy-1-aza-2-silacyclopentane)propyl]-(3-trimethoxysilylpropyl)-methyl-1,3-propanediamine, tris(3-triethoxysilylpropyl)-methyl-1,3-propanediamine, bis(2-triethoxysilylpropyl)-[3-(2,2-diethoxy-1-aza-2-silacyclopentane)propyl]-methyl-1,3-propanediamine, bis[3-(2,2-diethoxy-1-aza-2-silacyclopentane)propyl]-(3-triethoxysilylpropyl)-methyl-1,3-propanediamine, N¹,N¹'-(propane-1,3-diyl)bis(N¹-methyl-N³,N³-bis(3-(trimethoxysilyl)propyl)-1,3-propanediamine) and N¹-(3-(bis(3-(trimethoxysilyl)propyl)amino)propyl)-N¹-methyl-N³-(3-(methyl(3-(trimethoxysilyl)propyl)amino)propyl)-N³-(3-(trimethoxysilyl)propyl)-1,3-propanediamine.

Examples of the modifier having a nitrogen atom-containing group represented by formula (C) wherein A is represented by formula (IV) include, but are not limited to, tetrakis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-2-trimethylsilyl-1-sila-2-azacyclopentane)propyl]silane, bis(3-trimethoxysilylpropyl)-bis[3-(2,2-dimethoxy-1-aza-2-silacyclopentane)propyl]silane, (3-trimethoxysilyl)-[3-(1-methoxy-2-trimethylsilyl-1-sila-2-azacyclopentane)-bis[3-(2,2-dimethoxy-1-aza-2-silacyclopentane)propyl]silane, bis[3-(1-methoxy-2-trimethylsilyl-1-sila-2-azacyclopentane)-bis[3-(2,2-dimethoxy-1-aza-2-silacyclopentane)propyl]silane, tris(3-trimethoxysilylpropyl)-[3-(2,2-dimethoxy-1-aza-2-silacyclopentane)propyl]silane, bis(3-trimethoxysilylpropyl)-[3-(1-methoxy-2-trimethylsilyl-1-sila-2-azacyclopentane)propyl]-[3-(2,2-dimethoxy-1-aza-2-silacyclopentane)propyl]silane, bis[3-(1-methoxy-2-trimethylsilyl-1-sila-2-azacyclopentane)propyl]-bis(3-trimethoxysilylpropyl)silane, and bis(3-trimethoxysilylpropyl)-bis[3-(1-methoxy-2-methyl-1-sila-2-azacyclopentane)propyl]silane.

Examples of the modifier having a nitrogen atom-containing group represented by formula (C) wherein A is represented by formula (V) include, but are not limited to, 3-tris[2-(2,2-dimethoxy-1-aza-2-silacyclopentane)ethoxy]silyl-1-(2,2-dimethoxy-1-aza-2-silacyclopentane)propane, and 3-tris[2-(2,2-dimethoxy-1-aza-2-silacyclopentane)ethoxy]silyl-1-trimethoxysilylpropane.

In formula (C), A is preferably represented by formula (II) or formula (III), and k represents 0 (zero).

Such a modifier having a nitrogen atom-containing group tends to be easily available, and tends to make the resultant conjugated diene-based polymer more excellent in abrasion resistance and a low hysteresis loss property when in the form of a vulcanizate. Examples of such a modifier having a nitrogen atom-containing group include, but are not limited to, bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentane)propyl]-(3-trismethoxysilylpropyl)-methyl-1,3-propanediamine.

In formula (C), it is more preferable that A is represented by formula (II) or formula (III), and that k represents 0 (zero) and a represents an integer of 2 to 10 in formula (II) or formula (III).

Thus, abrasion resistance and a low hysteresis loss property when in the form of a vulcanizate tend to be more excellent.

Examples of such a modifier having a nitrogen atom-containing group include, but are not limited to, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and N¹-(3-(bis(3-(trimethoxysilyl)propyl)amino)propyl)-N¹-methyl-N³-(3-(methyl(3-(trimethoxysilyl)propyl)amino)propyl)-N³-(3-(trimethoxysilyl)propyl)-1,3-propanediamine.

An amount of the compound represented by the formula (C) to be added as the modifier having a nitrogen atom-containing group can be adjusted in such a manner that a reaction can be performed with a mole number of the modifier relative to a mole number of the conjugated diene-based polymer in a desired stoichiometric ratio, and thus, a desired star polymer structure tends to be attained.

A specific mole number of a polymerization initiator is preferably 5.0-fold moles or more, and more preferably 6.0-fold moles or more relative to the mole number of the modifier.

In this case, in formula (C), the number of functional groups ((m - 1) x i + p x j + k) of the modifier is preferably an integer of 5 to 10, and more preferably an integer of 6 to 10.

In the conjugated diene-based polymer of the present embodiment, a ratio of a nitrogen atom-containing polymer in the conjugated diene-based polymer is expressed as a modification ratio.

The modification ratio is preferably 60% by mass or more, more preferably 65% by mass or more, further preferably 70% by mass or more, still further preferably 75% by mass or more, much further preferably 80% by mass or more, and particularly preferably 82% by mass or more.

If the modification ratio is 60% by mass or more, there is a tendency that processability obtained when used for obtaining a vulcanizate is excellent, and abrasion resistance and a low hysteresis loss property when in the form of a vulcanizate are more excellent.

In the present embodiment, a condensation reaction step of performing a condensation reaction in the presence of a condensation accelerator may be performed after the coupling step, or before the coupling step.

The conjugated diene-based polymer of the present embodiment may be hydrogenated in a conjugated diene portion thereof.

A method for hydrogenating the conjugated diene portion of the conjugated diene-based polymer is not especially limited, and any of known methods can be employed.

As a suitable hydrogenation method, a method in which the hydrogenation is performed by blowing gaseous hydrogen into the polymer solution in the presence of a catalyst can be employed. Examples of the catalyst are not especially limited but include heterogeneous catalysts such as a catalyst containing a noble metal supported on a porous inorganic substance; and homogenous catalysts such as a catalyst obtained by reacting a solubilized salt of nickel, cobalt or the like with organic aluminum or the like, and a catalyst using metallocene such as titanocene. Among these catalysts, from the viewpoint that a mild hydrogenation condition can be selected, a titanocene catalyst is preferably used. In addition, hydrogenation of an aromatic group can be performed by using a noble metal-supported catalyst.

Examples of the hydrogenation catalyst include, but are not limited to, (1) a supported heterogeneous hydrogenation catalyst obtained by supporting a metal such as Ni, Pt, Pd or Ru on carbon, silica, alumina or diatomite, (2) what is called a ziegler catalyst using an organic acid salt of Ni, Co, Fe, Cr or the like, or a transition metal salt such as acetylacetone salt, and a reducing agent such as organic aluminum, and (3) what is called an organic metal complex such as an organic metal compound of Ti, Ru, Rh or Zr. Furthermore, examples of the hydrogenation catalyst are not especially limited but include known hydrogenation catalysts described in, for example, Japanese Patent Publication No. 42-8704, Japanese Patent Publication No. 43-6636, Japanese Patent Publication No. 63-4841, Japanese Patent Publication No. 1-37970, Japanese Patent Publication No. 1-53851, Japanese Patent Publication No. 2-9041 and Japanese Patent Laid-Open No. 8-109219. A preferable hydrogenation catalyst is a reaction mixture of a titanocene compound and a reducing organic metal compound.

In the method for producing the conjugated diene-based polymer of the present embodiment, a deactivator, a neutralizer or the like may be added if necessary to the resultant polymer solution after the coupling step.

Examples of the deactivator include, but are not limited to, water; and alcohols such as methanol, ethanol and isopropanol.

Examples of the neutralizer include, but are not limited to, carboxylic acids such as stearic acid, oleic acid and versatic acid (a mixture of highly branched carboxylic acids having 9 to 11 carbon atoms, mainly 10 carbon atoms); and an aqueous solution of an inorganic acid, and a carbon dioxide gas.

In the production method for a conjugated diene-based polymer of the present embodiment, from the viewpoint of preventing gel formation after the polymerization and from the viewpoint of improving stability in the processing, a rubber stabilizer is preferably added.

As the stabilizer for rubber, any of known stabilizers, not limited to the following, can be used, and preferable examples include antioxidants such as 2,6-di-tert-butyl-4-hydroxytoluene (hereinafter also referred to as "BHT"), n-octadecyl-3-(4'-hydroxy-3',5'-di-tert-butylphenol)propionate, and 2-methyl-4,6-bis[(octylthio)methyl]phenol.

In order to further improve the productivity of the conjugated diene-based polymer of the present invention and processability in obtaining a composition with a filler and the like compounded, a rubber softener can be added if necessary.

Examples of the rubber softener are not especially limited but include an extender oil, a liquid rubber, a resin or the like.

A preferable example of a method for adding the rubber softener to the conjugated diene-based polymer includes, but is not limited to, a method in which the rubber softener is added to a conjugated diene-based polymer solution to be mixed, and the resultant polymer solution containing the rubber softener is desolvated.

Preferable examples of the extender oil include an aroma oil, a naphthenic oil and a paraffin oil. Among these oils, from the viewpoint of environmental safety, oil bleeding prevention and wet grip characteristics, an aroma-alternative oil containing 3% by mass or less of a polycyclic aromatic (PCA) component according to the IP 346 is preferred. Examples of the aroma-alternative oil include TDAE (Threated Distillate Aromatic Extracts), MES (Mild Extraction Solvate) and the like mentioned in Kautschuk Gummi Kunststoffe 52 (12) 799 (1999), and RAE (Residual Aromatic Extracts).

Preferable examples of the liquid rubber include, but are not limited to, liquid polybutadiene and liquid styrene-butadiene rubber.

Effects of the addition of a liquid rubber are not only that processability in obtaining a composition by compounding the conjugated diene-based polymer and a filler or the like is improved but also that the glass transition temperature of the composition can be shifted toward a low temperature side, and thus, abrasion resistance, a low hysteresis loss property and a low temperature characteristic obtained in the form of a vulcanizate tend to be improved.

Preferable examples of the resin include, but are not limited to, an aromatic petroleum resin, a coumarone-indene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic/aromatic hydrocarbon resin, a coumarin-indene resin, a phenol resin, a p-tert-butylphenol-acetylene resin, a phenolformaldehyde resin, a xylene-formaldehyde resin, a monoolefin oligomer, a diolefin oligomer, an aromatic hydrocarbon resin, an aromatic petroleum resin, a hydrogenated aromatic hydrocarbon resin, a cyclic aliphatic hydrocarbon resin, a hydrogenated hydrocarbon resin, a hydrocarbon resin, a hydrogenated wood oil resin, a hydrogenated oil resin, and an ester of a hydrogenated oil resin and a monofunctional or polyfunctional alcohol. One of these resins may be singly used, or two or more of these may be used together. When hydrogenated, all unsaturated groups may be hydrogenated, or some may be left not hydrogenated.

Effects of the addition of a resin are not only that processability in obtaining a composition by compounding the conjugated diene-based polymer and a filler or the like is improved but also that fracture strength obtained in the form of a vulcanizate tends to be improved, and in addition, the glass transition temperature of the composition can be shifted toward a high temperature side, and hence wet skid resistance tends to be improved.

The amount of an extender oil, a liquid rubber or a resin or the like to be added as the rubber softener is not especially limited, and is preferably 1 part by mass or more and 60 parts by mass or less, more preferably 5 parts by mass or more and 50 parts by mass or less, and further preferably 10 parts by mass or more and 37.5 parts by mass or less based on 100 parts by mass of the modified conjugated diene-based polymer of the present embodiment.

When the rubber softener is added in an amount in the above-described range, processability in forming a composition by compounding the conjugated diene-based polymer and a filler or the like tends to be good, and fracture strength and abrasion resistance obtained in the form of a vulcanizate tend to be good.

### (Desolvation Step)

As a method for obtaining the resultant conjugated diene-based polymer from the polymer solution in the production method for a conjugated diene-based polymer of the present embodiment, any of known methods can be employed. Examples of the method are not especially limited but include a method in which the conjugated diene-based polymer is filtered after separating the solvent by steam stripping or the like, and the resultant is dehydrated and dried to obtain the conjugated diene-based polymer, a method in which the solution is concentrated in a flushing tank, and the resultant is devolatilized by using a bent extruder or the like, and a method in which the solution is directly devolatilized by using a drum dryer or the like.

### (Rubber Composition)

A rubber composition of the present embodiment contains a rubber component, and 5.0 parts by mass or more and 150 parts by mass or less of a filler based on 100 parts by mass of the rubber component.

From the viewpoint of improvement of low fuel consumption performance, processability and abrasion resistance, the rubber component contains 10 parts by mass or more of the conjugated diene-based polymer or the conjugated diene-based polymer composition based on the total amount (100 parts by mass) of the rubber component.

The filler preferably contains a silica-based inorganic filler.

When a silica-based inorganic filler is dispersed therein, the rubber composition of the present embodiment tends to be more excellent in processability obtained in forming a vulcanizate therefrom, and tends to be more excellent in abrasion resistance, fracture strength, and balance between a low hysteresis loss property and wet skid resistance obtained in the form of a vulcanizate.

Also when the rubber composition of the present embodiment is to be used in application to a vulcanized rubber such as a tire, a vehicle component such as an anti-vibration rubber, or shoes, a silica-based inorganic filler is preferably contained.

In the rubber composition of the present embodiment, a rubber-like polymer different from the conjugated diene-based polymer (hereinafter simply referred to as the "rubber-like polymer") may be used in combination with the conjugated diene-based polymer.

Examples of such a rubber-like polymer include, but are not limited to, a conjugated diene-based polymer or a hydrogenated product thereof, a random copolymer of a conjugated diene-based compound and a vinyl aromatic compound, or a hydrogenated product thereof, a block copolymer of a conjugated diene-based compound and a vinyl aromatic compound, or a hydrogenated product thereof, a non-diene-based polymer and a natural rubber.

Specific examples of the rubber-like polymer include, but are not limited to, a butadiene rubber or a hydrogenated product thereof, an isoprene rubber or a hydrogenated product thereof, styrene-based elastomers such as a styrene-butadiene rubber or a hydrogenated product thereof, and a styrene-butadiene block copolymer or a hydrogenated product thereof, a styrene-isoprene block copolymer or a hydrogenated product thereof, and an acrylonitrile-butadiene rubber or a hydrogenated product thereof.

Examples of the non-diene-based polymer include, but are not limited to, olefin-based elastomers such as an ethylene-propylene rubber, an ethylene-propylene-diene rubber, an ethylene-butene-diene rubber, an ethylene-butene rubber, an ethylene-hexene rubber and an ethylene-octene rubber, a butyl rubber, a brominated butyl rubber, an acrylic rubber, a fluorine rubber, a silicone rubber, a chlorinated polyethylene rubber, an epichlorohydrin rubber, an α,β-unsaturated nitrile-acrylic acid ester-conjugated diene copolymer rubber, a urethane rubber and a polysulfide rubber.

Examples of the natural rubber include, but are not limited to, smoked sheets of RSS Nos. 3 to 5, SMR and epoxidized natural rubber.

The above-described various rubber-like polymers may be in the form of a modified rubber imparted with a functional group having polarity such as a hydroxyl group or an amino group. For use in a tire, a butadiene rubber, an isoprene rubber, a styrene-butadiene rubber, a natural rubber and a butyl rubber are preferably used.

The weight average molecular weight of the rubber-like polymer is, from the viewpoint of balance between performance and processing characteristics, preferably 2,000 or more and 2,000,000 or less, and more preferably 5,000 or more and 1,500,000 or less. Besides, a rubber-like polymer having a low molecular weight, namely, what is called a liquid rubber, can be used. One of these rubber-like polymers may be singly used, or two or more of these may be used together.

If the rubber composition of the present embodiment is formed as a rubber composition containing the conjugated diene-based polymer and the rubber-like polymer, a content ratio (in a mass ratio) of the conjugated diene-based polymer to the rubber-like polymer is, in terms of (the conjugated diene-based polymer/the rubber-like polymer), preferably 10/90 or more and 100/0 or less, more preferably 20/80 or more and 90/10 or less, and further preferably 50/50 or more and 80/20 or less.

Accordingly, the rubber component contains, based on the total amount (100 parts by mass) of the rubber component, the conjugated diene-based polymer in an amount of preferably 10 parts by mass or more and 100 parts by mass or less, more preferably 20 parts by mass or more and 90 parts by mass or less, and further preferably 50 parts by mass or more and 80 parts by mass or less.

If the content ratio of (the conjugated diene-based polymer/the rubber-like polymer) falls in the above-described range, abrasion resistance and fracture strength obtained in the form of a vulcanizate are excellent, and balance between a low hysteresis loss property and wet skid resistance is satisfactory.

Examples of the filler contained in the rubber composition of the present embodiment include, but are not limited to, a silica-based inorganic filler, carbon black, a metal oxide, and a metal hydroxide. Among these, a silica-based inorganic filler is preferred.

One of these fillers may be singly used, or two or more of these may be used together.

A content of the filler in the rubber composition of the present embodiment is 5.0 parts by mass or more and 150 parts by mass, preferably 20 parts by mass or more and 100 parts by mass or less, and further preferably 30 parts by mass or more and 90 parts by mass or less based on 100 parts by mass of the rubber component containing the conjugated diene-based polymer.

A content of the filler in the rubber composition of the present embodiment is 5.0 parts by mass or more based on 100 parts by mass of the rubber component from the viewpoint of exhibiting the effect of the addition of the filler, and is 150 parts by mass or less based on 100 parts by mass of the rubber component from the viewpoint that the filler is sufficiently dispersed to attain practically sufficient processability and mechanical strength of the composition.

The silica-based inorganic filler is not especially limited, any of known fillers can be used, a solid particle containing SiO₂ or Si₃Al as a constituent unit is preferred, and a solid particle containing SiO₂ or Si₃Al as a principal component of a constituent unit is more preferred. Here, the principal component refers to a component contained in the silica-based inorganic filler in an amount of 50% by mass or more, preferably 70% by mass or more, and more preferably 80% by mass or more.

Specific examples of the silica-based inorganic filler include, but are not limited to, silica, clay, talc, mica, diatomite, wollastonite, montmorillonite, zeolite and inorganic fibrous substances such as glass fiber. Besides, examples include a silica-based inorganic filler having a hydrophobized surface, and a mixture of a silica-based inorganic filler and an inorganic filler excluding silica. Among these, from the viewpoint of strength and abrasion resistance, silica and glass fiber are preferred, and silica is more preferred. Examples of the silica include dry silica, wet silica and synthetic silicate silica. Among these silica, wet silica is preferred from the viewpoint that it is excellent in the effect of improving fracture strength and balance in wet skid resistance.

From the viewpoint of obtaining practically good abrasion resistance and fracture strength of the rubber composition, a nitrogen adsorption specific surface area, obtained by the BET adsorption method, of the silica-based inorganic filler is preferably 100 m²/g or more and 300 m²/g or less, and more preferably 170 m²/g or more and 250 m²/g or less. Besides, a silica-based inorganic filler having a comparatively small specific surface area (for example, a specific surface area of 200 m²/g or less) and a silica-based inorganic filler having a comparatively large specific surface area (for example, 200 m²/g or more) can be used in combination if necessary. In the present embodiment, if a silica-based inorganic filler having a comparatively large specific surface area (of, for example, 200 m²/g or more) is used in particular, the composition containing the conjugated diene-based polymer tends to be improved in dispersibility of silica, and be effective particularly in improvement of abrasion resistance, and be capable of being well-balanced in good fracture strength and a low hysteresis loss property.

A content of the silica-based inorganic filler in the rubber composition is preferably 5.0 parts by mass or more and 150 parts by mass or less, more preferably 20 parts by mass or more and 100 parts by mass or less based on 100 parts by mass of the rubber component containing the conjugated diene-based polymer. In the rubber composition of the present embodiment, the content of the silica-based inorganic filler is 5.0 parts by mass or more based on 100 parts by mass of the rubber component from the viewpoint of exhibiting the effect of the addition of the inorganic filler, and is 150 parts by mass or less based on 100 parts by mass of the rubber component from the viewpoint that the inorganic filler is sufficiently dispersed to attain practically sufficient processability and mechanical strength of the composition.

Examples of the carbon black include, but are not limited to, carbon blacks of SRF, FEF, HAF, ISAF and SAF classes. Among these, a carbon black having a nitrogen adsorption specific surface area of 50 m²/g or more and dibutyl phthalate (DBP) oil absorption of 80 mL/100 g or less is preferred.

In the rubber composition of the present embodiment, a content of the carbon black is preferably 0.5 parts by mass or more and 100 parts by mass or less, more preferably 3.0 parts by mass or more and 100 parts by mass or less, and further preferably 5.0 parts by mass or more and 50 parts by mass or less based on 100 parts by mass of the rubber component containing the conjugated diene-based polymer. In the rubber composition of the present embodiment, from the viewpoint of exhibiting performances required in use as a tire or the like such as dry grip performance and conductivity, the content of the carbon black is preferably 0.5 parts by mass or more based on 100 parts by mass of the rubber component, and is preferably 100 parts by mass or less based on 100 parts by mass of the rubber component from the viewpoint of dispersibility.

The metal oxide refers to a solid particle containing a principal component of a constituent unit represented by chemical formula MxOy (wherein M represents a metal atom, and x and y each independently represent an integer of 1 to 6).

Examples of the metal oxide include, but are not limited to, alumina, titanium oxide, magnesium oxide and zinc oxide.

Examples of the metal hydroxide include, but are not limited to, aluminum hydroxide, magnesium hydroxide and zirconium hydroxide.

The rubber composition of the present embodiment may contain a silane coupling agent. The silane coupling agent is preferably a compound that has a function to make close the interaction between the rubber component and the inorganic filler, has a group having affinity with or a binding property to both of the rubber component, and the silica-based inorganic filler, and contains, in one molecule, a sulfur bond portion and an alkoxysilyl group or silanol group portion. Examples of such a compound are not especially limited but include bis-[3-(triethoxysilyl)-propyl]-tetrasulfide, bis-[3-(triethoxysilyl)-propyl]-disulfide and bis-[2-(triethoxysilyl)-ethyl]-tetrasulfide.

In the rubber composition of the present embodiment, a content of the silane coupling agent is preferably 0.1 parts by mass or more and 30 parts by mass or less, more preferably 0.5 parts by mass or more and 20 parts by mass or less, and further preferably 1.0 part by mass or more and 15 parts by mass or less based on 100 parts by mass of the inorganic filler. If the content of the silane coupling agent falls in the aforementioned range, there is a tendency that the effect of the addition of the silane coupling agent can be more conspicuous.

The rubber composition of the present embodiment may contain a rubber softener from the viewpoint of improvement of the processability.

An amount of the rubber softener to be added is expressed as a sum of an amount of the rubber softener precedently contained in the conjugated diene-based polymer or another rubber-like polymer, and an amount of the rubber softener added in forming the rubber composition based on 100 parts by mass of the rubber component containing the conjugated diene-based polymer.

As the rubber softener, a mineral oil or a liquid or low molecular weight synthetic softer is suitably used.

A mineral oil-based rubber softener, which is used for softening, expanding and improving processability of a rubber and is designated as a process oil or an extender oil, is a mixture of an aromatic ring, a naphthene ring and a paraffin chain, and one in which the number of carbon atoms of the paraffin chain is 50% or more of the number of all carbon atoms is designated as a paraffin-based softener, one in which the number of carbon atoms of the naphthene ring is 30% or more and 45% or less of the number of all carbon atoms is designated as a naphthene-based softener, and one in which the number of aromatic carbon atoms exceeds 30% of the number of all carbon atoms is designated as an aromatic-based softener. When the conjugated diene-based polymer of the present embodiment is a copolymer of a conjugated diene compound and an aromatic vinyl compound, a rubber softener to be used is preferably one having an appropriate aromatic content because such a softener tends to fit with the copolymer.

In the rubber composition of the present embodiment, a content of the rubber softener is preferably 0 part by mass or more and 100 parts by mass or less, more preferably 10 parts by mass or more and 90 parts by mass or less, and further preferably 30 parts by mass or more and 90 parts by mass or less based on 100 parts by mass of the rubber component. If the content of the rubber softener is 100 parts by mass or less based on 100 parts by mass of rubber component, there is a tendency that the bleeding out is suppressed and the stickiness of the surface of the rubber composition is suppressed.

Examples of a method for mixing the conjugated diene-based polymer and another rubber-like polymer, a silica-based inorganic filler, carbon black or another filler, a silane coupling agent, and an additive such as a rubber softener include, but are not limited to, a melt-kneading method using a general mixer such as an open roll, a Banbury mixer, a kneader, a single shaft screw extruder, a twin shaft screw extruder or a multi-shaft screw extruder, and a method in which the respective components are melted and mixed followed by removal of a solvent by heating. Among these methods, the melt-kneading method using a roll, a banbury mixer, a kneader or an extruder is preferred from the viewpoint of productivity and high kneadability. Besides, either of a method in which the rubber component and other components: a filler, a silane coupling agent and an additive are kneaded all together or a method in which these are mixed dividedly in plural times is applicable.

The rubber composition of the present embodiment may be a vulcanized composition having been vulcanized with a vulcanizing agent. Examples of the vulcanizing agent include, but are not limited to, radical generators such as organic peroxides and azo compounds, oxime compounds, nitroso compounds, polyamine compounds, sulfur and sulfur compounds. The sulfur compounds include sulfur monochloride, sulfur dichloride, disulfide compounds and high molecular weight polysulfide compounds. In the rubber composition of the present embodiment, a content of the vulcanizing agent is preferably 0.01 parts by mass or more and 20 parts by mass or less, and more preferably 0.1 parts by mass or more and 15 parts by mass or less based on 100 parts by mass of the rubber component. As a vulcanizing method, any of known methods is applicable, and a vulcanization temperature is preferably 120°C or more and 200°C or less, and more preferably 140°C or more and 180°C or less.

For the vulcanization, a vulcanization accelerator may be used if necessary. As the vulcanization accelerator, any of known materials can be used, and examples include, but are not limited to, sulphenamide-based, guanidine-based, thiuram-based, aldehyde-amine-based, aldehyde-ammonia-based, thiazole-based, thiourea-based and dithiocarbamate-based vulcanization accelerators. Besides, examples of a vulcanization aid include, but are not limited to, zinc oxide and stearic acid. A content of the vulcanization accelerator is preferably 0.01 parts by mass or more and 20 parts by mass or less, and more preferably 0.1 parts by mass or more and 15 parts by mass or less based on 100 parts by mass of the rubber component.

The rubber composition of the present embodiment may contain, as long as the object of the present embodiment is not impaired, various additives such as another softener excluding those described above, a filler, a heat resistance stabilizer, an antistatic agent, a weathering stabilizer, an anti-ageing agent, a colorant and a lubricant. As another softener, any of known softeners can be used. Specific examples of another filler are not especially limited but include calcium carbonate, magnesium carbonate, aluminum sulfate and barium sulfate. As each of the heat resistance stabilizer, the antistatic agent, the weathering stabilizer, the anti-ageing agent, the colorant and the lubricant, any of known materials can be used.

The rubber composition of the present embodiment is suitably used as a rubber composition for a tire. In other words, a tire of the present embodiment contains the rubber composition.

The rubber composition for a tire is applicable to, but not limited to, various tires such as a fuel-efficient tire, an all-season tire, a high-performance tire and a studless tire; and various tire portions such as a tread, a carcass, a sidewall and a bead. In particular, since the rubber composition for a tire is excellent in abrasion resistance, fracture strength, and balance between a low hysteresis loss property and wet skid resistance obtained in the form of a vulcanizate, it is more suitably used as a tread of a fuel-efficient tire or a high-performance tire.

### Examples

The present embodiment will now be described in more detail with reference to specific examples and comparative examples, and it is noted that the present embodiment is not limited to the following examples and comparative examples at all.

Various physical properties of the examples and comparative examples were measured by the following methods.

### (Physical Property 1) Mooney Viscosity of Polymer

A conjugated diene-based polymer or a conjugated diene-based polymer coupled with a nitrogen atom-containing modifier (hereinafter also referred to as a "coupled conjugated diene-based polymer") was used as a sample to measure a Mooney viscosity by using a Mooney viscometer (trade name "VR1132" manufactured by Ueshima Seisakusho Co., Ltd.) in accordance with ISO 289 with an L-type rotor used.

A measurement temperature was 110°C when a conjugated diene-based polymer was used as a sample, and was 100°C when a coupled conjugated diene-based polymer was used as a sample.

First, a sample was preheated at the test temperature for 1 minute, the rotor was rotated at 2 rpm, and a torque was measured 4 minutes after as a Mooney viscosity (ML₍₁₊₄₎).

### (Physical Property 2) Mooney Stress Relaxation

A conjugated diene-based polymer or a coupled conjugated diene-based polymer was used as a sample to measure a Mooney viscosity by using a Mooney viscometer (trade name "VR1132" manufactured by Ueshima Seisakusho Co., Ltd.) in accordance with ISO 289 with an L-type rotor used, and thereafter, the rotation of the rotor was immediately stopped, and a torque of every 0.1 second in a period from 1.6 seconds to 5 seconds after the stoppage was recorded in terms of Mooney unit. The slope of a straight line in a double logarithmic plot of the torque and the time (sec) was obtained, and the absolute value was defined as Mooney stress relaxation (MSR).

### (Physical Property 3) Branch Number (Bn)

The branch number (Bn) of a conjugated diene-based polymer was measured by viscosity detector-equipped GPC-light scattering measurement as follows. A coupled conjugated diene-based polymer was used as a sample, and a gel permeation chromatography (GPC) measurement apparatus (trade name "GPCmax VE-2001" manufactured by Malvern Panalytical Ltd.) including a series of three columns using a polystyrene-based gel as a filler was used. The measurement was performed by using three detectors, that is, a light scattering detector, an RI detector, and a viscosity detector (trade name "TDA305" manufactured by Malvern Panalytical Ltd.) connected in the stated order. Based on standard polystyrene, an absolute molecular weight was obtained from results obtained by using the light scattering detector and the RI detector, and an intrinsic viscosity was obtained from results obtained by using the RI detector and the viscosity detector.

A straight-chain polymer was used under assumption of having an intrinsic viscosity [η] of 10^{-3.883} M^{0.771}, and a contracting factor (g') was calculated as a ratio in the intrinsic viscosity to each molecular weight. Herein, M represents the absolute molecular weight.

Thereafter, the thus obtained contracting factor (g') was used to calculate a branch number (Bn) defined as g' = 6 Bn/{(Bn + 1) (Bn + 2) } .

As an eluent, tetrahydrofuran (hereinafter also referred to as "THF") containing 5 mmol/L of triethylamine was used.

As the columns, a series of columns of trade names "TSKgel G4000HXL", "TSKgel G5000HXL" and "TSKgel G6000HXL" manufactured by Tosoh Corporation were connected and used.

Twenty (20) mg of a sample for the measurement was dissolved in 10 mL of THF to obtain a measurement solution, and 100 µL of the measurement solution was injected into the GPC measurement apparatus for performing the measurement under conditions of an oven temperature of 40°C and a THF flow rate of 1 mL/min.

### [Branch Number (Bn) of 1/2 Hi Polymer]

In the same manner as in the above-described measurement conditions for the branch number (Bn), a chromatogram of the absolute molecular weight was obtained based on a solution viscosity and a light scattering method by viscosity detector-equipped GPC-light scattering measurement.

Based on a height Hi of a peak top in the chromatogram of the absolute molecular weight (absolute molecular weight curve) (whereas if the absolute molecular weight curve had a plurality of peak tops, a height of a peak top having a maximum absolute molecular weight), the branch number of a polymer having a largest absolute molecular weight among at least two absolute molecular weights at a half height of Hi (1/2 Hi) on the absolute molecular weight curve (branch number (Bn) of a 1/2 Hi polymer) was calculated in accordance with the above-described measurement method for a branch number (Bn) .

### (Physical Property 4) Molecular Weight

Measurement Conditions 1: A conjugated diene-based polymer or a coupled conjugated diene-based polymer used as a sample was measured for a chromatogram using a GPC measurement apparatus (trade name "HLC-8320GPC" manufactured by Tosoh Corporation) including a series of three columns using a polystyrene-based gel as a filler with an RI detector (trade name "HLC8020" manufactured by Tosoh Corporation) used, and on the basis of a calibration curve obtained using standard polystyrene, a weight average molecular weight (Mw), a number average molecular weight (Mn) and a molecular weight distribution (Mw/Mn) were obtained.

As an eluent, THF (tetrahydrofuran) containing 5 mmol/L of triethylamine was used. As the columns, trade name "TSKguardcolumn Super MP(HZ)-H" manufactured by Tosoh Corporation connected, as a guard column at a previous stage, to a series of three columns of trade name "TSKgel Super Multipore HZ-H" manufactured by Tosoh Corporation were used.

Ten (10) mg of a sample for the measurement was dissolved in 10 mL of THF to obtain a measurement solution, and 10 µL of the measurement solution was injected into the GPC measurement apparatus for performing the measurement under conditions of an oven temperature of 40°C and a THF flow rate of 0.35 mL/min.

Among various samples having been subjected to the measurement under the above-described measurement conditions 1, a sample having a molecular weight distribution (Mw/Mn) less than 1.6 was subjected again to the measurement under measurement conditions 2 described below. With respect to samples having been subjected to the measurement under the measurement conditions 1 and found to have a molecular weight distribution of 1.6 or more, they were subjected to the measurement under measurement conditions 1.

Measurement Conditions 2: A conjugated diene-based polymer or a coupling conjugated diene-based polymer used as a sample was measured for a chromatogram using a GPC measurement apparatus including a series of three columns using a polystyrene-based gel as a filler, and on the basis of a calibration curve obtained using standard polystyrene, a weight average molecular weight (Mw), and a number average molecular weight (Mn) were obtained.

As an eluent, THF containing 5 mmol/L of triethylamine was used. As the columns, a guard column of trade name "TSKguardcolumn Super H-H" manufactured by Tosoh Corporation, and columns of trade names "TSKgel SuperH5000", "TSKgel SuperH6000", and "TSKgel SuperH7000" manufactured by Tosoh Corporation were used.

An RI detector (trade name "HLC8020" manufactured by Tosoh Corporation) was used under conditions of an oven temperature of 40°C and a THF flow rate of 0.6 mL/min. Ten (10) mg of a sample for the measurement was dissolved in 20 mL of THF to obtain a measurement solution, and 20 µL of the measurement solution was injected into the GPC measurement apparatus for performing the measurement.

With respect to a sample having been subjected to the measurement under the measurement conditions 1 and found to have a molecular weight distribution less than 1.6, they were subjected to the measurement under measurement conditions 2.

### (Physical Property 5) Modification Ratio

A modification ratio of a conjugated diene-based polymer was measured by column adsorption GPC as follows. A coupling conjugated diene-based polymer was used as a sample, and the measurement was performed by applying a characteristic that a modified basic polymer component adsorbs onto a GPC column using a silica-based gel as a filler.

A modification ratio was obtained by measuring an amount of adsorption onto a silica-based column based on a difference between a chromatogram measured by using a polystyrene-based column and a chromatogram measured by using a silica-based column obtained from a sample solution containing a sample and low molecular weight internal standard polystyrene.

Specifically, the measurement was performed as described below. A sample found to have a molecular weight distribution of 1.6 or more through the measurement under Measurement Conditions 1 of (Physical Property 4) described above was subjected to the measurement under Measurement Conditions 3 described below, and a sample found to have a molecular weight distribution less than 1.6 was subjected to the measurement under Measurement Conditions 4 described below.

Preparation of Sample Solution: Ten (10) mg of a sample and 5 mg of standard polystyrene were dissolved in 20 mL of THF to obtain a sample solution.

### Measurement Conditions 3: GPC measurement conditions using polystyrene-based column:

An apparatus of trade name "HLC-8320GPC" manufactured by Tosoh Corporation was used, THF containing 5 mmol/L of triethylamine was used as an eluent, and 10 µL of the sample solution was injected into the apparatus to obtain a chromatogram using an RI detector under conditions of a column oven temperature of 40°C and a THF flow rate of 0.35 mL/min. As the columns, a series of three columns of trade name "TSKgel Super Multipore HZ-H" and a guard column of trade name "TSKguardcolumn SuperMP(HZ)-H" manufactured by Tosoh Corporation connected at a previous stage were used.

Measurement Conditions 4: THF containing 5 mmol/L of triethylamine was used as an eluent, and 20 µL of a sample solution was injected into the apparatus for the measurement. As the columns, a guard column of trade name "TSKguardcolumn Super H-H" manufactured by Tosoh Corporation and columns of trade names "TSKgel Super H5000", "TSKgel Super H6000", and "TSKgel Super H7000" manufactured by Tosoh Corporation were used. A chromatogram was obtained by performing the measurement by using an RI detector (HLC8020, manufactured by Tosoh Corporation) under conditions of a column oven temperature of 40°C and a THF flow rate of 0.6 mL/min.

GPC measurement conditions using silica-based column: An apparatus of trade name "HLC-8320GPC" manufactured by Tosoh Corporation was used, THF was used as an eluent, and 50 µL of the sample solution was injected into the apparatus to obtain a chromatogram by using an RI detector under conditions of a column oven temperature of 40°C and a THF flow rate of 0.5 mL/min. A series of columns of trade names "Zorbax PSM-1000S", "PSM-300S" and "PSM-60S", and a guard column of trade name "DIOL 4.6 x 12.5 mm 5 micron" connected at a previous stage were used.

Calculation method for modification ratio: Assuming that the whole peak area of the chromatogram obtained by using the polystyrene-based column was 100, that a peak area of the sample was P1, that a peak area of standard polystyrene was P2, that the whole peak area of the chromatogram obtained by using the silica-based column was 100, that a peak area of the sample was P3, and that a peak area of standard polystyrene was P4, a modification ratio (%) was obtained in accordance with the following expression: Modification ratio (%) = [1 - (P2 x P3)/(P1 x P4)] x 100 wherein P1 + P2 = P3 + P4 = 100.

### (Physical Property 6) Amount of Bound Styrene

With a coupled conjugated diene-based polymer not containing a rubber softener used as a sample, 100 mg of the sample was dissolved in chloroform to be diluted to 100 mL, and the resultant was used as a measurement sample. Based on the amount of absorption of a phenyl group of styrene at a UV absorption wavelength (about 254 nm), the amount of bound styrene (% by mass) based on 100% by mass of the sample of the coupled conjugated diene-based polymer was measured (measurement apparatus: spectrophotometer "UV-2450" manufactured by Shimadzu Corporation).

### (Physical Property 7) Microstructure of Butadiene Portion (Amount of 1,2-Vinyl Bond)

With a coupled conjugated diene-based polymer not containing a rubber softener used as a sample, 50 mg of the sample was dissolved in 10 mL of carbon disulfide, and the resultant was used as a measurement sample. A solution cell was used to measure an infrared spectrum in a range of 600 to 1000 cm⁻¹, and in accordance with a calculation formula of the Hampton method (R. R. Hampton, Analytical Chemistry 21, 923 (1949)) based on absorbance at a prescribed wavelength, a microstructure of a butadiene portion, namely, an amount of 1,2-vinyl bond (mol%) was obtained. (measurement apparatus: Fourier transform infrared spectrophotometer "FT-IR230" manufactured by JASCO Corporation).

### (Physical Property 8) Molecular Weight (Absolute Molecular Weight) obtained by GPC-light Scattering Measurement

A coupling conjugated diene-based polymer was used as a sample, and a GPC-light scattering measurement apparatus including a series of three columns using a polystyrene-based gel as a filler was used to measure a chromatogram for obtaining a weight average molecular weight (Mw-i) (also designated as an "absolute molecular weight") based on the viscosity of a solution and a light scattering method.

As an eluent, a mixed solution of tetrahydrofuran and triethylamine (THF in TEA: adjusted by mixing 5 mL of triethylamine in 1 L of tetrahydrofuran) was used.

As the columns, a series of a guard column of trade name "TSKguardcolumn HHR-H" manufactured by Tosoh Corporation, and columns of trade names "TSKgel G6000HHR", "TSKgel G5000HHR", and "TSKgel G4000HHR" were connected and used.

A GPC-light scattering measurement apparatus (trade name "Viscotek TDAmax" manufactured by Malvern Panalytical Ltd.) was used under conditions of an oven temperature of 40°C and a THF flow rate of 1.0 mL/min. Ten (10) mg of a sample for measurement was dissolved in 20 mL of THF to obtain a measurement solution, and 200 µL of the measurement solution was injected into the GPC measurement apparatus for the measurement.

### (Example 1) Coupling Conjugated Diene-based Polymer (Sample 1)

Two tank pressure vessels, each of which is a stirrer-equipped tank reactor having an internal volume of 10 L and a ratio (L/D) of internal height (L) and diameter (D) of 4.0, having an inlet at a bottom and an outlet at a top, and equipped with a stirrer and a temperature controlling jacket, were connected to each other as polymerization reactors.

1,3-Butadiene, from which a water content had been precedently removed, styrene and n-hexane were mixed under conditions of 18.6 g/min, 10.0 g/min and 175.2 g/min, respectively. In a static mixer provided in the middle of a pipe for supplying the thus obtained mixed solution to the inlet of the reactor, n-butyllithium to be used for residual impurity inactivation was added and mixed in an amount of 0.103 mmol/min, and the resultant was continuously supplied to the bottom of the reactor. Besides, 2,2-bis(2-oxolanyl)propane used as a polar material and n-butyllithium used as a polymerization initiator were supplied, at rates of respectively 0.081 mmol/min and 0.143 mmol/min, to the bottom of the first reactor in which materials were vigorously mixed by the stirrer, and the internal temperature of the reactor was kept at 67°C.

The thus obtained polymer solution was continuously taken out from the top of the first reactor to be continuously supplied to the bottom of the second reactor for continuing the reaction at 70°C, and the resultant was further supplied to a static mixer from the top of the second reactor. When the polymerization was sufficiently stabilized, while 1,3-butadiene and styrene were being copolymerized, trimethoxy(4-vinylphenyl)silane (shown as "BS-1" in a table) used as a branching agent was added at a rate of 0.0190 mmol/min from the bottom of the second reactor to perform a polymerization reaction and a branching reaction for obtaining a conjugated diene-based polymer having a main chain branch structure. When the polymerization reaction and the branching reaction were stabilized, a small amount of a conjugated diene-based polymer solution prior to addition of a coupling agent was taken out, an antioxidant (BHT) was added thereto in an amount of 0.2 g per 100 g of the polymer, then the solvent was removed, and a Mooney viscosity at 110°C and various molecular weights were measured. Physical properties are shown in Table 1-1.

Next, to the polymer solution flowing out of an outlet of the reactor, tetraethoxysilane (shown as "A" in the table) was added as a coupling agent continuously at a rate of 0.0480 mmol/min, and the resultant was mixed by using a static mixer for performing a coupling reaction. Here, a time until the addition of the coupling agent to the polymer solution flowing out of the outlet of the reactor was 4.8 min, the temperature was 68°C, and a difference between the temperature in the polymerizing step and the temperature until the addition of the coupling agent was 2°C. A small amount of the conjugated diene-based polymer solution after the coupling reaction was taken out, an antioxidant (BHT) was added thereto in an amount of 0.2 g per 100 g of the polymer, then the solvent was removed, and an amount of bound styrene (Physical Property 6) and a microstructure of a butadiene portion (the amount of 1,2-vinyl bond: Physical Property 7) were measured. Measurement results are shown in Table 1-1.

Next, to the polymer solution having been subjected to the coupling reaction, an antioxidant (BHT) was added in an amount of 0.2 g per 100 g of the polymer continuously at 0.055 g/min (n-hexane solution) to complete the coupling reaction. Simultaneously with the antioxidant, an SRAE oil (JOMO Process NC 140, manufactured by JX Nippon Oil & Energy Corporation) was continuously added as a rubber softener in an amount of 25.0 g per 100 g of the polymer, and the resultant was mixed by using a static mixer. The solvent was removed by steam stripping, and thus, a coupled conjugated diene-based polymer (sample 1) that had, in a part of a main chain, a four-branched structure derived from the branching agent corresponding to a compound represented by the following formula (1) (hereinafter also referred to as the "branching agent structure (1)"), and had a three-branched star polymer structure derived from the coupling agent was obtained. Physical properties of the sample 1 are shown in Table 1-1. In each of the polymers obtained in the respective process, such as the polymer prior to the addition of the branching agent, the polymer after the addition of the branching agent, and the polymer after the addition of the coupling agent, the structure of the coupled conjugated diene-based polymer was identified by comparison in the molecular weight obtained by GPC measurement and the branch number obtained by viscosity detector-equipped GPC measurement. Hereinafter, each of such samples was similarly identified. 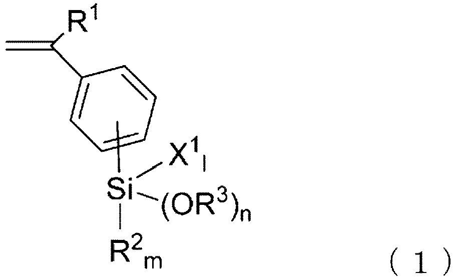
wherein, R¹ represents a hydrogen atom, an alkyl group having 1 to 20 carbon atoms, or an aryl group having 6 to 20 carbon atoms, and may have a branch structure in a part thereof;
R² and R³ each independently represent an alkyl group having 1 to 20 carbon atoms, or an aryl group having 6 to 20 carbon atoms, and may have a branch structure in a part thereof;
each of R¹ to R³, if present in a plural number, is respectively independent;
X¹ represents an independent halogen atom;
m represents an integer of 0 to 2, n represents an integer of 0 to 3, l represents an integer of 0 to 3, and (m + n + l) is 3.

### (Example 2) Coupled Conjugated Diene-based Polymer (Sample 2)

A coupled conjugated diene-based polymer (sample 2) that had, in a part of a main chain, a four-branched structure derived from the branching agent structure (1), and had a four-branched star polymer structure derived from the coupling agent was obtained in the same manner as in Example 1 except that the coupling agent was changed from tetraethoxysilane to 1,2-bis(triethoxysilyl)ethane (shown as "B" in the table), and that the amount thereof to be added was changed to 0.0360 mmol/min. Physical properties of the sample 2 are shown in Table 1-1.

### (Example 3) Coupled Conjugated Diene-based Polymer (Sample 3)

A coupled conjugated diene-based polymer (sample 3) that had, in a part of a main chain, a four-branched structure derived from the branching agent structure (1), and had a four-branched star polymer structure derived from the coupling agent was obtained in the same manner as in Example 1 except that the coupling agent was changed from tetraethoxysilane to 1,3-bis(N,N-diglycidylaminomethyl)cyclohexane (shown as "C" in the table), and that the amount thereof to be added was changed to 0.0360 mmol/min. Physical properties of the sample 3 are shown in Table 1-1.

### (Example 4) Coupled Conjugated Diene-based Polymer (Sample 4)

A coupled conjugated diene-based polymer (sample 4) that had, in a part of a main chain, a four-branched structure derived from the branching agent structure (1), and had a four-branched star polymer structure derived from the coupling agent was obtained in the same manner as in Example 1 except that the coupling agent was changed from tetraethoxysilane to 2,2-dimethoxy-1-(3-trimethoxysilylpropyl)-1-aza-2-silacyclopentane (shown as "D" in the table), and that the amount thereof to be added was changed to 0.0360 mmol/min. Physical properties of the sample 4 are shown in Table 1-1.

### (Example 5) Coupled Conjugated Diene-based Polymer (Sample 5)

A coupled conjugated diene-based polymer (sample 5) that had, in a part of a main chain, a four-branched structure derived from the branching agent structure (1), and had a six-branched star polymer structure derived from the coupling agent was obtained in the same manner as in Example 1 except that the coupling agent was changed from tetraethoxysilane to tris(3-trimethoxysilylpropyl)amine (shown as "E" in the table), and that the amount thereof to be added was changed to 0.0250 mmol/min. Physical properties of the sample 5 are shown in Table 1-1.

### (Example 6) Coupled Conjugated Diene-based Polymer (Sample 6)

A coupled conjugated diene-based polymer (sample 6) that had, in a part of a main chain, a four-branched structure derived from the branching agent structure (1), and had an eight-branched star polymer structure derived from the coupling agent was obtained in the same manner as in Example 1 except that the coupling agent was changed from tetraethoxysilane to tetrakis(3-trimethoxysilylpropyl)-1,3-propanediamine (shown as "F" in the table), and that the amount thereof to be added was changed to 0.0190 mmol/min. Physical properties of the sample 6 are shown in Table 1-1.

### (Example 7) Coupled Conjugated Diene-based Polymer (Sample 7)

A coupled conjugated diene-based polymer (sample 7) that had, in a part of a main chain, a four-branched structure derived from the branching agent structure (1), and had an eight-branched star polymer structure derived from the coupling agent was obtained in the same manner as in Example 1 except that the coupling agent was changed from tetraethoxysilane to tetrakis(3-trimethoxysilylpropyl)-1,3-propanediamine (shown as "F" in the table), and that the amount thereof to be added was changed to 0. 0160 mmol/min. Physical properties of the sample 7 are shown in Table 1-1.

### (Example 8) Coupled Conjugated Diene-based Polymer (Sample 8)

A coupled conjugated diene-based polymer (sample 8) that had, in a part of a main chain, a four-branched structure derived from the branching agent structure (1), and had an eight-branched star polymer structure derived from the coupling agent was obtained in the same manner as in Example 1 except that an addition rate of 1,3-butadiene was changed from 18.6 g/min to 24.3 g/min, that an addition rate of styrene was changed from 10.0 g/min to 4.3 g/min, that an addition rate of 2,2-bis(2-oxolanyl)propane used as the polar material was changed from 0.081 mmol/min to 0.044 mmol/min, that the coupling agent was changed from tetraethoxysilane to tetrakis(3-trimethoxysilylpropyl)-1,3-propanediamine (shown as "F" in the table), and that the amount thereof to be added was changed to 0.0160 mmol/min. Physical properties of the sample 8 are shown in Table 1-1.

### (Example 9) Coupled Conjugated Diene-based Polymer (Sample 9)

A coupled conjugated diene-based polymer (sample 9) that had, in a part of a main chain, a four-branched structure derived from the branching agent structure (1), and had an eight-branched star polymer structure derived from the coupling agent was obtained in the same manner as in Example 1 except that an addition rate of 1,3-butadiene was changed from 18.6 g/min to 17.1 g/min, that an addition rate of styrene was changed from 10.0 g/min to 11.5 g/min, that an addition rate of 2,2-bis(2-oxolanyl)propane used as the polar material was changed from 0.081 mmol/min to 0.089 mmol/min, that the coupling agent was changed from tetraethoxysilane to tetrakis(3-trimethoxysilylpropyl)-1,3-propanediamine (shown as "F" in the table), and that the amount thereof to be added was changed to 0.0160 mmol/min. Physical properties of the sample 9 are shown in Table 1-1.

### (Example 10) Coupled Conjugated Diene-based Polymer (Sample 10)

A coupled conjugated diene-based polymer (sample 10) that had, in a part of a main chain, a four-branched structure derived from the branching agent structure (1), and had an eight-branched star polymer structure derived from the coupling agent was obtained in the same manner as in Example 1 except that an addition rate of 2,2-bis(2-oxolanyl)propane used as the polar material was changed from 0.081 mmol/min to 0.200 mmol/min, that the coupling agent was changed from tetraethoxysilane to tetrakis(3-trimethoxysilylpropyl)-1,3-propanediamine (shown as "F" in the table), and that the amount thereof to be added was changed to 0.0160 mmol/min. Physical properties of the sample 10 are shown in Table 1-2.

### (Example 10a, reference example) Coupled Conjugated Diene-based Polymer (Sample 10a)

A coupled conjugated diene-based polymer (sample 10a) that had, in a part of a main chain, a four-branched structure derived from the branching agent structure (1), and had an eight-branched star polymer structure derived from the coupling agent was obtained in the same manner as in Example 1 except that an addition rate of 2,2-bis(2-oxolanyl)propane used as the polar material was changed from 0.081 mmol/min to 0.112 mmol/min, that an addition rate of n-butyllithium used as the polymerization initiator was changed from 0.143 mmol/min to 0.199 mmol/min, an amount of trimethoxy(4-vinylphenyl)silane to be added as the branching agent was changed from 0.0190 mmol/min to 0.0248 mmol/min, that the coupling agent was changed from tetraethoxysilane to tetrakis(3-trimethoxysilylpropyl)-1,3-propanediamine (shown as "F" in the table), and that the amount thereof to be added was changed to 0.0210 mmol/min. Physical properties of the sample 10a are shown in Table 1-2.

### (Example 10b, reference example) Coupled Conjugated Diene-based Polymer (Sample 10b)

A coupled conjugated diene-based polymer (sample 10b) that had, in a part of a main chain, a four-branched structure derived from the branching agent structure (1), and had an eight-branched star polymer structure derived from the coupling agent was obtained in the same manner as in Example 1 except that an addition rate of 2,2-bis(2-oxolanyl)propane used as the polar material was changed from 0.081 mmol/min to 0.112 mmol/min, that an addition rate of n-butyllithium used as the polymerization initiator was changed from 0.143 mmol/min to 0.199 mmol/min, an amount of trimethoxy(4-vinylphenyl)silane to be added as the branching agent was changed from 0.0190 mmol/min to 0.0248 mmol/min, that the coupling agent was changed from tetraethoxysilane to tetrakis(3-trimethoxysilylpropyl)-1,3-propanediamine (shown as "F" in the table), and that the amount thereof to be added was changed to 0.0184 mmol/min. Physical properties of the sample 10b are shown in Table 1-2.

### (Example 10c) Coupled Conjugated Diene-based Polymer (Sample 10c)

A coupled conjugated diene-based polymer (sample 10c) that had, in a part of a main chain, a four-branched structure derived from the branching agent structure (1), and had an eight-branched star polymer structure derived from the coupling agent was obtained in the same manner as in Example 1 except that an addition rate of 2,2-bis(2-oxolanyl)propane used as the polar material was changed from 0.081 mmol/min to 0.060 mmol/min, that an addition rate of n-butyllithium used as the polymerization initiator was changed from 0.143 mmol/min to 0.101 mmol/min, an amount of trimethoxy(4-vinylphenyl)silane to be added as the branching agent was changed from 0.0190 mmol/min to 0.0140 mmol/min, that the coupling agent was changed from tetraethoxysilane to tetrakis(3-trimethoxysilylpropyl)-1,3-propanediamine (shown as "F" in the table), and that the amount thereof to be added was changed to 0.0118 mmol/min. Physical properties of the sample 10c are shown in Table 1-2.

### (Example 11) Coupled Conjugated Diene-based Polymer (Sample 11)

A coupled conjugated diene-based polymer (sample 11) that had, in a part of a main chain, a two-branched structure derived from the branching agent structure (1), and had a four-branched star polymer structure derived from the coupling agent was obtained in the same manner as in Example 1 except that the branching agent was changed from trimethoxy(4-vinylphenyl)silane to dimethylmethoxy(4-vinylphenyl)silane (shown as "BS-2" in the table), that the amount thereof to be added was changed to 0.0350 mmol/min, that the coupling agent was changed from tetraethoxysilane to 1,2-bis(triethoxysilyl)ethane (shown as "B" in the table), and that the amount thereof to be added was changed to 0.0360 mmol/min. Physical properties of the sample 11 are shown in Table 1-2.

### (Example 12) Coupled Conjugated Diene-based Polymer (Sample 12)

A coupled conjugated diene-based polymer (sample 12) that had, in a part of a main chain, a two-branched structure derived from the branching agent structure (1), and had a four-branched star polymer structure derived from the coupling agent was obtained in the same manner as in Example 1 except that the branching agent was changed from trimethoxy(4-vinylphenyl)silane to dimethylmethoxy(4-vinylphenyl)silane (shown as "BS-2" in the table), that the amount thereof to be added was changed to 0.0350 mmol/min, that the coupling agent was changed from tetraethoxysilane to 2,2-dimethoxy-1-(3-trimethoxysilylpropyl)-1-aza-2-silacyclopentane (shown as "D" in the table), and that the amount thereof to be added was changed to 0.0360 mmol/min. Physical properties of the sample 12 are shown in Table 1-2.

### (Example 13) Coupled Conjugated Diene-based Polymer (Sample 13)

A coupled conjugated diene-based polymer (sample 13) that had, in a part of a main chain, a two-branched structure derived from the branching agent structure (1), and had an eight-branched star polymer structure derived from the coupling agent was obtained in the same manner as in Example 1 except that the branching agent was changed from trimethoxy(4-vinylphenyl)silane to dimethylmethoxy(4-vinylphenyl)silane (shown as "BS-2" in the table), that the amount thereof to be added was changed to 0.0350 mmol/min, that the coupling agent was changed from tetraethoxysilane to tetrakis(3-trimethoxysilylpropyl)-1,3-propanediamine (shown as "F" in the table), and that the amount thereof to be added was changed to 0.0160 mmol/min. Physical properties of the sample 13 are shown in Table 1-2.

### (Example 14) Coupled Conjugated Diene-based Polymer (Sample 14)

A coupled conjugated diene-based polymer (sample 14) that had, in a part of a main chain, a three-branched structure derived from a branching agent corresponding to a compound represented by the following formula (2) (hereinafter also referred to as the "branching agent structure (2)"), and had a four-branched star polymer structure derived from the coupling agent was obtained in the same manner as in Example 1 except that the branching agent was changed from trimethoxy(4-vinylphenyl)silane to 1,1-bis(4-(dimethylmethoxysilyl)phenyl)ethylene (shown as "BS-3" in the table), that the amount thereof to be added was changed to 0.0120 mmol/min, that the coupling agent was changed from tetraethoxysilane to 1,2-bis(triethoxysilyl)ethane (shown as "B" in the table), and that the amount thereof to be added was changed to 0.0360 mmol/min. Physical properties of the sample 14 are shown in Table 1-2.

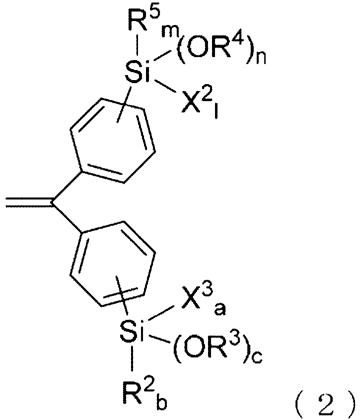

In the formula (2), R² to R⁵ each independently represent an alkyl group having 1 to 20 carbon atoms, or an aryl group having 6 to 20 carbon atoms, and may have a branch structure in a part thereof, and each of R² to R⁵, if present in a plural number, is respectively independent.
X² and X³ represent an independent halogen atom.
m represents an integer of 0 to 2, n represents an integer of 0 to 3, l represents an integer of 0 to 3, and (m + n + l) is 3.
a represents an integer of 0 to 2, b represents an integer of 0 to 3, and c represents an integer of 0 to 3; and (a + b + c) is 3.

### (Example 15) Coupled Conjugated Diene-based Polymer (Sample 15)

A coupled conjugated diene-based polymer (sample 15) that had, in a part of a main chain, a three-branched structure derived from the branching agent structure (2), and had a four-branched star polymer structure derived from the coupling agent was obtained in the same manner as in Example 1 except that the branching agent was changed from trimethoxy(4-vinylphenyl)silane to 1,1-bis(4-(dimethylmethoxysilyl)phenyl)ethylene (shown as "BS-3" in the table), that the amount thereof to be added was changed to 0.0120 mmol/min, that the coupling agent was changed from tetraethoxysilane to 2,2-dimethoxy-1-(3-trimethoxysilylpropyl)-1-aza-2-silacyclopentane (shown as "D" in the table), and that the amount thereof to be added was changed to 0.0360 mmol/min. Physical properties of the sample 15 are shown in Table 1-2.

### (Example 16) Coupled Conjugated Diene-based Polymer (Sample 16)

A coupled conjugated diene-based polymer (sample 16) that had, in a part of a main chain, a three-branched structure derived from the branching agent structure (2), and had an eight-branched star polymer structure derived from the coupling agent was obtained in the same manner as in Example 1 except that the branching agent was changed from trimethoxy(4-vinylphenyl)silane to 1,1-bis(4-(dimethylmethoxysilyl)phenyl)ethylene (shown as "BS-3" in the table), that the amount thereof to be added was changed to 0.0120 mmol/min, that the coupling agent was changed from tetraethoxysilane to tetrakis(3-trimethoxysilylpropyl)-1,3-propanediamine (shown as "F" in the table), and that the amount thereof to be added was changed to 0.0160 mmol/min. Physical properties of the sample 16 are shown in Table 1-2.

### (Example 17) Coupled Conjugated Diene-based Polymer (Sample 17)

A coupled conjugated diene-based polymer (sample 17) that had, in a part of a main chain, a seven-branched structure derived from the branching agent structure (2), and had a four-branched star polymer structure derived from the coupling agent was obtained in the same manner as in Example 1 except that the branching agent was changed from trimethoxy(4-vinylphenyl)silane to 1,1-bis(4-trimethoxysilylphenyl)ethylene (shown as "BS-4" in the table), that the amount thereof to be added was changed to 0.0210 mmol/min, that the coupling agent was changed from tetraethoxysilane to 1,2-bis(triethoxysilyl)ethane (shown as "B" in the table), and that the amount thereof to be added was changed to 0.0360 mmol/min. Physical properties of the sample 17 are shown in Table 2-1.

### (Example 18) Coupled Conjugated Diene-based Polymer (Sample 18)

A coupled conjugated diene-based polymer (sample 18) that had, in a part of a main chain, a seven-branched structure derived from the branching agent structure (2), and had a four-branched star polymer structure derived from the coupling agent was obtained in the same manner as in Example 1 except that the branching agent was changed from trimethoxy(4-vinylphenyl)silane to 1,1-bis(4-trimethoxysilylphenyl)ethylene (shown as "BS-4" in the table), that the amount thereof to be added was changed to 0.0210 mmol/min, that the coupling agent was changed from tetraethoxysilane to 2,2-dimethoxy-1-(3-trimethoxysilylpropyl)-1-aza-2-silacyclopentane (shown as "D" in the table), and that the amount thereof to be added was changed to 0.0360 mmol/min. Physical properties of the sample 18 are shown in Table 2-1.

### (Example 19) Coupled Conjugated Diene-based Polymer (Sample 19)

A coupled conjugated diene-based polymer (sample 19) that had, in a part of a main chain, a seven-branched structure derived from the branching agent structure (2), and had an eight-branched star polymer structure derived from the coupling agent was obtained in the same manner as in Example 1 except that the branching agent was changed from trimethoxy(4-vinylphenyl)silane to 1,1-bis(4-(trimethoxysilylphenyl)ethylene (shown as "BS-4" in the table), that the amount thereof to be added was changed to 0.0210 mmol/min, that the coupling agent was changed from tetraethoxysilane to tetrakis(3-trimethoxysilylpropyl)-1,3-propanediamine (shown as "F" in the table), and that the amount thereof to be added was changed to 0.0160 mmol/min. Physical properties of the sample 19 are shown in Table 2-1.

### (Example 20) Coupled Conjugated Diene-based Polymer (Sample 20)

A coupled conjugated diene-based polymer (sample 20) that had, in a part of a main chain, a four-branched structure derived from the branching agent structure (1), and had an eight-branched star polymer structure derived from the coupling agent was obtained in the same manner as in Example 1 except that the branching agent was changed from trimethoxy(4-vinylphenyl)silane to trichloro(4-vinylphenyl)silane (shown as "BS-5" in the table), that the amount thereof to be added was changed to 0.0190 mmol/min, that the coupling agent was changed from tetraethoxysilane to 1,2-bis(triethoxysilyl)ethane (shown as "B" in the table), and that the amount thereof to be added was changed to 0.0360 mmol/min. Physical properties of the sample 20 are shown in Table 2-1.

### (Example 21) Coupled Conjugated Diene-based Polymer (Sample 21)

A coupled conjugated diene-based polymer (sample 21) that had, in a part of a main chain, a four-branched structure derived from the branching agent structure (1), and had an eight-branched star polymer structure derived from the coupling agent was obtained in the same manner as in Example 1 except that the branching agent was changed from trimethoxy(4-vinylphenyl)silane to trichloro(4-vinylphenyl)silane (shown as "BS-5" in the table), that the amount thereof to be added was changed to 0.0190 mmol/min, that the coupling agent was changed from tetraethoxysilane to 2,2-dimethoxy-1-(3-trimethoxysilylpropyl)-1-aza-2-silacyclopentane (shown as "D" in the table), and that the amount thereof to be added was changed to 0.0360 mmol/min. Physical properties of the sample 21 are shown in Table 2-1.

### (Example 22) Coupled Conjugated Diene-based Polymer (Sample 22)

A coupled conjugated diene-based polymer (sample 22) that had, in a part of a main chain, a four-branched structure derived from the branching agent structure (1), and had an eight-branched star polymer structure derived from the coupling agent was obtained in the same manner as in Example 1 except that the branching agent was changed from trimethoxy(4-vinylphenyl)silane to trichloro(4-vinylphenyl)silane (shown as "BS-5" in the table), that the amount thereof to be added was changed to 0.0190 mmol/min, that the coupling agent was changed from tetraethoxysilane to tetrakis(3-trimethoxysilylpropyl)-1,3-propanediamine (shown as "F" in the table), and that the amount thereof to be added was changed to 0.0160 mmol/min. Physical properties of the sample 22 are shown in Table 2-1.

### (Example 23) Coupled Conjugated Diene-based Polymer (Sample 23)

A coupled conjugated diene-based polymer (sample 23) that had, in a part of a main chain, a four-branched structure derived from the branching agent structure (1), and had an eight-branched star polymer structure derived from the coupling agent was obtained in the same manner as in Example 1 except that amount of the branching agent of trimethoxy(4-vinylphenyl)silane (shown as "BS-1" in the table) to be added was changed from 0.0190 mmol/min to 0.0100 mol/min, that the coupling agent was changed from tetraethoxysilane to tetrakis(3-trimethoxysilylpropyl)-1,3-propanediamine (shown as "F" in the table), and that the amount thereof to be added was changed to 0.0190 mmol/min. Physical properties of the sample 23 are shown in Table 2-1.

### (Example 24) Coupled Conjugated Diene-based Polymer (Sample 24)

A coupled conjugated diene-based polymer (sample 24) that had, in a part of a main chain, a four-branched structure derived from the branching agent structure (1), and had an eight-branched star polymer structure derived from the coupling agent was obtained in the same manner as in Example 1 except that amount of the branching agent of trimethoxy(4-vinylphenyl)silane (shown as "BS-1" in the table) to be added was changed from 0.0190 mmol/min to 0.0250 mol/min, that the coupling agent was changed from tetraethoxysilane to tetrakis(3-trimethoxysilylpropyl)-1,3-propanediamine (shown as "F" in the table), and that the amount thereof to be added was changed to 0.0190 mmol/min. Physical properties of the sample 24 are shown in Table 2-1.

### (Example 25) Coupled Conjugated Diene-based Polymer (Sample 25)

A coupled conjugated diene-based polymer (sample 25) that had, in a part of a main chain, a four-branched structure derived from the branching agent structure (1), and had an eight-branched star polymer structure derived from the coupling agent was obtained in the same manner as in Example 1 except that amount of the branching agent of trimethoxy(4-vinylphenyl)silane (shown as "BS-1" in the table) to be added was changed from 0.0190 mmol/min to 0.0350 mol/min, that the coupling agent was changed from tetraethoxysilane to tetrakis(3-trimethoxysilylpropyl)-1,3-propanediamine (shown as "F" in the table), and that the amount thereof to be added was changed to 0.0190 mmol/min. Physical properties of the sample 25 are shown in Table 2-2.

### (Example 26) Coupled Conjugated Diene-based Polymer (Sample 26)

A coupled conjugated diene-based polymer (sample 26) that had, in a part of a main chain, a four-branched structure derived from the branching agent structure (1), and had an eight-branched star polymer structure derived from the coupling agent was obtained in the same manner as in Example 1 except that the coupling agent was changed from tetraethoxysilane to tetrakis(3-trimethoxysilylpropyl)-1,3-propanediamine (shown as "F" in the table), that the amount thereof to be added was changed to 0.0190 mmol/min, and that the SRAE oil added as the rubber softener was changed to a liquid rubber (liquid polybutadiene LBR-302, manufactured by Kuraray Co., Ltd.). Physical properties of the sample 26 are shown in Table 2-2.

### (Example 27) Coupled Conjugated Diene-based Polymer (Sample 27)

A coupled conjugated diene-based polymer (sample 27) that had, in a part of a main chain, a four-branched structure derived from the branching agent structure (1), and had an eight-branched star polymer structure derived from the coupling agent was obtained in the same manner as in Example 1 except that the coupling agent was changed from tetraethoxysilane to tetrakis(3-trimethoxysilylpropyl)-1,3-propanediamine (shown as "F" in the table), that the amount thereof to be added was changed to 0.0190 mmol/min, and that the SRAE oil added as the rubber softener was changed to a resin (terpene resin YS resin PX1250, manufactured by Yasuhara Chemical Co., Ltd.). Physical properties of the sample 27 are shown in Table 2-2.

### (Example 28) Coupled Conjugated Diene-based Polymer (Sample 28)

A coupled conjugated diene-based polymer (sample 28) that had, in a part of a main chain, a four-branched structure derived from the branching agent structure (1), and had an eight-branched star polymer structure derived from the coupling agent was obtained in the same manner as in Example 1 except that the coupling agent was changed from tetraethoxysilane to tetrakis(3-trimethoxysilylpropyl)-1,3-propanediamine (shown as "F" in the table), that the amount thereof to be added was changed to 0.0190 mmol/min, and that the SRAE oil added as the rubber softener was changed to a naphthene oil (naphthene oil Nytex 810 manufactured by Nynas). Physical properties of the sample 28 are shown in Table 2-2.

### (Example 29) Coupled Conjugated Diene-based Polymer (Sample 29)

A coupled conjugated diene-based polymer (sample 29) that had, in a part of a main chain, a four-branched structure derived from the branching agent structure (1), and had an eight-branched star polymer structure derived from the coupling agent was obtained in the same manner as in Example 1 except that the coupling agent was changed from tetraethoxysilane to tetrakis(3-trimethoxysilylpropyl)-1,3-propanediamine (shown as "F" in the table), that the amount thereof to be added was changed to 0.0190 mmol/min, and that no rubber softener was added. Physical properties of the sample 29 are shown in Table 2-2.

### (Example 30, reference example) Coupled Conjugated Diene-based Polymer (Sample 30)

A coupled conjugated diene-based polymer (sample 30) that had, in a part of a main chain, a four-branched structure derived from the branching agent structure (1), and had an eight-branched star polymer structure derived from the coupling agent was obtained in the same manner as in Example 1 except that the coupling agent was changed from tetraethoxysilane to tetrakis(3-trimethoxysilylpropyl)-1,3-propanediamine (shown as "F" in the table), that the amount thereof to be added was changed to 0.0190 mmol/min, and that the amount of the SRAE oil added as the rubber softener was changed from 25.0 g to 37.5 g based on 100 g of the polymer. Physical properties of the sample 30 are shown in Table 2-2.

### (Example 30a, reference example) Coupled Conjugated Diene-based Polymer (Sample 30a)

A coupled conjugated diene-based polymer (sample 30a) that had, in a part of a main chain, a four-branched structure derived from the branching agent structure (1), and had an eight-branched star polymer structure derived from the coupling agent was obtained in the same manner as in Example 1 except that the coupling agent was changed from tetraethoxysilane to tetrakis(3-trimethoxysilylpropyl)-1,3-propanediamine (shown as "F" in the table), that the amount thereof to be added was changed to 0.0190 mmol/min, and that the amount of the SRAE oil added as the rubber softener was changed from 25.0 g to 50.0 g based on 100 g of the polymer. Physical properties of the sample 30a are shown in Table 2-2.

### (Example 30b, reference example) Coupled Conjugated Diene-based Polymer (Sample 30b)

A coupled conjugated diene-based polymer (sample 30b) that had no main chain branch derived from a branching agent, and had a ten-branched star polymer structure derived from the coupling agent was obtained in the same manner as in Example 1 except that no branching agent was added, that the coupling agent was changed from tetraethoxysilane to a coupling agent represented by the following (S-1) (shown as "G" in the table), and that the amount thereof to be added was changed to 0.0152 mmol/min. Physical properties of the sample 30b are shown in Table 2-2.

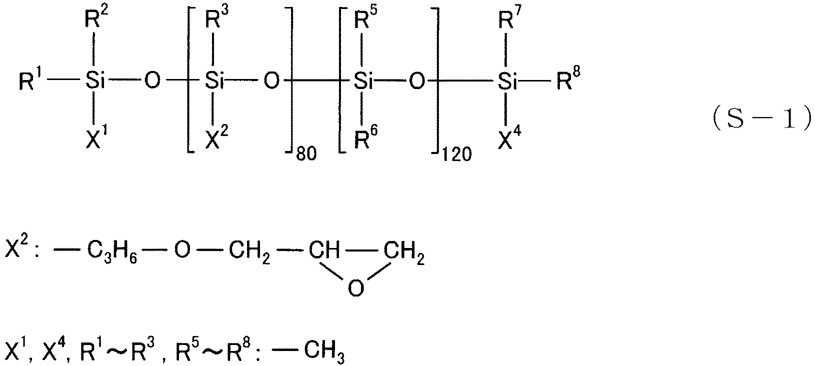

### (Comparative Example 1) Coupled Conjugated Diene-based Polymer (Sample 31)

Two tank pressure vessels, each of which was a stirrer-equipped tank reactor having an internal volume of 10 L and a ratio (L/D) of an internal height (L) and a diameter (D) of 4.0, having an inlet at a bottom and an outlet at a top, and equipped with a stirrer and a temperature controlling jacket, were connected to each other as polymerization reactors.

1,3-Butadiene, styrene and n-hexane, from which a water content had been precedently removed, were mixed under conditions of 18.6 g/min, 10.0 g/min and 175.2 g/min, respectively. In a static mixer provided in the middle of a pipe for supplying the thus obtained mixed solution to the inlet of the reactor, n-butyllithium to be used for residual impurity inactivation was added and mixed in an amount of 0.103 mmol/min, and the resultant was continuously supplied to the bottom of the reactor. Besides, 2,2-bis(2-oxolanyl)propane used as a polar material and n-butyllithium used as a polymerization initiator were supplied, at rates of respectively 0.081 mmol/min and 0.143 mmol/min, to the bottom of the first reactor in which materials were vigorously mixed by the stirrer, and the internal temperature of the reactor was kept at 67°C.

The thus obtained polymer solution was continuously taken out from the top of the first reactor to be continuously supplied to the bottom of the second reactor for continuing the reaction at 70°C, and the resultant was further supplied to a static mixer from the top of the second reactor. When the polymerization was sufficiently stabilized, a small amount of a polymer solution prior to addition of a coupling agent was taken out, an antioxidant (BHT) was added thereto in an amount of 0.2 g per 100 g of the polymer, then the solvent was removed, and a Mooney viscosity at 110°C and various molecular weights were measured. The physical properties are shown in Table 3.

Next, to the polymer solution flowing out of an outlet of the reactor, tetraethoxysilane (shown as "A" in the table) was added as a coupling agent continuously at a rate of 0.0480 mmol/min, and the resultant was mixed by using a static mixer for performing a coupling reaction. Here, a time until the addition of the coupling agent to the polymer solution flowing out of the outlet of the reactor was 4.8 min, the temperature was 68°C, and a difference between the temperature in the polymerizing step and the temperature until the addition of the coupling agent was 2°C. A small amount of the conjugated diene-based polymer solution after the coupling reaction was taken out, an antioxidant (BHT) was added thereto in an amount of 0.2 g per 100 g of the polymer, then the solvent was removed, and an amount of bound styrene (Physical Property 6) and a microstructure of a butadiene portion (the amount of 1,2-vinyl bond: Physical Property 7) were measured. Measurement results are shown in Table 3.

Next, to the polymer solution having been subjected to the coupling reaction, an antioxidant (BHT) was added in an amount of 0.2 g per 100 g of the polymer continuously at 0.055 g/min (n-hexane solution) to complete the coupling reaction. Simultaneously with the antioxidant, an SRAE oil (JOMO Process NC 140, manufactured by JX Nippon Oil & Energy Corporation) was continuously added as a rubber softener in an amount of 25.0 g per 100 g of the polymer, and the resultant was mixed by using a static mixer. The solvent was removed by steam stripping, and thus, a coupled conjugated diene-based polymer (sample 31) that had no main chain branch derived from a branching agent, and had a three-branched star polymer structure derived from the coupling agent was obtained. Physical properties of the sample 31 are shown in Table 3.

### (Comparative Example 2) Coupled Conjugated Diene-based Polymer (Sample 32)

A coupled conjugated diene-based polymer (sample 32) that had no main chain branch derived from a branching agent, and had a four-branched star polymer structure derived from the coupling agent was obtained in the same manner as in Comparative Example 1 except that the coupling agent was changed from tetraethoxysilane to 2,2-dimethoxy-1-(3-trimethoxysilylpropyl)-1-aza-2-silacyclopentane (shown as "D" in the table), and that the amount thereof to be added was changed to 0.0360 mmol/min. Physical properties of the sample 32 are shown in Table 3.

### (Comparative Example 3) Coupled Conjugated Diene-based Polymer (Sample 33)

A coupled conjugated diene-based polymer (sample 33) that had no main chain branch derived from a branching agent, and had an eight-branched star polymer structure derived from the coupling agent was obtained in the same manner as in Comparative Example 1 except that the coupling agent was changed from tetraethoxysilane to tetrakis(3-trimethoxysilylpropyl)-1,3-propanediamine (shown as "F" in the table), and that the amount thereof to be added was changed to 0.0190 mmol/min. Physical properties of the sample 33 are shown in Table 3.

### (Comparative Example 3a) Coupled Conjugated Diene-based Polymer (Sample 33a)

A coupled conjugated diene-based polymer (sample 33a) that had no main chain branch derived from a branching agent, and had a ten-branched star polymer structure derived from the coupling agent was obtained in the same manner as in Comparative Example 1 except that an addition rate of 2,2-bis(2-oxolanyl)propane used as the polar material was changed from 0.081 mmol/min to 0.182 mmol/min, that an addition rate of n-butyllithium used as the polymerization initiator was changed from 0.143 mmol/min to 0.368 mmol/min, that the coupling agent was changed from tetraethoxysilane to the coupling agent (S-1) used in Example 30a (shown as "G" in the table), and that the amount thereof to be added was changed to 0.0360 mmol/min. Physical properties of the sample 33a are shown in Table 3.

### (Comparative Example 4) Conjugated Diene-based Polymer (Sample 34)

A conjugated diene-based polymer (sample 34) that had, in a part of a main chain, a four-branched structure derived from the branching agent structure (1), and had no star coupled structure derived from a coupling agent was obtained in the same manner as in Comparative Example 1 except that trimethoxy(4-vinylphenyl)silane (shown as "BS-1" in the table) was added as the branching agent at a rate of 0.0190 mmol/min from the bottom of the second reactor when the polymerization was sufficiently stabilized, and that no coupling agent was added. Physical properties of the sample 34 are shown in Table 3.

### (Comparative Example 5) Coupled Conjugated Diene-based Polymer (Sample 35)

A coupled conjugated diene-based polymer (sample 35) that had, in a part of a main chain, a four-branched structure derived from the branching agent structure (1), and had a partially three-branched star polymer structure derived from the coupling agent was obtained in the same manner as in Comparative Example 1 except that trimethoxy(4-vinylphenyl)silane (shown as "BS-1" in the table) was added as the branching agent at a rate of 0.0190 mmol/min from the bottom of the second reactor when the polymerization was sufficiently stabilized, and that an amount of tetraethoxysilane (shown as "A" in the table) to be added as the coupling agent was changed from 0.0480 mmol/min to 0.0120 mmol/min. Physical properties of the sample 35 are shown in Table 3.

### (Comparative Example 6) Coupled Conjugated Diene-based Polymer (Sample 36)

A coupled conjugated diene-based polymer (sample 36) that had, in a part of a main chain, a four-branched structure derived from the branching agent structure (1), and had a partially eight-branched star polymer structure derived from the coupling agent was obtained in the same manner as in Comparative Example 1 except that trimethoxy(4-vinylphenyl)silane (shown as "BS-1" in the table) was added as the branching agent at a rate of 0.0190 mmol/min from the bottom of the second reactor when the polymerization was sufficiently stabilized, that the coupling agent was changed from tetraethoxysilane to tetrakis(3-trimethoxysilylpropyl)-1,3-propanediamine (shown as "F" in the table), and that the amount thereof to be added was changed to 0.0038 mmol/min. Physical properties of the sample 36 are shown in Table 3.

### (Comparative Example 7) Coupled Conjugated Diene-based Polymer (Sample 37)

A coupled conjugated diene-based polymer (sample 37) that had, in a part of a main chain, a two-branched structure derived from the branching agent structure (1), and had a partially three-branched star polymer structure derived from the coupling agent was obtained in the same manner as in Comparative Example 1 except that dimethylmethoxy(4-vinylphenyl)silane (shown as "BS-2" in the table) was added as the branching agent at a rate of 0.0350 mmol/min from the bottom of the second reactor when the polymerization was sufficiently stabilized, and that the amount of tetraethoxysilane to be added as the coupling agent was changed from 0.0480 mmol/min to 0.0120 mmol/min. Physical properties of the sample 37 are shown in Table 3.

### (Comparative Example 8) Coupled Conjugated Diene-based Polymer (Sample 38)

A coupled conjugated diene-based polymer (sample 38) that had, in a part of a main chain, a three-branched structure derived from the branching agent structure (2), and had a partially three-branched star polymer structure derived from the coupling agent was obtained in the same manner as in Comparative Example 1 except that 1,1-bis(4-(dimethylmethoxysilyl)phenyl)ethylene (shown as "BS-3" in the table) was added as the branching agent at a rate of 0.0120 mmol/min from the bottom of the second reactor when the polymerization was sufficiently stabilized, and that the amount of tetraethoxysilane to be added as the coupling agent was changed from 0.0480 mmol/min to 0.0120 mmol/min. Physical properties of the sample 38 are shown in Table 3.

### (Comparative Example 9) Coupled Conjugated Diene-based Polymer (Sample 39)

A coupled conjugated diene-based polymer (sample 39) that had, in a part of a main chain, a seven-branched structure derived from the branching agent structure (2), and had a partially three-branched star polymer structure derived from the coupling agent was obtained in the same manner as in Comparative Example 1 except that 1,1-bis(4-trimethoxysilylphenyl)ethylene (shown as "BS-4" in the table) was added as the branching agent at a rate of 0.0210 mmol/min from the bottom of the second reactor when the polymerization was sufficiently stabilized, and that the amount of tetraethoxysilane to be added as the coupling agent was changed from 0.0480 mmol/min to 0.0120 mmol/min. Physical properties of the sample 39 are shown in Table 3.

### (Comparative Example 10) Coupled Conjugated Diene-based Polymer (Sample 40)

A coupled conjugated diene-based polymer (sample 40) that had, in a part of a main chain, a four-branched structure derived from the branching agent structure (1), and had a partially three-branched star polymer structure derived from the coupling agent was obtained in the same manner as in Comparative Example 1 except that trichloro(4-vinylphenyl)silane (shown as "BS-5" in the table) was added as the branching agent at a rate of 0.0190 mmol/min from the bottom of the second reactor when the polymerization was sufficiently stabilized, and that the amount of tetraethoxysilane to be added as the coupling agent was changed from 0.0480 mmol/min to 0.0120 mmol/min. Physical properties of the sample 40 are shown in Table 3.

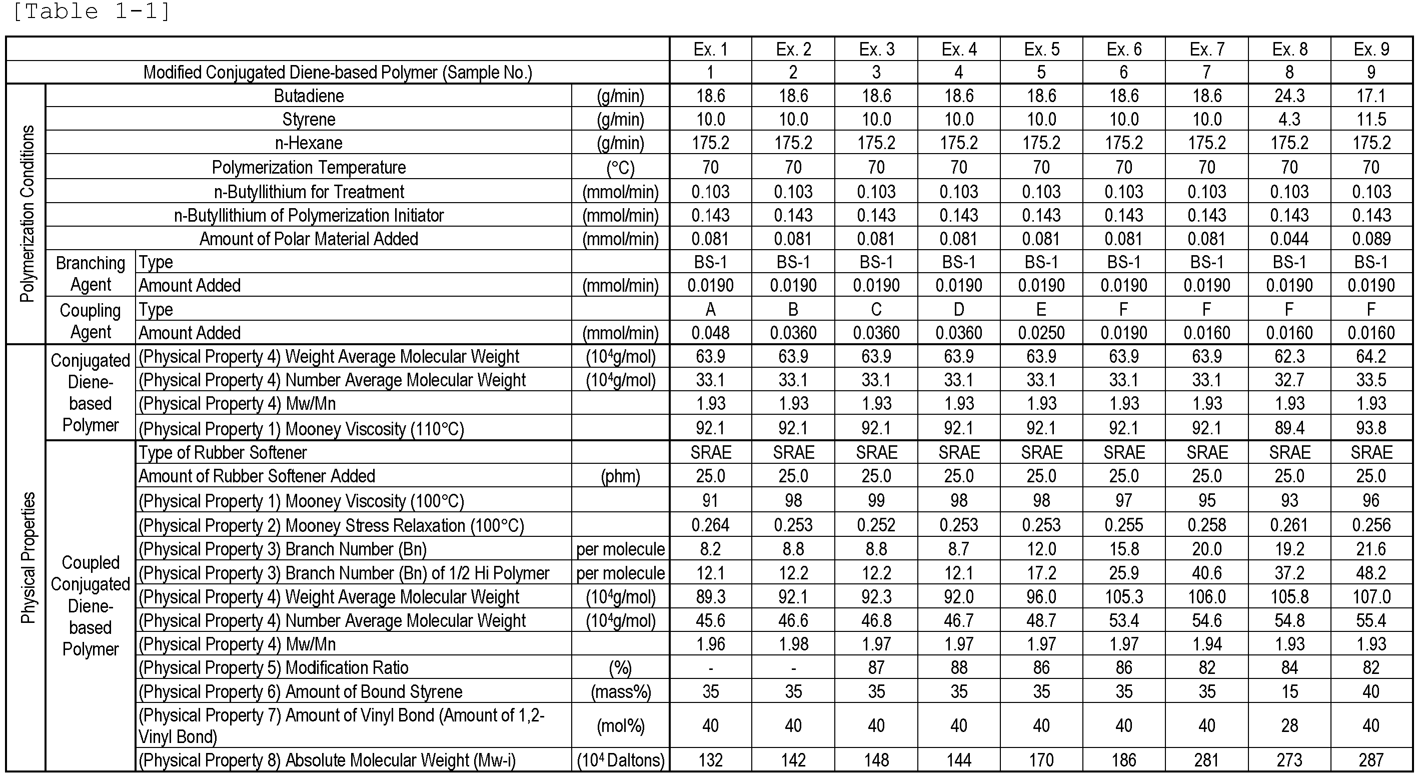

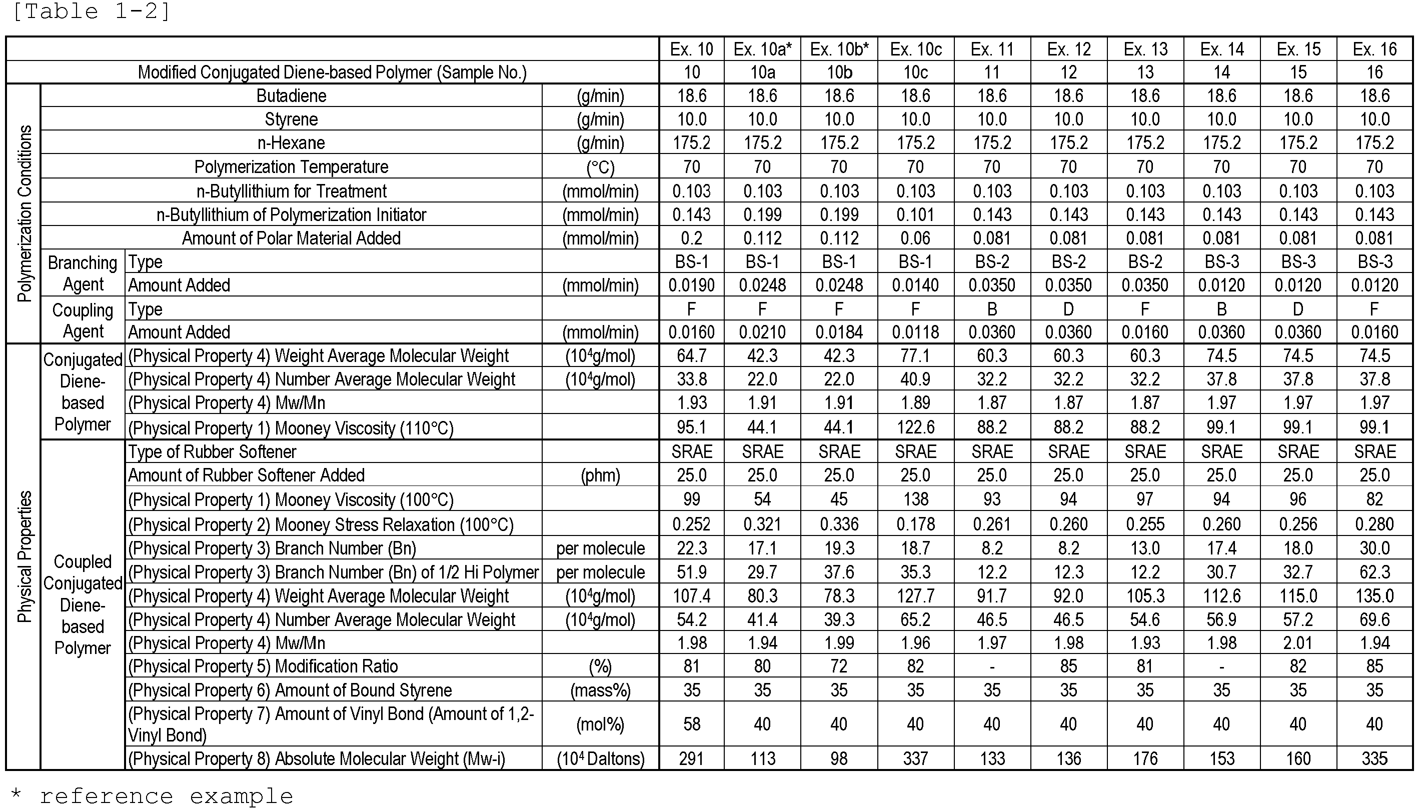

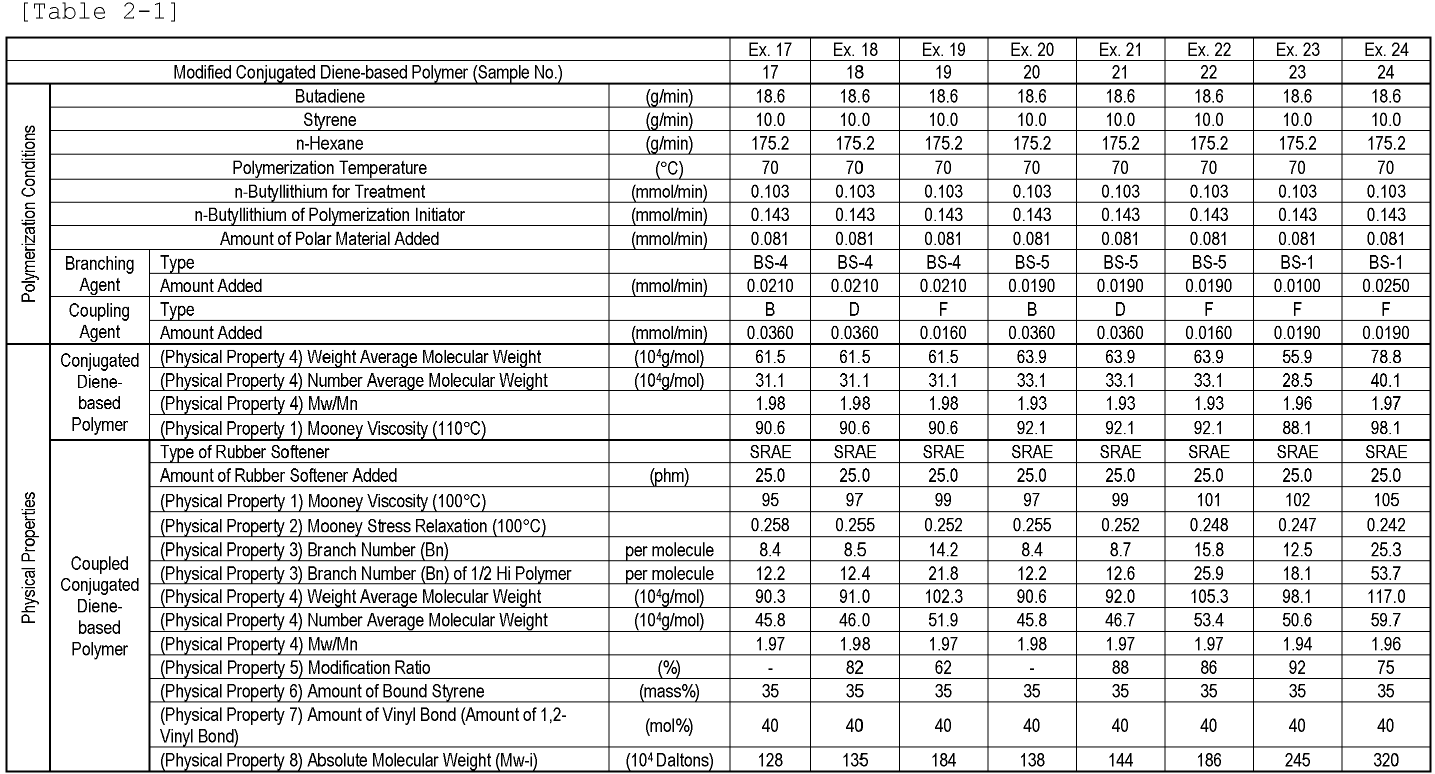

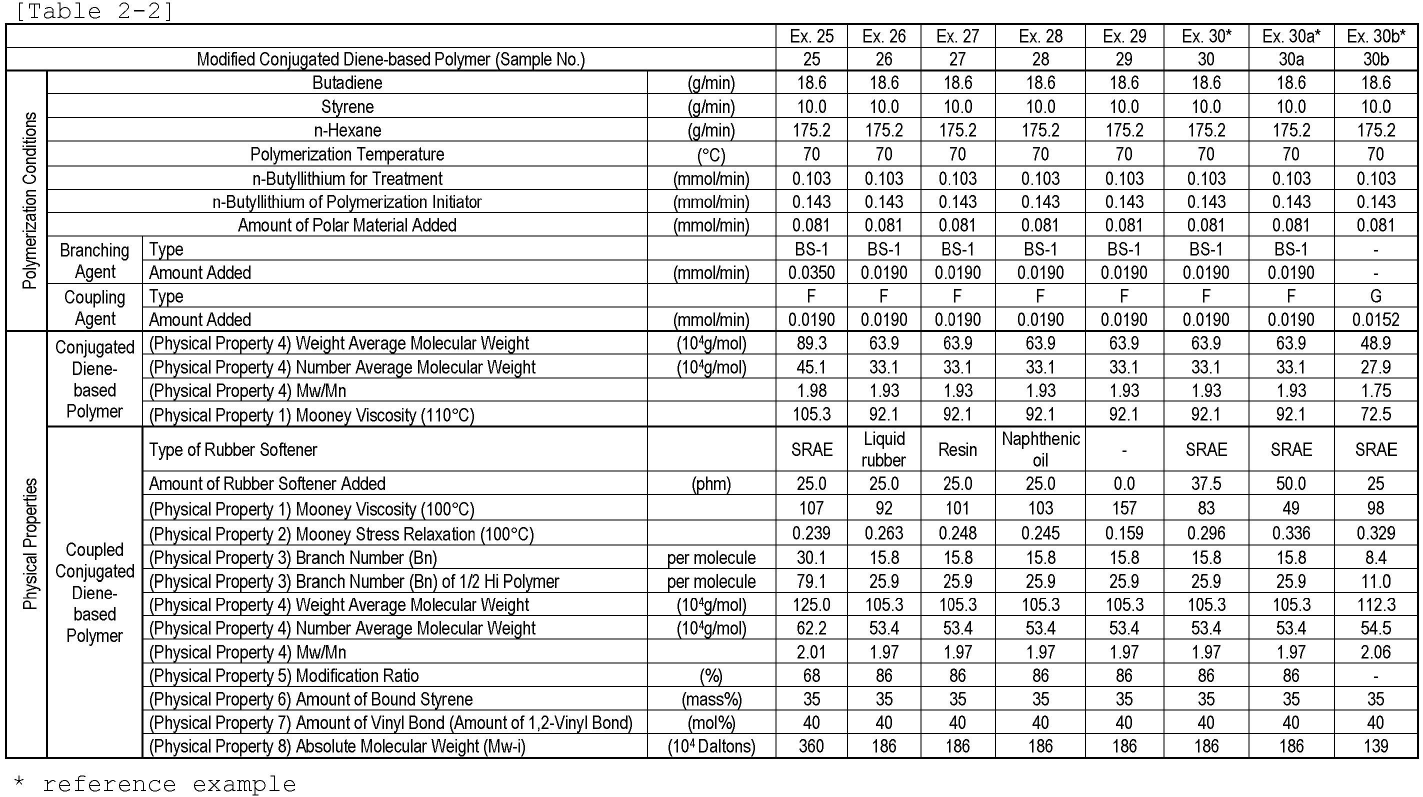

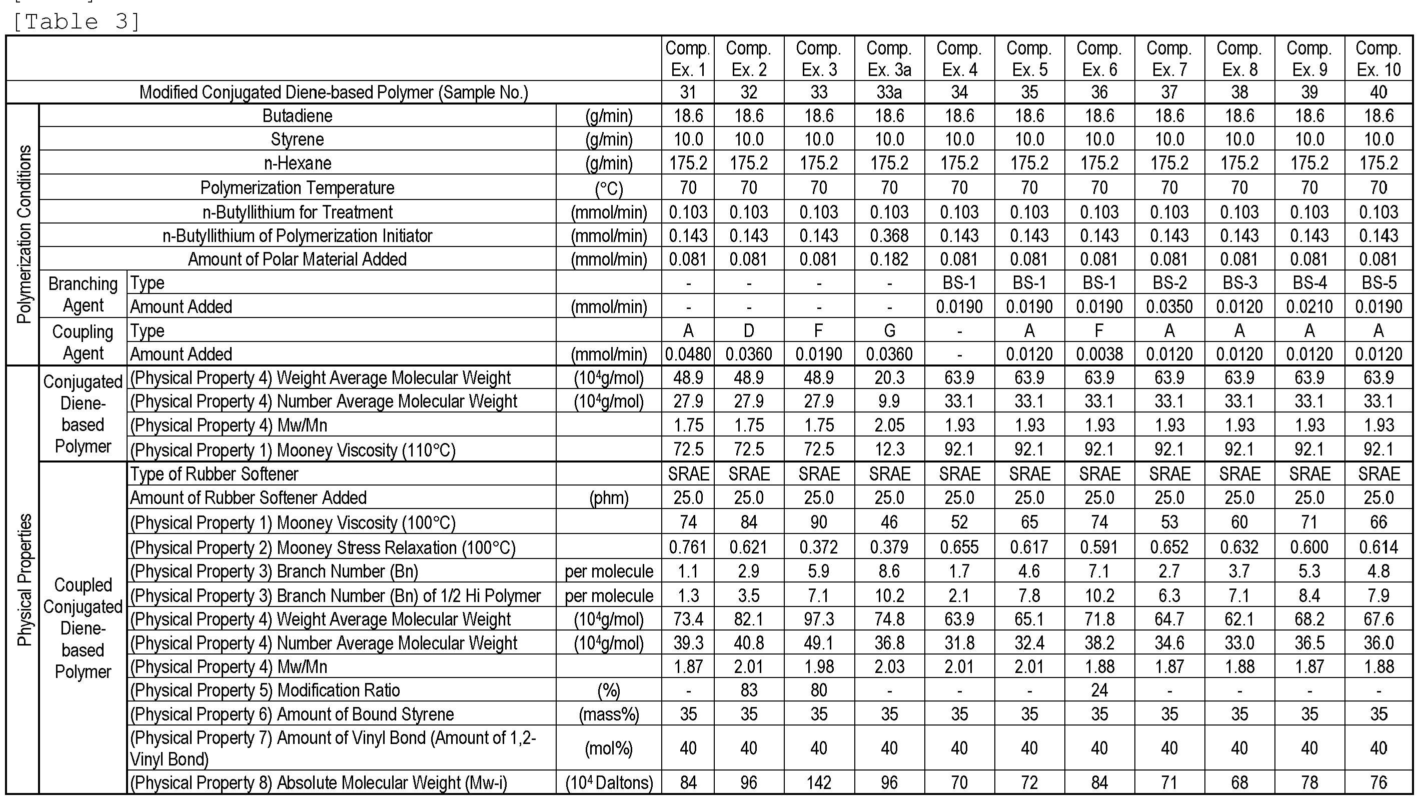

### (Examples 31 to 60, and Comparative Examples 11 to 20) (Examples 40a, 40b, 60, 60a and 60b are reference examples)

The samples 1 to 40 shown in Tables 1-1 to 3 were respectively used as raw material rubbers to obtain rubber compositions respectively containing the raw material rubbers in accordance with the following composition:

### (Rubber Component)

- Coupled conjugated diene-based polymer (any one of Samples 1 to 40):
   80 parts by mass (parts by mass excluding rubber softener)
- High cis polybutadiene (trade name "UBEPOL BR150" manufactured by Ube Industries Ltd.):
   20 parts by mass

### (Compounding Conditions)

An amount of each of the compounding ingredients was expressed in parts by mass based on 100 parts by mass of the rubber component excluding a rubber softener.
Silica 1 (trade name "Ultrasil 7000GR", manufactured by Evonik Degussa, nitrogen adsorption specific surface area: 170 m²/g): 50.0 parts by mass
Silica 2 (trade name "Zeosil Premium 200MP" manufactured by Rhodia, nitrogen adsorption specific surface area: 220 m²/g): 25.0 parts by mass
Carbon black (trade name "Seast KH (N339)", manufactured by Tokai Carbon Co., Ltd.): 5.0 parts by mass
Silane coupling agent: (trade name "Si75", manufactured by Evonik Degussa, bis(triethoxysilylpropyl)disulfide): 6.0 parts by mass
SRAE oil (trade name "Process NC140", manufactured by JX Nippon Oil & Energy Corporation): 42.0 parts by mass
   (including the amount thereof precedently added as rubber softener to be contained in each of Samples 1 to 40)
Zinc oxide: 2.5 parts by mass
Stearic acid: 1.0 part by mass
Anti-ageing agent (N-(1,3-dimethylbutyl)-N'-phenyl-p-phenylenediamine): 2.0 parts by mass
Sulfur: 2.2 parts by mass
Vulcanization accelerator 1 (N-cyclohexyl-2-benzothiazylsulfinamide): 1.7 parts by mass
Vulcanization accelerator 2 (diphenylguanidine): 2.0 parts by mass
Total: 239.4 parts by mass

### (Kneading Method)

The above-described materials were kneaded by the following method to obtain a rubber composition. A closed kneader (having an internal volume of 0.3 L) equipped with a temperature controller was used to knead, as a first stage of kneading, the raw material rubber (each of the samples 1 to 40), the fillers (silica 1, silica 2 and carbon black), the silane coupling agent, the SRAE oil, zinc oxide and stearic acid under conditions of a filling ratio of 65% and a rotor rotation speed of 30 to 50 rpm. Here, the temperature of the closed kneader was controlled to obtain each rubber composition (compound) at a discharging temperature of 155 to 160°C.

Next, after cooling the compound obtained as described above to room temperature, as a second stage of the kneading, the anti-ageing agent was added thereto, and the resultant was kneaded again to improve dispersibility of the silica. Also in this case, the discharging temperature for the compound was adjusted to 155 to 160°C by the temperature control of the kneader. After cooling, as a third stage of the kneading, sulfur and the vulcanization accelerators 1 and 2 were added, and the resultant was kneaded by an open roll set to 70°C. Thereafter, the resultant was molded and vulcanized at 160°C for 20 minutes by a vulcanizing press. The rubber compositions prior to the vulcanization, and the rubber compositions after the vulcanization were evaluated. Specifically, the evaluations were performed as described below. Results are shown in Tables 4-1 to 6.

### (Evaluation 1) Mooney Viscosity of Compound

Each compound obtained after the second stage of the kneading and before the third stage of the kneading was used as a sample to measure a viscosity by using a Mooney viscometer in accordance with ISO 289 after preheating the compound at 130°C for 1 minute, and after rotating a rotor for 4 minutes at 2 rpm. The thus obtained viscosity was shown as an index obtained assuming that a result of Comparative Example 11 was 100. A smaller index indicates better processability.

### (Evaluation 2) Tensile Strength and Tensile Elongation

Tensile strength and tensile elongation were measured in accordance with a tensile test method according to JIS K6251, and were shown as indexes obtained assuming that results of Comparative Example 11 were 100. A larger index indicates better tensile strength and tensile elongation (fracture strength).

### (Evaluation 3) Abrasion Resistance

An Acron abrasion tester (manufactured by Yasuda Seiki Seisakusho, Ltd.) was used to measure an abrasion amount through 1000 rotations at a load of 44.4 N in accordance with JIS K6264-2, and a result was shown as an index obtained assuming that a result of Comparative Example 11 was 100. A larger index indicates better abrasion resistance.

### (Evaluation 4) Viscoelasticity Parameter

A viscoelasticity testing machine "ARES" manufactured by Rheometric Scientific, Inc. was used to measure a viscoelasticity parameter in a torsion mode. Each measurement value was shown as an index obtained assuming that a result obtained by the rubber composition of Comparative Example 11 was 100.

A tan δ measured at 0°C at a frequency of 10 Hz and strain of 1% was used as an index of wet grip performance. A larger index indicates better wet grip performance.

Besides, a tan δ measured at 50°C at a frequency of 10 Hz and strain of 3% was used as an index of fuel efficiency. A smaller index indicates higher fuel efficiency.

Besides, an elastic modulus (G') measured at 50°C at a frequency of 10 Hz and strain of 3% was used as an index of steering stability. A larger index indicates better steering stability.

**[Table 4-1]**

| | | | Example 31 | Example 32 | Example 33 | Example 34 | Example 35 | Example 36 | Example 37 | Example 38 | Example 39 |
|---|---|---|---|---|---|---|---|---|---|---|---|
| Coupled Conjugated Diene-based Polymer (Sample No.) | | | 1 | 2 | 3 | 4 | 5 | 6 | 7 | 8 | 9 |
| (Physical Property 1) Mooney Viscosity (100°) of Coupled Conjugated Diene-based Polymer | | | 91 | 98 | 99 | 98 | 98 | 97 | 95 | 99 | 93 |
| (Evaluation 1) Mooney Viscosity (130°) of Compound | | index | 85 | 88 | 86 | 83 | 85 | 80 | 78 | 83 | 77 |
| Physical Properties | (Evaluation 2) Tensile Strength | index | 112 | 117 | 121 | 113 | 128 | 134 | 139 | 142 | 137 |
| | (Evaluation 2) Tensile Elongation | index | 109 | 108 | 114 | 116 | 120 | 118 | 124 | 125 | 122 |
| | (Evaluation 3) Abrasion Resistance | index | 110 | 113 | 128 | 125 | 130 | 142 | 148 | 152 | 144 |
| | (Evaluation 4) Elastic Modulus at 50°C (strain: 3%) | index | 111 | 110 | 128 | 125 | 120 | 117 | 126 | 130 | 121 |
| | (Evaluation 4) tanδ at 50°C (strain: 3%) | index | 97 | 96 | 86 | 80 | 75 | 71 | 72 | 69 | 75 |
| | (Evaluation 4) tanδ at 0°C (strain: 1 %) | index | 104 | 104 | 113 | 120 | 125 | 131 | 128 | 122 | 133 |

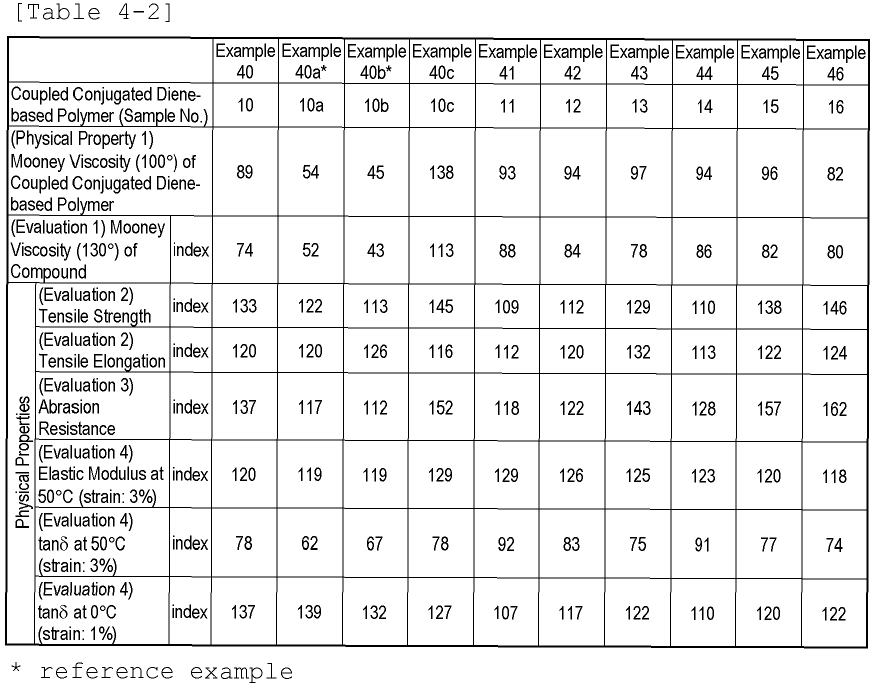

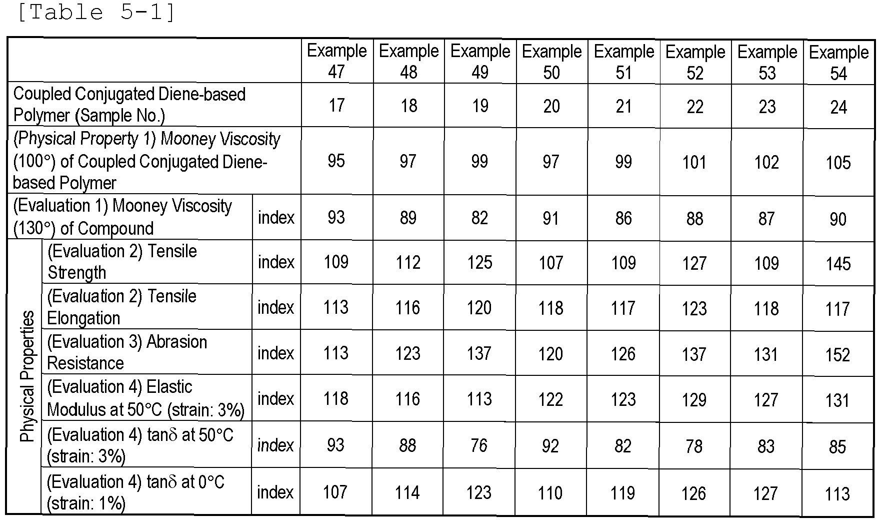

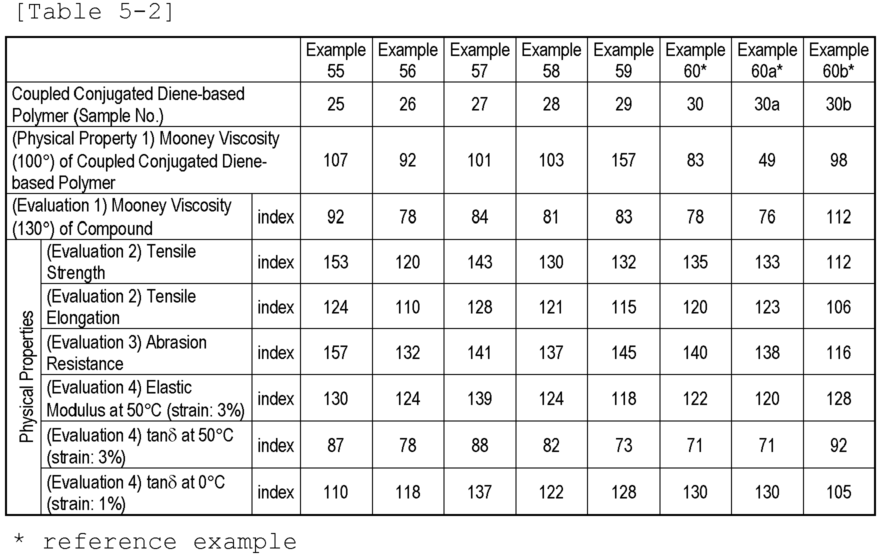

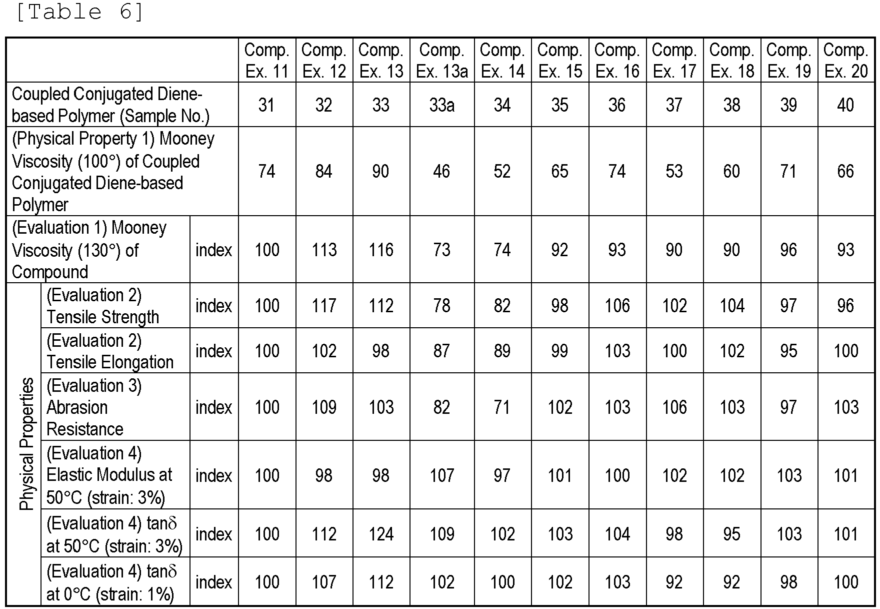

As shown in Tables 4-1 to 6, it was confirmed that Examples 31 to 60b have a low Mooney viscosity of the compound and exhibit good processability in obtaining a vulcanizate therefrom, are excellent in abrasion resistance, steering stability and fracture strength obtained in the form of a vulcanizate, and are excellent in balance between a low hysteresis loss property and wet skid resistance as compared with Comparative Examples 11 to 20.

### Industrial Applicability

A conjugated diene-based polymer of the present invention is industrially applicable in the fields of tire treads, interiors and exteriors of vehicles, antivibration rubbers, belts, shoes, foam bodies, and various industrial products.

### Reference Signs List

A ... branch number of 1/2 Hi polymer, B ... image of branch number distribution of main chain branch polymer (distribution in which branch number is higher as molecular weight is higher than an average of the entire polymer), C ... image of branch number distribution of simple star branch (distribution basically constant depending on the number of functional groups of modifier)

## Claims

1. A conjugated diene-based polymer having a Mooney viscosity measured at 100°C as described in the description of 40 or more and 170 or less, Mooney stress relaxation measured at 100°C as described in the description of 0.28 or less, and a branch number (Bn) measured by viscosity detector-equipped GPC-light scattering measurement as described in the description of 8 or more.

2. The conjugated diene-based polymer according to claim 1, wherein, based on a height Hi of a peak top in an absolute molecular weight curve measured by viscosity detector-equipped GPC-light scattering measurement, whereas if the absolute molecular weight curve has a plurality of peak tops, a height of a peak top having a maximum absolute molecular weight, a polymer having a largest absolute molecular weight among at least two absolute molecular weights at a half height of Hi (1/2 Hi) on the absolute molecular weight curve has a branch number (Bn) of 12 or more.

3. The conjugated diene-based polymer according to claim 1 or 2, wherein the conjugated diene-based polymer comprises a nitrogen atom.

4. The conjugated diene-based polymer according to any one of claims 1 to 3, wherein the conjugated diene-based polymer has a modification ratio measured by column adsorption GPC of 60% by mass or more.

5. The conjugated diene-based polymer according to any one of claims 1 to 4, comprising a portion derived from a vinyl-based monomer containing an alkoxysilyl group or a halosilyl group, and comprising a main chain branch structure in the portion derived from a vinyl-based monomer containing an alkoxysilyl group or a halosilyl group.

6. The conjugated diene-based polymer according to any one of claims 1 to 5, comprising star polymer structure having 3 or more branches, and
comprising a portion derived from a vinyl-based monomer containing an alkoxysilyl group or a halosilyl group in at least one branched chain of the star structure, and further comprising a main chain branch structure in the portion derived from a vinyl-based monomer containing an alkoxysilyl group or a halosilyl group.

7. The conjugated diene-based polymer according to claim 5 or 6, wherein the portion derived from a vinyl-based monomer containing an alkoxysilyl group or a halosilyl group is a monomer unit based on a compound represented by the following formula (1) or (2), and
the conjugated diene-based polymer comprises a branch point of a polymer chain containing the monomer unit based on the compound represented by the formula (1) or (2) : 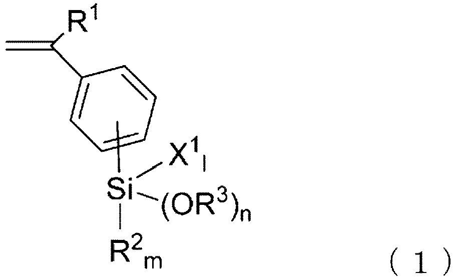 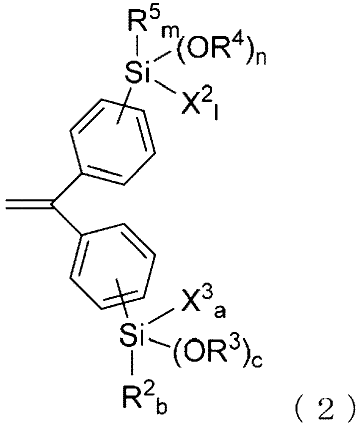
wherein in the formula (1), R¹ represents a hydrogen atom, an alkyl group having 1 to 20 carbon atoms, or an aryl group having 6 to 20 carbon atoms, and may have a branch structure in a part thereof;
R² and R³ each independently represent an alkyl group having 1 to 20 carbon atoms, or an aryl group having 6 to 20 carbon atoms, and may have a branch structure in a part thereof;
each of R¹ to R³, if present in a plural number, is respectively independent;
X¹ represents an independent halogen atom;
m represents an integer of 0 to 2, n represents an integer of 0 to 3, l represents an integer of 0 to 3, and (m + n + l) is 3;
in the formula (2), R² to R⁵ each independently represent an alkyl group having 1 to 20 carbon atoms, or an aryl group having 6 to 20 carbon atoms, and may have a branch structure in a part thereof, and each of R² to R⁵, if present in a plural number, is respectively independent;
X² and X³ represent an independent halogen atom;
m represents an integer of 0 to 2, n represents an integer of 0 to 3, l represents an integer of 0 to 3, and (m + n + l) is 3; and
a represents an integer of 0 to 2, b represents an integer of 0 to 3, c represents an integer of 0 to 3, and (a + b + c) is 3.

8. The conjugated diene-based polymer according to claim 7, comprising a monomer unit based on a compound represented by the formula (1) wherein R¹ is a hydrogen atom, and m is 0.

9. The conjugated diene-based polymer according to claim 7, comprising a monomer unit based on a compound represented by the formula (2) wherein m is 0 and b is 0.

10. The conjugated diene-based polymer according to claim 7, comprising a monomer unit based on a compound represented by the formula (1) wherein R¹ is a hydrogen atom, m is 0, l is 0, and n is 3.

11. The conjugated diene-based polymer according to claim 7, comprising a monomer unit based on a compound represented by the formula (2) wherein m is 0, l is 0, n is 3, a is 0, b is 0, and c is 3.

12. A production method for the conjugated diene-based polymer according to any one of claims 1 to 11, comprising:
a polymerizing and branching step of obtaining a conjugated diene-based polymer comprising a main chain branch structure by polymerizing at least a conjugated diene compound with an organic lithium compound as a polymerization initiator, and adding a branching agent thereto; and
a coupling step of coupling the conjugated diene-based polymer with a coupling agent.

13. A conjugated diene-based polymer composition, comprising 100 parts by mass of the conjugated diene-based polymer according to any one of claims 1 to 11, and 1 to 60 parts by mass of a rubber softener.

14. A rubber composition, comprising a rubber component, and 5.0 parts by mass or more and 150 parts by mass or less of a filler based on 100 parts by mass of the rubber component,
wherein the rubber component contains 10 parts by mass or more of the conjugated diene-based polymer according to any one of claims 1 to 11 or the conjugated diene-based polymer composition according to claim 13 based on 100 parts by mass of a total amount of the rubber component.

## Patentansprüche

1. Polymer auf Basis von konjugiertem Dien, mit einer Mooney-Viskosität, gemessen bei 100°C wie in der Beschreibung beschrieben, von 40 oder mehr und 170 oder weniger, einer Mooney-Spannungsrelaxation, gemessen bei 100°C wie in der Beschreibung beschrieben, von 0,28 oder weniger und einer Zweigzahl (Bn), gemessen durch eine mit einem Viskositätsdetektor ausgestattete GPC-Lichtstreuungsmessung wie in der Beschreibung beschrieben, von 8 oder mehr.

2. Polymer auf Basis von konjugiertem Dien nach Anspruch 1, wobei, basierend auf einer Höhe Hi einer Peakspitze in einer Kurve des absoluten Molekulargewichts, die durch eine mit einem Viskositätsdetektor ausgestattete GPC-Lichtstreuungsmessung gemessen wird, oder, wenn die Kurve des absoluten Molekulargewichts eine Vielzahl von Peakspitzen aufweist, der Höhe einer Peakspitze mit dem maximalen absoluten Molekulargewicht, ein Polymer mit dem größten absoluten Molekulargewicht unter mindestens zwei absoluten Molekulargewichten bei der halben Höhe von Hi (1/2 Hi) auf der Kurve des absoluten Molekulargewichts eine Zweigzahl (Bn) von 12 oder mehr aufweist.

3. Polymer auf Basis von konjugiertem Dien nach Anspruch 1 oder 2, wobei das Polymer auf Basis von konjugiertem Dien ein Stickstoffatom enthält.

4. Polymer auf Basis von konjugiertem Dien nach einem der Ansprüche 1 bis 3, wobei das Polymer auf Basis von konjugiertem Dien einen Modifikationsanteil, gemessen durch Säulenadsorptions-GPC, von 60 Massen-% oder mehr aufweist.

5. Polymer auf Basis von konjugiertem Dien nach einem der Ansprüche 1 bis 4, umfassend einen Teil, der von einem Monomer auf Vinylbasis abgeleitet ist, das eine Alkoxysilylgruppe oder eine Halogensilylgruppe enthält, und umfassend eine Hauptkettenverzweigungsstruktur in dem Teil, der von einem Monomer auf Vinylbasis abgeleitet ist, das eine Alkoxysilylgruppe oder eine Halogensilylgruppe enthält.

6. Polymer auf Basis von konjugiertem Dien nach einem der Ansprüche 1 bis 5, das eine Sternpolymerstruktur mit 3 oder mehr Zweigen aufweist, und
umfassend einen Teil, der von einem Monomer auf Vinylbasis abgeleitet ist, das eine Alkoxysilylgruppe oder eine Halosilylgruppe enthält, in mindestens einer verzweigten Kette der Sternstruktur, und weiterhin umfassend eine Hauptkettenverzweigungsstruktur in dem Teil, der von einem Monomer auf Vinylbasis abgeleitet ist, das eine Alkoxysilylgruppe oder eine Halosilylgruppe enthält.

7. Polymer auf Basis von konjugiertem Dien nach Anspruch 5 oder 6, wobei der Teil, der von einem Monomer auf Vinylbasis abgeleitet ist, das eine Alkoxysilylgruppe oder eine Halogensilylgruppe enthält, eine Monomereinheit ist, die auf einer durch die folgende Formel (1) oder (2) dargestellten Verbindung basiert, und
das Polymer auf Basis von konjugiertem Dien einen Verzweigungspunkt einer Polymerkette umfasst, die die Monomereinheit auf Basis der durch die Formel (1) oder (2) dargestellten Verbindung enthält: 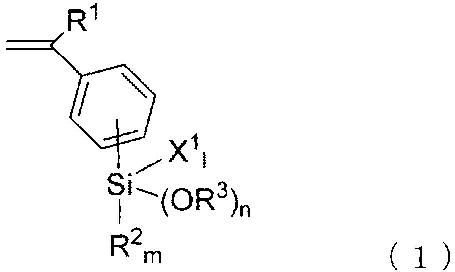 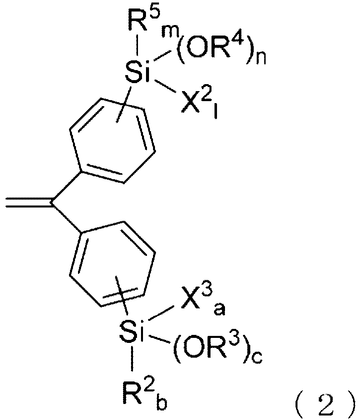
wobei in der Formel (1) R¹ ein Wasserstoffatom, eine Alkylgruppe mit 1 bis 20 Kohlenstoffatomen oder eine Arylgruppe mit 6 bis 20 Kohlenstoffatomen darstellt und in einem Teil davon eine Verzweigungsstruktur aufweisen kann;
R² und R³ jeweils unabhängig voneinander eine Alkylgruppe mit 1 bis 20 Kohlenstoffatomen oder eine Arylgruppe mit 6 bis 20 Kohlenstoffatomen darstellen und in einem Teil davon eine Verzweigungsstruktur aufweisen können;
jedes von R¹ bis R³, falls in einer Mehrzahl vorhanden, jeweils unabhängig ist;
X¹ ein unabhängiges Halogenatom darstellt;
m eine ganze Zahl von 0 bis 2 darstellt, n eine ganze Zahl von 0 bis 3 darstellt, l eine ganze Zahl von 0 bis 3 darstellt und (m + n + l) 3 ist;
in der Formel (2) R² bis R⁵ jeweils unabhängig voneinander eine Alkylgruppe mit 1 bis 20 Kohlenstoffatomen oder eine Arylgruppe mit 6 bis 20 Kohlenstoffatomen darstellen und in einem Teil davon eine Verzweigungsstruktur aufweisen können, und jedes von R² bis R⁵, falls mehrfach vorliegend, jeweils unabhängig ist;
X² und X³ ein unabhängiges Halogenatom darstellen;
m eine ganze Zahl von 0 bis 2 darstellt, n eine ganze Zahl von 0 bis 3 darstellt, l eine ganze Zahl von 0 bis 3 darstellt und (m + n + l) 3 ist; und
a eine ganze Zahl von 0 bis 2 darstellt, b eine ganze Zahl von 0 bis 3 darstellt, c eine ganze Zahl von 0 bis 3 darstellt und (a + b + c) 3 ist.

8. Polymer auf Basis von konjugiertem Dien nach Anspruch 7, umfassend eine Monomereinheit auf Basis einer Verbindung der Formel (1), worin R¹ ein Wasserstoffatom ist und m 0 ist.

9. Polymer auf Basis von konjugiertem Dien nach Anspruch 7, umfassend eine Monomereinheit auf Basis einer Verbindung der Formel (2), worin m 0 ist und b 0 ist.

10. Polymer auf Basis von konjugiertem Dien nach Anspruch 7, umfassend eine Monomereinheit auf Basis einer Verbindung der Formel (1), worin R¹ ein Wasserstoffatom ist, m 0 ist, l 0 ist und n 3 ist.

11. Polymer auf Basis von konjugiertem Dien nach Anspruch 7, umfassend eine Monomereinheit auf Basis einer Verbindung der Formel (2), worin m 0 ist, l 0 ist, n 3 ist, a 0 ist, b 0 ist und c 3 ist.

12. Verfahren zur Herstellung des Polymers auf Basis von konjugiertem Dien nach einem der Ansprüche 1 bis 11, umfassend:
einen Polymerisations- und Verzweigungsschritt, bei dem ein Polymer auf Basis von konjugiertem Dien erhalten wird, das eine Hauptkettenverzweigungsstruktur aufweist, indem mindestens eine konjugierte Dienverbindung mit einer organischen Lithiumverbindung als Polymerisationsinitiator polymerisiert wird und ein Verzweigungsmittel dazu gegeben wird; und
einen Kupplungsschritt, bei dem das Polymer auf Basis von konjugiertem Dien mit einem Kupplungsmittel gekuppelt wird.

13. Zusammensetzung eines Polymers auf Basis von konjugiertem Dien, umfassend 100 Massenteile des Polymers auf Basis von konjugiertem Dien nach einem der Ansprüche 1 bis 11 und 1 bis 60 Massenteile eines Kautschukweichmachers.

14. Kautschukzusammendsetzung, umfassend eine Kautschukkomponente und 5,0 Massenteile oder mehr und 150 Massenteile oder weniger eines Füllstoffs, bezogen auf 100 Massenteile der Kautschukkomponente,
wobei die Kautschukkomponente 10 Massenteile oder mehr des Polymers auf Basis von konjugiertem Dien nach einem der Ansprüche 1 bis 11 oder der Zusammensetzung des Polymers auf Basis von konjugiertem Dien nach Anspruch 13, bezogen auf 100 Massenteile der Gesamtmenge der Kautschukkomponente, enthält.

## Revendications

1. Polymère à base de diène conjugué ayant une viscosité Mooney mesurée à 100 °C tel que décrit dans la description de 40 ou plus et de 170 ou moins, une relaxation de contrainte Mooney mesurée à 100 °C tel que décrit dans la description de 0,28 ou moins, et un nombre de ramifications (Bn) mesuré par une mesure de diffusion de lumière par chromatographie de perméation sur gel équipée d'un viscosimètre tel que décrit dans la description de 8 ou plus.

2. Polymère à base de diène conjugué selon la revendication 1, dans lequel, sur la base d'une hauteur Hi d'un sommet de pic dans une courbe de poids moléculaire absolu mesurée par une mesure de diffusion de lumière par chromatographie de perméation sur gel équipée d'un viscosimètre, tandis que si la courbe de poids moléculaire absolu a une pluralité de sommets de pic, une hauteur d'un sommet de pic ayant un poids moléculaire absolu maximal, un polymère, ayant un poids moléculaire absolu le plus grand parmi au moins deux poids moléculaires absolus à une mi-hauteur de Hi (1/2 Hi) sur la courbe de poids moléculaire absolu, a un nombre de ramifications (Bn) de 12 ou plus.

3. Polymère à base de diène conjugué selon la revendication 1 ou 2, dans lequel le polymère à base de diène conjugué comprend un atome d'azote.

4. Polymère à base de diène conjugué selon l'une quelconque des revendications 1 à 3, dans lequel le polymère à base de diène conjugué a un rapport de modification mesuré par chromatographie de perméation sur gel à adsorption sur colonne de 60 % en masse ou plus.

5. Polymère à base de diène conjugué selon l'une quelconque des revendications 1 à 4, comprenant une portion dérivée d'un monomère à base de vinyle contenant un groupe alcoxysilyle ou un groupe halogénosilyle, et comprenant une structure ramifiée à chaîne principale dans la portion dérivée d'un monomère à base de vinyle contenant un groupe alcoxysilyle ou un groupe halogénosilyle.

6. Polymère à base de diène conjugué selon l'une quelconque des revendications 1 à 5, comprenant une structure polymère en étoile ayant 3 ramifications ou plus, et
comprenant une portion dérivée d'un monomère à base de vinyle contenant un groupe alcoxysilyle ou un groupe halogénosilyle dans au moins une chaîne ramifiée de la structure en étoile, et comprenant en outre une structure ramifiée à chaîne principale dans la portion dérivée d'un monomère à base de vinyle contenant un groupe alcoxysilyle ou un groupe halogénosilyle.

7. Polymère à base de diène conjugué selon la revendication 5 ou 6, dans lequel la portion dérivée d'un monomère à base de vinyle contenant un groupe alcoxysilyle ou un groupe halogénosilyle est un motif monomère basé sur un composé représenté par la formule (1) ou (2) suivante, et
le polymère à base de diène conjugué comprend un point de ramification d'une chaîne polymère contenant le motif monomère basé sur le composé représenté par la formule (1) ou (2) : 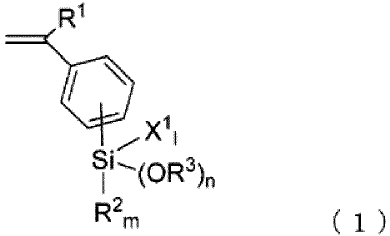 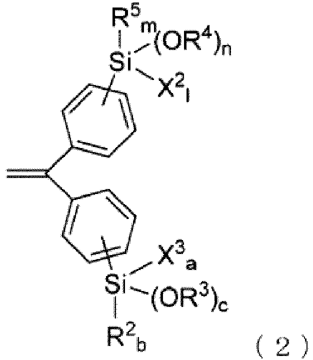
dans lequel dans la formule (1), R¹ représente un atome d'hydrogène, un groupe alkyle ayant 1 à 20 atomes de carbone, ou un groupe aryle ayant 6 à 20 atomes de carbone, et peut avoir une structure ramifiée dans une partie de celui-ci ;
R² et R³ représentent chacun indépendamment un groupe alkyle ayant 1 à 20 atomes de carbone, ou un groupe aryle ayant 6 à 20 atomes de carbone, et peut avoir une structure ramifiée dans une partie de celui-ci ;
chacun de R¹ à R³, s'il est présent en un nombre pluriel, est respectivement indépendant ;
X¹ représente un atome d'halogène indépendant ;
m représente un nombre entier de 0 à 2, n représente un nombre entier de 0 à 3, 1 représente un nombre entier de 0 à 3, et (m + n + 1) vaut 3 ;
dans la formule (2), R² à R⁵ représentent chacun indépendamment un groupe alkyle ayant 1 à 20 atomes de carbone, ou un groupe aryle ayant 6 à 20 atomes de carbone, et peut avoir une structure ramifiée dans une partie de celui-ci, et chacun de R² à R⁵, s'il est présent en un nombre pluriel, est respectivement indépendant ;
X² et X³ représentent un atome d'halogène indépendant ;
m représente un nombre entier de 0 à 2, n représente un nombre entier de 0 à 3, 1 représente un nombre entier de 0 à 3, et (m + n + 1) vaut 3 ; et
a représente un nombre entier de 0 à 2, b représente un nombre entier de 0 à 3, c représente un nombre entier de 0 à 3, et (a + b + c) vaut 3.

8. Polymère à base de diène conjugué selon la revendication 7, comprenant un motif monomère basé sur un composé représenté par la formule (1) dans lequel R¹ est un atome d'hydrogène, et m vaut 0.

9. Polymère à base de diène conjugué selon la revendication 7, comprenant un motif monomère basé sur un composé représenté par la formule (2) dans lequel m vaut 0 et b vaut 0.

10. Polymère à base de diène conjugué selon la revendication 7, comprenant un motif monomère basé sur un composé représenté par la formule (1) dans lequel R¹ est un atome d'hydrogène, m vaut 0, 1 vaut 0, et n vaut 3.

11. Polymère à base de diène conjugué selon la revendication 7, comprenant un motif monomère basé sur un composé représenté par la formule (2) dans lequel m vaut 0, 1 vaut 0, n vaut 3, a vaut 0, b vaut 0, et c vaut 3.

12. Procédé de production pour le polymère à base de diène conjugué selon l'une quelconque des revendications 1 à 11, comprenant :
une étape de polymérisation et de ramification consistant à obtenir un polymère à base de diène conjugué comprenant une structure ramifiée à chaîne principale par polymérisation d'au moins un composé de diène conjugué avec un composé de lithium organique en tant qu'initiateur de polymérisation, et ajout d'un agent de ramification à celui-ci ; et
une étape de couplage consistant à coupler le polymère à base de diène conjugué avec un agent de couplage.

13. Composition de polymère à base de diène conjugué, comprenant 100 parties en masse du polymère à base de diène conjugué selon l'une quelconque des revendications 1 à 11, et 1 à 60 parties en masse d'un plastifiant de caoutchouc.

14. Composition de caoutchouc, comprenant un composant de caoutchouc, et 5,0 parties en masse ou plus et 150 parties en masse ou moins d'une charge sur la base de 100 parties en masse du composant de caoutchouc,
dans laquelle le composant de caoutchouc contient 10 parties en masse ou plus du polymère à base de diène conjugué selon l'une quelconque des revendications 1 à 11 ou de la composition de polymère à base de diène conjugué selon la revendication 13 sur la base de 100 parties en masse d'une quantité totale du composant de caoutchouc.
